(19) Europäisches Patentamt
European Patent Office
Office européen des brevets

(11) EP 3 604 454 B1

(12) EUROPEAN PATENT SPECIFICATION

(45) Date of publication and mention of the grant of the patent:
**07.08.2024 Bulletin 2024/32**

(21) Application number: **18772330.9**

(22) Date of filing: **15.03.2018**

(51) International Patent Classification (IPC):
***C09D 5/02*** (2006.01) ***C09C 3/10*** (2006.01)
***B41J 2/01*** (2006.01) ***C09B 67/08*** (2006.01)
***C09B 67/20*** (2006.01) ***C09B 67/46*** (2006.01)
***C09C 1/00*** (2006.01) ***C09D 11/037*** (2014.01)
***C09D 11/326*** (2014.01) ***C09D 17/00*** (2006.01)
***G03G 9/09*** (2006.01) *C08K 9/08* (2006.01)

(52) Cooperative Patent Classification (CPC):
**C09D 17/001; C09D 5/028; C09D 7/41; C09D 11/037; C09D 11/106; C09D 11/107; C09D 11/326; G03G 9/092; G03G 9/0926;**
C08K 9/08

(86) International application number:
**PCT/JP2018/010121**

(87) International publication number:
**WO 2018/173901 (27.09.2018 Gazette 2018/39)**

# (54) COATED PIGMENT, AQUEOUS PIGMENT DISPERSION, USE THEREOF, AND PRODUCTION METHOD THEREFOR

BESCHICHTETES PIGMENT, WÄSSRIGE PIGMENTDISPERSION, VERWENDUNG DAVON UND HERSTELLUNGSVERFAHREN DAFÜR

PIGMENT REVÊTU, DISPERSION AQUEUSE DE PIGMENT, UTILISATION ASSOCIÉE ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2017 JP 2017058324**
**06.04.2017 JP 2017076025**
**28.08.2017 JP 2017163071**

(43) Date of publication of application:
**05.02.2020 Bulletin 2020/06**

(73) Proprietors:
- **artience Co., Ltd.**
  **Tokyo 104-8377 (JP)**
- **Toyocolor Co., Ltd.**
  **Chuo-ku**
  **Tokyo 104-8381 (JP)**

(72) Inventor: **TSURUTANI, Shinsuke**
**Tokyo 104-8381 (JP)**

(74) Representative: **Becker Kurig & Partner Patentanwälte mbB**
**Bavariastraße 7**
**80336 München (DE)**

(56) References cited:
**JP-A- 2000 319 536**
**JP-A- 2002 201 374**
**JP-A- 2005 036 233**
**JP-A- H0 543 704**
**JP-A- H03 128 907**
**JP-A- H05 230 388**
**JP-A- H08 134 278**
**JP-A- S55 165 961**
**JP-A- S61 145 254**
**JP-A- S62 235 956**
**JP-A- S63 179 972**
**US-A- 6 051 060**
**US-A1- 2002 098 435**
**US-A1- 2005 014 866**
**US-B2- 8 757 786**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 604 454 B1

## Description

BACKGROUND

Technical Field

The present invention relates to a pigment coated with a resin.

Description of Related Art

Pigment compositions using organic pigments have been used for various purposes in the field of paints for vehicles, construction materials, and the like, the field of printing inks, and the like both indoors and outdoors. Among these, fine pigments that contain less coarse particles have been required in fields in which advanced functions are required, such as in the field of paints, the field of inkjet recording, the field of color resists for color filters, the field of toners, and the field of stationery as compared with other purposes of use.

As a method for obtaining a fine organic pigment, salt milling may be exemplified, for example. Salt milling is a process of mechanically kneading a pigment with a water-insoluble synthetic resin, a water-soluble inorganic salt such as dietary salt, and a water-soluble organic solvent using a kneader or the like, and the water-soluble inorganic salt and the water-soluble organic solvent are then removed through washing with water. However, significantly strong aggregation of the pigment occurs in salt milling due to the fine pigment, it is thus difficult to disperse the pigment into primary particles in a subsequent process for obtaining a pigment dispersion, and a dispersion process that requires a significantly large amount of energy has to be performed.

Thus, JP 2004091520 A discloses a coated pigment that is obtained through a coating treatment performed on an organic pigment with an $\alpha$-olefin copolymer having an acid group in order to inhibit aggregation of the organic pigment by performing the coating treatment on the organic pigment with this compound. Also, JP 2007191556 A discloses a coated pigment obtained by coating an organic pigment with a surfactant such as polyoxyethylene styrene phenyl ether.

US 2002/0098435 A1 discloses the use of coated pigment granules in electrophotographic toners and developers, powder coatings and inkjet inks, wherein the coated pigment granules have a particle size of between 0.05 and 5 mm and a wax content of from 1 to 50% by weight, based on the overall weight of the coated pigment granules.

US 2005/0014866 A1 discloses the use of waxes as modifiers for fillers and relates to plastics which comprise a wax-coated filler.

US 6,051,060 A discloses a method of making pigment with increased hydrophilic properties.

JP H05 43704 A discloses a production of colored composition for paints, inks and the like, which is particularly used for applications requiring transparency.

US 8,757,786 B2 discloses an ink set and an image forming method.

JP S55 165961 A discloses a calcium carbonate filler and a production thereof.

JP S63 179972 A discloses a polyolefin-treated pigment and cosmetics containing the same.

SUMMARY

Problems of the Invention

However, according to the coated pigment disclosed in JP 2004091520 A, the amount of coating on the surface of the pigment is small, and it is difficult to prevent coarse particles from being generated since the organic pigment and the $\alpha$-olefin copolymer having an acid group are mixed using a high-speed mixer. Also, according to the coated pigment disclosed in JP 2007191556 A, it is not possible to inhibit coarse particles from being generated even if a coating is applied since the coated pigment is coated with the surfactant.

An object of the invention is to provide a fine coated pigment which is inhibited from becoming coarse particles and is easily dispersible.

Means of Solving the Problems

The invention is set out in the appended set of claims.

Effects of the Invention

According to an aspect of the invention, it is possible to provide a fine coated pigment which is inhibited from

becoming coarse particles and is easily dispersible, a pigment dispersion, and a paint, a toner, an inkjet printing ink, a printing ink, stationeries, and the like using the same.

DESCRIPTION OF EMBODIMENTS

Terms used in the specification will be defined. A monomer is an ethylenic unsaturated group-containing monomer. Also, 1 to 10% by mass means equal to or greater than 1% by mass and equal to or less than 10% by mass, for example.

The coated pigment according to the invention is a pigment, the surface of which is coated with a resin, the resin is an α-olefin copolymer having an acid group, and the amount of the resin with which the coated pigment is coated is equal to or greater than 10 parts by mass and equal to or less than 50 parts by mass per 100 parts by mass of the uncoated pigment (X) (hereinafter, also simply referred to as a "pigment (X)").

In this manner, it is possible to inhibit coarse particles from being generated in a case in which the pigment is refined. Further, it is also possible to produce, in addition to the coated pigment, an aqueous pigment dispersion with a satisfactory dispersion state of the coated pigment and with satisfactory solution stability that contains water and a basic compound.

<α-Olefin copolymer having acid group>

The α-olefin copolymer having an acid group is a copolymer of an α-olefin and an acid group-containing monomer.

(α-Olefin)

The α-olefin is preferably a compound having 5 to 50 carbon atoms that has an ethylenic unsaturated group. Also, the number of carbon atoms in the α-olefin is preferably 10 to 30. If the number of carbon atoms is 5 to 50, the surface of the pigment is more easily coated, and dispersibility of the coated pigment is further improved.

Examples of the α-olefin include 1-hexene, 1-heptene, 1-octene, 1-nonene, 1-decene, 1-dodecene, 1-tetradecene, 1-hexadecene, 1-octadecene, 1-eicosene, 1-docosene, 1-tetracosene, 1-octacosene, 1-triacontane, 1-dotriacontane, 1-tetratriacontane, 1-hexatriacontane, and 1-octatriacontane.

One kind of α-olefin can be used alone, or two or more kinds of α-olefin can be used in combination.

(Acid group-containing monomer)

An acid group-containing monomer is a monomer other than an α-olefin and has an acid group. Examples of ethylenic unsaturated double bond include a vinyl group, an allyl group, and a (meth)acrylic group. Also, examples of the acid group include a carboxyl group, an acid anhydride group, a sulfo group, and a phosphate group. Among these, a carboxyl group and an acid anhydride group are preferably used in consideration of formation of a side chain.

Examples of the acid group-containing monomer include (meth)acrylic acid, (meth)acrylic acid dimer, itaconic acid, maleic acid, maleic anhydride, fumaric acid, crotonic acid, 2-(meth)acryloxyethyl phthalate, 2-(meth)acryloyloxypropyl phthalate, 2-(meth)acryloyloxyethylhexahydro phthalate, 2-(meth)acryloyloxypropylhexahydro phthalate, ethylene oxide-modified succinic acid (meth)acrylate, β-caroboxyethyl (meth)acrylate, and ω-carbpxypolycaprolactone (meth)acrylate. Among these, (meth)acrylic acid, maleic acid, and maleic anhydride are preferably used.

One kind of acid group-containing monomer can be used alone, or two or more kinds of acid group-containing monomer can be used in combination.

(Other monomers)

For synthesis of the α-olefin copolymer having an acid group, other monomers can be used as needed.

Other monomers are monomers other than the α-olefin and the acid group-containing monomer.

Examples of other monomers include: linear or branched alkyl (meth)acrylate such as methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate, isoamyl (meth)acrylate, octyl (meth)acrylate, isooctyl (meth)acrylate, 2-ethylhexyl (meth)acrylate, cetyl (meth)acrylate, decyl (meth)acrylate, isodecyl (meth)acrylate, lauryl (meth)acrylate, tridecyl (meth)acrylate, isomyristyl (meth)acrylate, stearyl (meth)acrylate, and isostearyl (meth)acrylate; cyclic alkyl (meth)acrylate such as cyclohexyl (meth)acrylate, tert-butylcyclohexyl (meth)acrylate, dicyclopentanyl (meth)acrylate, dicyclopentanyloxyethyl (meth)acrylate, dicyclopentenyl (meth)acrylate, dicyclopentenyloxyethyl (meth)acrylate, and isobomyl (meth)acrylate; (meth)acrylate having a heterocycle such as tetrahydrofurfuryl (meth)acrylate and 3-methyl-3-oxetanyl (meth)acrylate; (meth)acrylate having an aromatic ring such as benzyl (meth)acrylate, phenoxyethyl (meth)acrylate, phenoxypolyethylene glycol (meth)acrylate, paracumylphenoxyethyl (meth)acrylate, paracumylphenoxypolyethylene glycol (meth)acrylate, and nonylphenoxypolyethylene glycol (meth)acrylate; fluoroalkyl (meth)acrylate such as trifluoroethyl (meth)acrylate, octafluoropentyl (meth)acrylate, perfluorooctylethyl (meth)acrylate, and tetrafluoropropyl (meth)acrylate; (meth)acryloxy-modified polydimethylsiloxane (silicone macromonomer); (poly)alkylene glycol monoalkyl ether (meth)acrylate such as 2-methoxyethyl (meth)acrylate, 2-ethoxyethyl (meth)acrylate, 3-methoxybutyl (meth)acrylate, 2-methoxypropyl (meth)acrylate, diethylene glycol monomethyl ether (meth)acrylate, diethylene glycol monoethyl ether (meth)acrylate, triethylene glycol monomethyl ether (meth)acrylate, triethylene glycol monoethyl ether (meth)acrylate, diethylene glycol mono-2-ethylhexyl ether (meth)acrylate, dipropylene glycol monomethyl ether (meth)acrylate, tripropylene glycol mono(meth)acrylate, polyethylene glycol monolauryl ether (meth)acrylate, and polyethylene glycol monostearyl ether (meth)acrylate; N-substituted (meth)acrylamide such as (meth)acrylamide, dimethyl (meth)acrylamide, N,N-diethyl (meth)acrylamide, N-isopropyl (meth)acrylamide, diacetone (meth)acrylamide, and acryloylmorphorine; styrene such as styrene and α-methylstyrene; nitrile such as (meth)acrylonitrile; styrene such as styrene or α-methylstyrene; vinyl ether such as ethyl vinyl ether, n-propyl vinyl ether, isopropyl vinyl ether, n-butyl vinyl ether, and isobutyl vinyl ether; fatty acid vinyl such as vinyl acetate and vinyl propionate; hydroxyl group-containing substances such as a (meth)acrylate-based monomer having a hydroxyl group, for example, hydroxyalkyl (meth)acrylate such as 2-hydroxyethyl (meth)acrylate, 2 (or 3)-hydroxypropyl (meth)acrylate, 2 (or 3 or 4)-hydroxybutyl (meth)acrylate, and cyclohexanedimethanol mono(meth)acrylate, or a (meth)acrylamide-based monomer having a hydroxyl group, for example, N-(hydroxyalkyl) (meth)acrylamide such as N-(2-hydroxyethyl) (meth)acrylamide, N-(2-hydroxypropyl) (meth)acrylamide, and N-(2-hydroxybutyl) (meth)acrylamide, or a vinyl ether-based monomer having a hydroxyl group, for example, hydroxyalkylvinylether such as 2-hydroxyethylvinylether, 2- (or 3-)hydroxypropylvinylether, and 2- (or 3- or 4-)hydroxybutylvinylether, or an allylether-based monomer having a hydroxyl group, for example, hydroxyalkylallylether such as 2-hydroxyethylallylether, 2- (or 3-)hydroxypropylallylether, and 2- (or 3- or 4-)hydroxybutylallylether, or further an ethylenic unsaturated monomer obtained by adding alkylene oxide and/or lactone to hydroxyalkyl (meth)acrylate, N-(hydroxyalkyl) (meth)acrylamide, or hydroxyalkylvinylether, or hydroxyalkylallylether described above; sulfonic acid-containing substances such as a vinyl sulfonic acid, acrylonitrile t-butyl sulfonic acid, an ethylenic unsaturated double bond-containing compound having a betaine structure; (meth)acrylates having a tertiary amino group such as N,N-dimethylaminoethyl (meth)acrylate, N,N-diethylaminoethyl (meth)acrylate, N,N-dimethylaminopropyl (meth)acrylate, and N,N-diethylaminopropyl (meth)acrylate; and (meth)acrylamide having a tertiary amino group such as N,N-imethylaminoethyl (meth)acrylamide, N,N-diethylaminoethyl (meth)acrylamide, N,N-dimethylaminopropyl (meth)acrylamide, and N,N-diethylaminopropyl (meth)acrylamide.

One kind of other monomers can be used alone, or two or more kinds of other monomers can be used in combination.

(Synthesis of α-olefin copolymer having acid group)

The α-olefin copolymer having an acid group is synthesized by causing radical polymerization between the α-olefin and the acid group-containing monomer. The radical polymerization can be arbitrarily selected from solution polymerization, emulsification polymerization, suspension polymerization, bulk polymerization, and the like, and solution polymerization and bulk polymerization are preferably employed.

In a synthesis method based on solution polymerization, polymerization is caused using, for example, the α-olefin, the acid group-containing monomer, a polymerization initiator, an organic solvent, and if needed, a chain-transfer agent. The bulk polymerization is achieved if no organic solvent is used in the aforementioned reaction.

In this specification, it is easy to form an alternating polymer of an α-olefin unit and a maleic anhydride unit if maleic anhydride is used as the acid group-containing monomer. Also, an α-olefin unit, (meth)acrylic acid, and a random copolymer are easily formed if (meth)acrylic acid is used for the product of the aforementioned reaction. In addition, a commercially available resin can also be used. Examples thereof include DIACARNA M30 (manufactured by Mitsubishi Chemical Corporation) and CERAMER SERIES (manufactured by Baker Petrolite Corporation). Further, these resins can be arbitrarily modified.

In the synthesis, a molar ratio between α-olefin (O) and the acid group-containing monomer (M) preferably satisfies O/M = 30/70 to 99/1, is more preferably 40/60 to 95/5, and is further preferably 45/55 to 80/20. If appropriate amounts of α-olefin (O) and the acid group-containing monomer (M) are used, dispersion stability of the coated pigment is further improved.

The polymerization initiator is preferably an azo-based compound or a peroxide. Examples of the azo-based compound include azobisisobutyronitrile, and azobis 2,4-dimethylvaleronitrile. Also, examples of the peroxide include a cumenhydro peroxide, t-butylhydro peroxide, benzoyl peroxide, diisopropyl peroxide carbonate, di t-butyl peroxide, lauroyl peroxide, t-butyl peroxybenzoate, and t-butylperoxy-2-ethylhexanoate.

The acid value of the α-olefin copolymer having an acid group is preferably 5 to 300 mgKOH/g, is more preferably 20 to 200 mgKOH/g, and is further preferably 30 to 160 mgKOH/g. The acid value is particularly preferably 50 to 160

mgKOH/g. If the acid value is adjusted to an appropriate range, dispersibility of the coated pigment is further improved.

The weight average molecular weight of the α-olefin copolymer having an acid group is preferably 1,000 to 50,000 and is more preferably 1,000 to 35,000. Also, the number average molecular weight of the α-olefin copolymer having an acid group is preferably 1,000 to 10,000, is more preferably 2,000 to 5,000, and is further preferably 2,000 to 3,000. If the molecular weight is adjusted to an appropriate range, dispersibility is further improved. Also, it is easy to adjust a viscosity of the aqueous pigment dispersion to an appropriate range.

The melting point of the α-olefin copolymer having an acid group is preferably equal to or less than 100°C, is more preferably equal to or less than 90°C, and is further preferably equal to or less than 80°C. It is possible to further inhibit coarse particles from being generated by producing the aqueous pigment dispersion at a temperature that is close to the aforementioned melting point of the copolymer.

(α-Olefin copolymer having side chain and acid group)

In the specification, dispersibility of the coated pigment is further improved, and coarse particles are further inhibited from being generated by using an α-olefin copolymer having a side chain and an acid group. Also, dispersion stability of the aqueous pigment dispersion is further improved.

The side chain can be formed by causing a compound having a functional group that can react (hereinafter, referred to as a reactive functional group) with the aforementioned acid group, for example. In such a case, the acid group is preferably an acid anhydride group or a carboxyl group, and an acid anhydride group is more preferably used. If an acid anhydride group is used, an unreacted carboxyl group that does not contribute to formation of a side chain contributes to an improvement in hydrophilicity of the coated pigment. Examples of the reactive functional group include a hydroxyl group and an amino group.

In addition, it is possible to form a side chain by copolymerizing another monomer when the α-olefin copolymer having an acid group is synthesized, for example, according to another method for forming a side chain. Also, it is needless to say that the formation of a side chain is not limited to these methods. The side chain may have a structure generated between the acid group and another compound and be a structure derived from another monomer.

The acid value and the weight average molecular weight of the α-olefin copolymer having a side chain and an acid group are similar to the numerical values stated above.

Examples of a partial structure of the side chain of the α-olefin copolymer having the side chain and the acid group include structures represented by Formulae (1) to (5). The structures represented by Formulae (2) and (5) are not according to the present invention. Also, a monovalent bonding hand in the following structures is bonded to -C(O)- in the acid group in the α-olefin copolymer. The side chain is formed by a known reaction method.

Structure represented by Formula (1)

[Chem. 1] $R_1$-O-

[In Formula (1), $R_1$ represents a $C_3$ to $C_8$ alkyl group that may be substituted, a alicyclic structure that may be substituted, or a phenyl group that may be substituted.]

The structure represented by Formula (1) can be formed through a reaction between an acid group and a hydroxyl group-containing compound, for example. Also, the structure represented by Formula (1) preferably has a branched chain. Examples of the hydroxyl group-containing compound include alkyl alcohol. Examples of alkyl alcohols include n-propyl alcohol, isopropyl alcohol, n-butyl alcohol, isobutyl alcohol, tert-butyl alcohol, 2-ethylhexyl alcohol, α-oxybutyric acid, lactic acid, cyclohexyl alcohol, and benzyl alcohol. The number of carbon atoms in the alkyl alcohol is 3 to 8 and is more preferably 3, and isopropyl alcohol is further preferably used.

Structure represented by Formula (2) (not according to the present invention)

[Chem. 2]

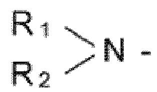

[In Formula (2), $R_1$ and $R_2$ each independently represent a hydrogen atom, a $C_1$ to $C_{30}$ alkyl group that may be substituted, an alicyclic structure that may be substituted, or a phenyl group that may be substituted. However, in a case in which one of $R_1$ and $R_2$ is a hydrogen atom, the other is not a hydrogen atom.]

The structure represented by Formula (1) can be formed through a reaction between an acid group and an amino group-containing compound, for example. The amino group-containing compound is a compound having one amino group, and examples thereof include methylamine, ethylamine, propylamine, isopropylamine, butylamine,

amylamine, hexylamine, cyclohexylamine, heptylamine, octylamine, nonylamine, decylamine, laurylamine, myristylamine, cetylamine, stearylamine, oleylamine, aniline, o-toluidine, 2-ethylaniline, 2-fluoroaniline, o-anisidine, m-toluidine, m-anisidine, m-phenetidine, p-toluidine, 2,3-dimethylaniline, 5-aminoindane, an asparatic acid, a glutamic acid, and a $\gamma$-aminobutyric acid.

Structure represented by Formula (3)

[Chem. 3]

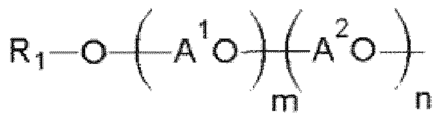

[In Formula (3), $R_1$ represents a hydrogen atom, an alkyl group having 1 to 20 carbon atoms, or a phenyl group that may be substituted with an alkyl group having 1 to 9 carbon atoms, $A^1O$ and $A^2O$ each independently represent an alkyleneoxy group having 1 to 6 carbon atoms, m and n represent average numbers of moles of the alkyleneoxy groups added and are integers of 0 to 100, and m+n is equal to or greater than 1.]

Structure represented by Formula (4)

[Chem. 4]

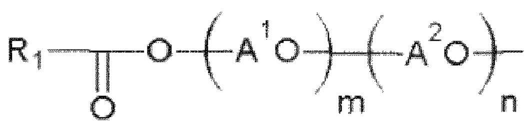

[In Formula (4), $R_1$ represents a hydrogen atom, an alkyl group having 1 to 20 carbon atoms, or a phenyl group that may be substituted with an alkyl group having 1 to 9 carbon atoms, $A^1O$ and $A^2O$ each independently represent an alkyleneoxy group having 1 to 6 carbon atoms, m and n represent average numbers of moles of the alkyleneoxy groups added and are integers of 0 to 100, and m+n is equal to or greater than 1.]

In Formulae (3) and (4) described above, $R_1$ represents a hydrogen atom, an alkyl group having 1 to 20 carbon atoms, or a phenyl group that may be substituted with an alkyl group having 1 to 9 carbon atoms. The number of carbon atoms in the alkyl group is preferably equal to or greater than 1 and equal to or less than 12, and a methyl group is more preferably used. As the number of carbon atoms in $R_1$ decreases, affinity with water increases, and it becomes more difficult to form coarse particles when an aqueous pigment dispersion is produced using the coated pigment.

In addition, $A^1O$ and $A^2O$ preferably represent an alkyleneoxy group having 1 to 6 carbon atoms. The alkyleneoxy group represented by $A^1O$ and $A^2O$ alleviates aggregation of a pigment when the coated pigment is produced and thus tends to reduce the number of coarse particles when the aqueous pigment dispersion is obtained. As the number of carbon atoms in $A^1O$ and $A^2O$ decreases, the affinity with water increases, and it becomes easier to reduce the number of coarse particles similarly to $R_1$. Also, since $A^1O$ and $A^2O$ act as a steric hindrance group, dispersion stability of the coated pigment is improved. $A^1O$ and $A^2O$ are preferably an ethyleneoxy group or a propyleneoxy group in terms of high affinity with water and easiness in balancing between reduction in number of coarse particles and stability of aqueous dispersion when the aqueous pigment dispersion is obtained.

In Formulae (3) and (4) described above, m+n is equal to or greater than 1 and equal to or less than 100. m+n is preferably equal to or greater than 4 and is more preferably equal to or greater than 9. Also, the upper limit of m+n is preferably equal to or less than 30. If m+n is adjusted to an appropriate range, dispersion stability is improved.

The structure represented by Formula (3) can be formed through a reaction between an acid group and an alkyleneoxy group-containing compound, for example.

Examples of the alkyleneoxy group-containing compound include: polyalkylene glycols such as polyethylene glycol and polypropylene glycol; and polyoxyalkylene alkyl ethers such as polyoxyethylene monomethyl ether, polyoxypropylene monomethyl ether, polyoxyethylene-2-ethyl hexyl ether, and polyoxyethylene isodecyl ether. Among these,

polyoxyethylene monomethyl ether is preferably used. Examples of commercially available alkyleneoxy group-containing compounds include UNIOX M-400, UNIOX M-550, and UNIOX M-1000 (all of which are manufactured by NOF Corporation).

The structure represented by Formula (4) can be formed through a reaction between an acid group and a polyalkylenediol monoester, for example.

Examples of polyalkylenediol monoesters include polyoxyethylene monolaurylate, polyoxyethylene monostearate, and polyoxyethylene monooleate. Among these, polyoxyethylene monolaurate is preferably used. Examples of commercially available polyalkylenediol monoesters include NONION L-2, NONION L-4, NONION S-4, and NONION O-4 (all of which are manufactured by NOF Corporation).

Structure represented by Formula (5) (not according to the present invention)

[Chem. 5]

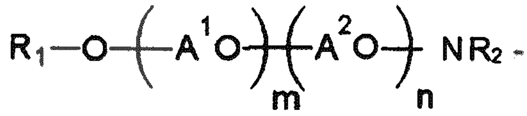

[In Formula (5), $R_1$ represents a hydrogen atom, an alkyl group having 1 to 20 carbon atoms, a alicyclic structure that may be substituted, or a phenyl group that may be substituted with an alkyl group having 1 to 9 carbon atoms, $R_2$ represents a hydrogen atom, a $C_1$ to $C_{30}$ alkyl group, a alicyclic structure that may be substituted, a phenyl group that may be substituted, (poly)alkylene oxide, monoalkyl ether of (poly)alkylene oxide, or monoalkyl ester of (poly)alkylene oxide, $A^IO$ and $A^2O$ each independently represent an alkyleneoxy group having 1 to 6 carbon atoms, m and n represent average numbers of moles of the alkyleneoxy groups added and are integers of 0 to 100, and m+n is equal to or greater than 1.]

In Formula (5) described above, $R_1$ represents a hydrogen atom, an alkyl group having 1 to 20 carbon atoms, an alicyclic structure that may be substituted, or a phenyl group that may be substituted with an alkyl group having 1 to 9 carbon atoms. The alkyl group is preferably an alkyl group in which the number of carbon atoms is equal to or greater than 1 and equal to or less than 12, and a methyl group is more preferably used. As the number of carbon atoms in $R_1$ decreases, affinity with water increases when the aqueous pigment dispersion is obtained, and it becomes easier to reduce the number of coarse particles. Also, $A^1O$ and $A^2O$ are preferably an alkyleneoxy group having 1 to 6 carbon atoms. The alkyleneoxy groups represented by $A^1O$ and $A^2O$ alleviate aggregation of the pigment when the pigment is produced, and it becomes easier to reduce the number of coarse particles when the aqueous pigment dispersion is obtained. As for the number of carbon atoms of $A^1O$ and $A^2O$, affinity with water is enhanced, and coarse particles are more easily reduced in number as the numbers of carbon atoms are smaller similarly to $R_1$. In addition, the alkyleneoxy group spreads in ink, acts as a steric hindrance group, and contributes to pigment dispersion stability in an ink, a toner production process, and a paint using the aqueous pigment dispersion. In particular, an ethyleneoxy group and a propyleneoxy group are preferably used. With such a substance, high affinity with water is achieved, and both reduction in number of coarse particles and stability of an aqueous dispersion are easily balanced when the aqueous pigment dispersion is obtained.

$R_2$ represents a hydrogen atom, a $C_1$ to $C_{30}$ alkyl group, an alicyclic structure that may be substituted, a phenyl group that may be substituted, (poly)alkylene oxide, monoalkyl ether of (poly)alkylene oxide, and alkyl ester of (poly)alkylene oxide. $R_2$ is preferably a hydrogen atom, (poly)alkylene oxide, monoalkyl ether of (poly)alkylene oxide, and monoalkyl ester of (poly)alkylene oxide. $R_2$ is more preferably a hydrogen atom.

The structure represented by Formula (5) can be formed through a reaction between an acid group and polyalkylenediol monoamino ether, for example. Examples of polyalkylenediol monoamine ether include polyoxyethylene monomethyl ether amine, polyoxypropylene monomethyl ether amine, monomethyl ether amine of a polyoxyethylene/polyoxypropylene copolymer. Examples of commercially available polyalkylenediol monoamine ether include M-600, M-1000, M-2005, and M-2070 from JEFFAMINE M Series (manufactured by HUNTSMAN).

One kind of side chain can be used alone, or two or more kinds of side chains can be used in combination.

The coated pigment in the specification can further contain, in addition to the $\alpha$-olefin copolymer having an acid group, one or more kinds selected from a group consisting of a styrene-(meth)acrylic resin, a styrene-maleic (anhydride) resin, and a (meth)acrylic resin.

These resins are known resins, and examples of commercially available resins include Joncryl Series (manufactured by BASF), representative examples of which include Joncryl 690 and 67 that are styrene (meth)acrylic resins,

X-1 (manufactured by Seiko PMC Corporation), SMA resin series (manufactured by Cray Valley), representative examples of which include SMA 1440, SMA 2625, and SMA 3840 that are styrene maleic (anhydride) resin, and VS-1057, X-310, TS-1316, and the like (manufactured by Seiko PMC Corporation) that are (meth)acrylic resins.

(Uncoated pigment (X))

The uncoated pigment (X) is an inorganic pigment or an organic pigment that can be used as a coloring agent. Since the uncoated pigment (X) means a pigment that has not been coated with an α-olefin copolymer having an acid group and another resin, this does not prevent pre-processing using other compounds.

The inorganic pigment is preferably a metal compound such as a metal oxide or a metal complex salt. Examples of the metal oxide include metal oxides such as those of iron, cobalt, aluminum, cadmium, lead, copper, titanium, magnesium, chromium, zinc, and antimony and composite oxides thereof.

Examples of the organic pigment include dye lake pigment, an azo pigment, a phthalocyanine pigment, a polycyclic pigment, and other pigments.

Examples thereof include C.I. Pigment Red 1, 2, 3, 4, 5, 6, 7, 9, 10, 14, 17, 22, 23, 31, 32, 38, 41, 48:1, 48:2, 48:3, 48:4, 49, 49:1, 49:2, 52:1, 52:2, 53:1, 57:1, 60: 1, 63:1, 66, 67, 81:1, 81:2, 81:3, 83, 88, 90, 105, 112, 119, 122, 123, 144, 146, 147, 148, 149, 150, 155, 166, 168, 169, 170, 171, 172, 175, 176, 177, 178, 179, 184, 185, 187, 188, 190, 200, 202, 206, 207, 208, 209, 210, 216, 220, 224, 226, 242, 246, 254, 255, 264, 266, 269, 270, 272, and 279, C.I. Pigment Yellow 1, 2, 3, 4, 5, 6, 10, 11, 12, 13, 14, 15, 16, 17, 18, 20, 24, 31, 32, 34, 35, 35:1, 36, 36:1, 37, 37:1, 40, 42, 43, 53, 55, 60, 61, 62, 63, 65, 73, 74, 77, 81, 83, 86, 93, 94, 95, 97, 98, 100, 101, 104, 106, 108, 109, 110, 113, 114, 115, 116, 117, 118, 119, 120, 123, 125, 126, 127, 128, 129, 137, 138, 139, 147, 148, 150, 151, 152, 153, 154, 155, 156, 161, 162, 164, 166, 167, 168, 169, 170, 171, 172, 173, 174, 175, 176, 177, 179, 180, 181, 182, 185, 187, 188, 193, 194, 199, 213, 214, and 231, C.I. Pigment Orange 2, 5, 13, 16, 17:1, 31, 34, 36, 38, 43, 46, 48, 49, 51, 52, 55, 59, 60, 61, 62, 64, 71, and 73, C.I. Pigment Green 7, 10, 36, 37, 58, 62, and 63, C.I. Pigment Blue 1, 2, 15, 15:1, 15:2, 15:3, 15:4, 15:6, 16, 22, 60, 64, 66, 79, and 80, C.I. Pigment Violet 1, 19, 23, 27, 32, 37, and 42, C.I. Pigment Brown 25 and 28, and C.I. Pigment Black 1 and 7.

(Coated pigment)

The coated pigment in the specification is obtained by coating the surface of the uncoated pigment (X) with the α-olefin copolymer having an acid group that is a resin. The amount of resin with which the coated pigment has been coated is preferably equal to or greater than 10 parts by mass and equal to or less than 50 parts by mass and is more preferably equal to or greater than 10 parts by mass and equal to or less than 40 parts by mass with respect to 100 parts by mass of the uncoated pigment (X). The uncoated pigment (X) may be coated with an appropriate amount of resin, and any area may be coated as long as the area is within such a range in which the problems can be solved. In addition, the entire surface of the uncoated pigment (X) is preferably coated in the specification.

Since the coated pigment has been coated with a predetermined amount of resin, it is difficult for coarse particles of aggregated pigment to be generated in the following process that is a process of dispersing the aqueous pigment dispersion, and it is thus possible to easily disperse the pigment.

(Measurement of amount of resin with which coated pigment has been coated)

A method for measuring the amount of resin with which the coated pigment has been coated will be described. For example, the coated pigment is added to 100 g of deionized water such that the concentration of the pigment (X) is 15% by mass, and an equivalent amount of potassium hydroxide with respect to the acid value of the resin processed when the pigment is produced is added and dissolved therein. The temperature of the solution is adjusted to 70°C and is stirred for 2 hours, thereby producing a pigment dispersion. Next, the pigment is caused to settle in the pigment dispersion using a centrifugal separator at 7,000 rpm for 20 hours, a supernatant is completely collected, and the pigment is further caused to settle using the centrifugal separator at 70,000 rpm for 20 hours. Then, the supernatant of the solution is completely collected, the residual is then dried at 150°C for 20 minutes, and an amount of non-volatile components is calculated. The mass of the resin released from the coated pigment is obtained from the numerical value, and the mass of the resin with which the pigment has been coated is calculated from the mass of the resin that is used when the coated pigment is manufactured. In this manner, the amount of resin with which the uncoated pigment is coated per 100 parts by mass of the uncoated pigment (X) is calculated. A similar calculation is also performed when a resin other than an α-olefin copolymer having an acid group is used in combination.

The coated pigment in the specification can be used as a coloring agent for various purposes of use, and for example, the coated pigment can be suitably used in an inkjet ink, an electrostatic image developing toner, a paint, a printing ink, and stationery. Since the coated pigment has appropriate hydrophilicity due to presence of the acid group,

water resistance of a printed product does not readily deteriorate when the coated pigment is used for an inkjet application, for example. However, a phenomenon in which water resistance of the printed product is degraded is observed in an inkjet application in a case in which the hydrophilicity is excessively enhanced.

(Method for producing coated pigment and aqueous pigment dispersion)

According to a method for producing the coated pigment in the specification, the water-soluble organic solvent, the water-soluble inorganic salt, the uncoated pigment (X), and the α-olefin copolymer having an acid group are mixed using a kneading machine, the uncoated pigment (X) is coated with the α-olefin copolymer having an acid group such that there is equal to or greater than 10 parts by mass and equal to or less than 50 parts by mass of the α-olefin copolymer having an acid group per 100 parts by mass of the uncoated pigment (X), and the water-soluble inorganic salt and the water-soluble organic solvent are then removed.

Also, the following processes are successively performed in a method for producing the aqueous pigment dispersion from the production of the coated pigment.

Process 1: A process in which a mixture containing the α-olefin copolymer having an acid group, the uncoated pigment (X), the water-soluble inorganic salt, and the water-soluble organic solvent is kneaded, and the uncoated pigment (X) is coated with the α-olefin copolymer having an acid group such that the amount of α-olefin copolymer having an acid group is equal to or greater than 10 parts by mass and equal to or less than 50 parts by mass per 100 parts by mass of the uncoated pigment (X)

Process 2: A process in which the water-soluble inorganic salt and the water-soluble organic solvent are removed

Process 3: A process in which a basic compound is added to neutralize the acid group

Process 4: A process in which a crosslinking agent is added to cause a reaction between the acid group and the crosslinking agent

Preferably, the uncoated pigment (X) (hereinafter, referred to as a pigment (X)), the water-soluble inorganic salt, the water-soluble organic solvent, and the resin are added and are subjected to friction-grinding and kneading, and the surface of the pigment (X) is coated with the resin in the method for producing the coated pigment As the production method, a kneading process based on salt milling processing or the like is preferably performed, for example. Specifically, the aforementioned processes 1 and 2 are performed.

(Process 1)

As a kneading method, a mixture containing at least the pigment (X), the water-soluble inorganic salt, the water-soluble organic solvent, and the resin is mixed (kneaded) using a kneading machine.

Examples of the kneading machine include a kneader, a trimix, a two-roll mill, a three-roll mill, a ball mill, an attritor, a transverse sand mill, a longitudinal sand mill, and an annular bead mill. Among these, a kneader and a trimix are preferably used.

If the aforementioned kneading machine is used, it is possible to knead a kneaded substance with high viscosity, and coating of the pigment (X) and the cracking and dispersion of coarse particles of the pigment (X) progresses efficiently.

Kneading conditions can be appropriately adjusted in accordance with the type of pigment (X), the amount of the resin with which the pigment is coated, and the like. Heating is preferably performed during the kneading. The heating temperature is preferably set to be equal to or greater than the melting point of the resin. In this manner, it is possible to more efficiently coat the pigment (X). Also, the upper limit temperature for the heating can be arbitrarily set as long as thermal decomposition of the resin does not occur at the temperature.

The water-soluble inorganic salt contributes to dispersion of the aggregated pigment (X) before the process and further friction-grinds the pigment (X). In the salt milling processing (process 1), the pigment (X) is ground using the hardness of the water-soluble inorganic salt. The coated pigment obtains a small average primary particle diameter through the salt milling processing. In addition, the width of the average primary particle diameter distribution of the coated pigment is then narrow, and a sharp particle size distribution can be easily obtained.

(Water-soluble inorganic salt)

Examples of the water-soluble inorganic salt include sodium chloride, barium chloride, potassium chloride, and sodium sulfate. Among these, sodium chloride that is inexpensive is preferably used. The amount of the water-soluble inorganic salt used is preferably about 50 to 2,000 parts by mass and is more preferably 300 to 1,000 parts by mass with respect to 100 parts by mass of the pigment (X). If an appropriate amount of water-soluble inorganic salt is used, preferable coating efficiency of the pigment (X) and manufacturing efficiency of the coated pigment are achieved.

(Water-soluble organic solvent)

The water-soluble organic solvent is preferably a solvent that dissolves in or is miscible with water. Examples of the water-soluble organic solvent include glycerin, ethylene glycol, propanediol, butanediol, pentanediol, hexanediol, diethylene glycol, dipropylene glycol, polyethylene glycol, diethylene glycol monomethyl ether, diethylene glycol monoethyl ether, diethylene glycol monopropyl ether, diethylene glycol monobutyl ether, dipropylene glycol monomethyl ether, 2-ethyl-1,3-hexanediol, 2,4-diethyl-1,5-pentanediol, monoacetin, diacetin, triacetin, tripropionin, tributyrin, and 2-butyl-2-ethyl-1,3-propanediol. The amount of water-soluble organic solvent used is preferably 5 to 1,000 parts by mass and is more preferably 50 to 500 parts by mass with respect to 100 parts by mass of the pigment (X).

(Process 2)

In the process 2, the mixture is extracted from the kneader, water is poured thereon, and the mixture is stirred, thereby obtaining a suspension including the coated pigment. Any amount of water is used as long as the amount is sufficient to obtain a suspension. In regard to water, water of a mass that is 10 to 10,000 times the total mass of water used in the process (1) is added, for example, and the mixture is then mixed and stirred. Heating can be performed as needed when water is added. The heating is preferably performed at a temperature of 25 to 90°C, for example. The solution is filtered after mixing and the stirring, and the filtrate is removed, thereby removing the water-soluble organic solvent and the water-soluble inorganic salt. In this manner, the coated pigment can be obtained. In addition, water in which ions derived from inorganic substances are eliminated such as distilled water, deionized water, or purified water is preferably used as the water.

Since the coated pigment obtained in the aforementioned process 2 contains water, it is possible to perform a process of further removing water. Examples of the aforementioned process include drying processing. As drying conditions, a method of performing drying at an ordinary pressure and at a temperature of 80 to 120° may be employed. Alternatively, a method of performing drying at a reduced pressure and at a temperature of 25 to 80°C may be employed. Examples of a drying processing device include a spray-drying device and a freeze-drying device. Grinding processing can be performed at the same time with or after the drying processing.

(Aqueous pigment dispersion)

In the specification, the aqueous pigment dispersion preferably contains the coated pigment, water, and a basic compound. The aqueous pigment dispersion is produced by neutralizing the acid group in the resin with the basic compound as described in the aforementioned process 3, for example.

The aqueous pigment dispersion is obtained by adding the basic compound to water such that the amount of the basic compound is appropriate for the acid group in the resin, and the basic compound is caused to be dissolved in water, for example. Then, the coated pigment is added thereto, and the mixture is stirred while the temperature is raised, thereby producing the aqueous pigment dispersion.

The amount of basic compound added is preferably about 50 to 120% of the mass required for neutralization with respect to the acid value of the resin, for example. The stirring is performed using, for example, a dispersing machine provided with an ultrasonic oscillator such as a high-speed mixer, a homogenizer, a planetary mixer, a trimix, a kneader, an extruder, a transverse sand mill, a longitudinal sand mill and/or an annular bead mill, a paint shaker, or a ball mill, a two-roll mill, a three-roll mill, or the like.

(Basic compound)

The basic compound is preferably an inorganic base or an organic base that is soluble in water. Examples of the inorganic base include potassium hydroxide, sodium hydroxide, sodium bicarbonate, and sodium carbonate. Preferable examples of the organic base include primary to tertiary amines. Examples of the organic base include: alkylamine such as ammonia, methylamine, dimethylamine, trimethylamine, ethylamine, diethylamine, and triethylamine; alkanolamine such as aminoethanol, methylaminoethanol, dimethylaminoethanol, ethylaminoethanol, diethylaminoethanol, diethanolamine, and triethanolamine; and amine that has a nonionic group such as methoxypoly(oxyethylene/oxypropylene)-2-propylamine.

In addition, the aqueous pigment dispersion in the specification can further contain a crosslinking agent. The aforementioned process 4 can be performed after the aforementioned process 3 in the manufacturing processes. In this manner, the acid group is crosslinked, and the coated pigment is more firmly coated. In this manner, storage stability and the pigment dispersion stability of the aqueous pigment dispersion are further improved. The inventors assumed that a reason for this was that the surface of the coated pigment is bonded in the form of a network, and an accumulated body of the coated pigment is formed through the crosslinking of the resin with which the pigment is coated. The inventors

assumed that since some change occurs in the dispersion medium (water or a mixed solvent containing water) in which the coated pigment is dispersed in this manner, the resin becomes unlikely to dissolve in the dispersion medium, and storage stability and the pigment dispersion stability are thus obtained in a case in which the dissolution equilibrium of the resin with which the pigment changes. According to another consideration, the inventors assume that the crosslinking introduces a steric hindrance portion to the resin with which the pigment has been coated, and the steric hindrance portion contributes to storage stability and pigment dispersion stability.

In the process 4, the crosslinking agent is further added and stirred after the process 3, thereby causing a reaction between the acid group and the crosslinking agent. A stirring device can be appropriately selected from known devices in addition to the devices exemplified above. Heating can be performed during the stirring. Also, a pH of the solution can be adjusted by adding an acid as needed after the crosslinking reaction ends. Examples of the acid include inorganic acids such as phosphoric acid, hydrochloric acid, sulfuric acid, and nitric acid and organic acids such as citric acid. Centrifugal processing and filtration processing can be appropriately performed after the crosslinking ends.

(Crosslinking agent)

The crosslinking agent is a compound that has two or more functional groups that can react with an acid group. The acid group is preferably a carboxyl group in consideration of crosslinking. Preferable examples of the crosslinking agent are one or more selected from a group consisting of isocyanate, aziridine, carbodiimide, oxetane, oxazoline, and epoxy, and epoxy is more preferably used. If epoxy is used, dispersion stability of the aqueous pigment dispersion after the crosslinking and an ink using the dispersion are easily obtained. The amount of crosslinking agent mixed in is preferably an amount with which 1 to 100% reaction can be caused and is more preferably an amount with which 1 to 90% reaction can be caused with the acid group in the coated pigment. If an appropriate amount of crosslinking agent is used, a sufficient crosslinking effect can be easily obtained. The molecular weight (formula weight) of the crosslinking agent is preferably 100 to 2,000, is more preferably 120 to 1,500, and is further preferably 150 to 1,000. The number of functional groups in the crosslinking agent is about 2 to 6 in terms of reaction efficiency.

Examples of isocyanate include aliphatic diisocyanate such as hexamethylene diisocyanate, and 2,2,4-trimethylhexamethylene diisocyanate, aromatic diisocyanate such as tolylene-2,4-diisocyanate and phenylene diisocyanate; alicyclic diisocyanate; aromatic triisocyanate; and modified products thereof such as urethane-modified products. An isocyanate group terminal prepolymer can be synthesized through a reaction between polyisocyanate or a urethane modified product thereof and molecular weight polyol or the like.

It is only necessary for the aziridine to have an aziridine group, and examples thereof include N,N'-diphenylmethane-4,4'-bis(1-aziridinecarboxylate), N,N'-toluene-2,4-bis(1-aziridinecarboxylate), bisisobutanoyl-1-(2-methylaziridine), tri-1 -aziridinylphosphine oxide, N,N'-hexamethylene-1,6-bis(1-aziridinecarboxylate), 2,2'-bishydroxymethylbutanol-tris[3-(1-aziridinyl)propionate], trimethylolpropanetri-β-aziridinylpropionate, tetramethylolmethanetri-β-aziridinylpropionate, tris-2,4,6-(1-aziridinyl)-1,3,5-triazine, and 4,4'-bis(ethyleneiminocarbonylamino)diphenylmethane.

It is only necessary for carbodiimide to have a carbodiimide group, and examples thereof include high-molecular-weight polycarbodiimide generated through a decarboxylation condensation reaction of a diisocyanate compound in the presence of a carbodiimidization catalyst. Examples of such high-molecular-weight polycarbodiimides include the CARBODILITE Series from Nisshinbo Holdings Inc.

It is only necessary for the oxetane to have an oxetane group, and examples thereof include 4,4'-(3-ethyloxetane-3-ylmethyloxymethyl)biphenyl (OXBP), 3-ethyl-3-hydroxymethyloxetane (EHO), 1,4-bis[{(3-ethyl-3-oxetanyl)methoxy}methyl]benzene (XDO), di[1-ethyl(3-oxetanyl)]methylether (DOE), 1,6-bis[(3-ethyl-3-oxetanyl)methoxy]hexane (HDB), 9,9-bis[2-methyl-4- {2-(3-oxetanyl)} butoxyphenyl] fluorene, and 9,9-bis[4-[2-{2-(3-oxetanyl)}butoxy]ethoxyphenyl]fluorene.

It is only necessary for oxazoline to have an oxazoline group, and examples thereof include a bisoxazoline compound such as 2,2'-bis(2-oxazoline), 1,3-phenylenebisoxazoline, or 1,3-benzobisoxazoline and a compound having a terminal oxazoline group that is obtained through a reaction between the aforementioned compound and a polybasic carboxylic acid.

It is only necessary for epoxy to have an epoxy group, and examples thereof include polyglycidyl ether such as ethylene glycol diglycidyl ether, polyethylene glycol diglycidyl ether, polypropylene glycol diglycidyl ether, glycerin triglycidyl ether, glycerol polyglycidyl ether, polyglycerol polyglycidyl ether, trimethylolpropane polyglycidyl ether, sorbitol polyglycidyl ether, pentaerythritol polyglycidyl ether, resorcinol diglycidyl ether, neopentyl glycol diglycidyl ether, and hydrogenated bisphenol A diglycidyl ether. Among these, ethylene glycol diglycidyl ether, trimethylolpropane polyglycidyl ether, and the like are preferably used.

One kind of crosslinking agent can be used alone, or two or more kinds of crosslinking agent can be used in combination.

Also, the crosslinking agent preferably has appropriate water solubility in order to enhance crosslinking efficiency. As for the water solubility, the amount of crosslinking agent dissolved in 100 g of water at 25°C is preferably 0.1

to 50 g, is more preferably 0.2 to 40 g, and is still more preferably 0.5 to 30 g. Also, the basic compound used in a case in which the coated pigment is crosslinked is preferably an inorganic base in terms of crosslinking efficiency.

The aqueous pigment dispersion can further contain a crosslinking agent, a water-soluble organic solvent, a preservative, a leveling agent, a surface tension adjusting agent, an antifoaming agent, a surfactant such as an anionic surfactant, a cationic surfactant, a nonionic surfactant, or an ampholytic surfactant, a water-soluble resin, an emulsion, and the like.

The volume average particle diameter (D50) of the pigment dispersion is preferably equal to or less than 200 nm, is more preferably equal to or less than 150 nm, is further preferably equal to or less than 100 nm, and is further preferably equal to or less than 90 nm. Also, the lower limit value of the volume average particle diameter (D50) is preferably equal to or greater than 30 nm. If the volume average particle diameter (D50) is adjusted to an appropriate range, ink containing the coated pigment can form a clear printed product with high coloring performance and satisfactory color reproducibility. Also, the volume average particle diameter (D99) of the pigment dispersion is preferably equal to or less than 500 nm. In a case in which the pigment dispersion is used for a toner application, for example, the particle diameter of the toner is typically about 1 to 5 μm. When the particle diameter of the coated pigment is required to be appropriately smaller than the particle diameter of the toner, a particle diameter of equal to or less than 500 nm is sufficiently smaller than the particle diameter of the toner.

(Inkjet printing ink)

Inkjet printing ink in the specification preferably contains the coated pigment, the aqueous pigment dispersion, and the aqueous pigment dispersion treated with the aforementioned crosslinking agent (crosslinked pigment dispersion). The inkjet printing ink in the specification preferably contains water, a water-soluble solvent, a surfactant, and a resin as well.

The volume average particle diameter (D50) of the inkjet printing ink using the coated pigment in the specification is preferably equal to or less than 150 nm, is more preferably equal to or less than 100 nm, and is further preferably equal to or less than 50 nm. If the volume average particle diameter (D50) is equal to or less than 100 nm, ejection stability from an inkjet nozzle is improved, and saturation and image concentration (OD value) of the image are improved.

As for the content of the coated pigment, 1 to 15% by mass of pigment (X) is preferably contained and 2 to 10% by mass of pigment (X) is more preferably contained in 100% by mass of the inkjet printing ink. The coloring performance of the ink and image density may be significantly degraded if the aforementioned content is less than 1% by mass, and if the content exceeds 15% by mass, the viscosity of the ink increases, and ejection properties may be degraded, which may not be economical in some cases.

(Water-soluble solvent)

Examples of the water-soluble solvent include, in addition to the polyvalent alcohols described above, polyvalent alcohol alkyl ethers, polyvalent alcohol aryl ethers, nitrogen-containing heterocyclic compounds, amides, amines, a sulfur-containing compound, propylene carbonate, ethylene carbonate, and other water-soluble solvents. If the water-soluble solvent is contained, drying is prevented, and dispersion stability is improved.

Examples of polyvalent alcohols include triethylene glycol, tetraethylene glycol, polyethylene glycol, 1,2-propanediol, 1,3-propanediol, tripropylene glycol, polypropylene glycol, 1,2-butanediol, 1,3-butanediol, 1,4-butanediol, 1,2-pentanediol, 1,3-pentanediol, 1,4-pentanediol, 1,5-pentanediol, 1,2-hexanediol, 1,3-hexanediol, 1,4-hexanediol, 1,5-hexanediol, 1,6-hexanediol, 3-methyl-1,3-butanediol, trimethylolethane, trimethylolpropane, 1,2,6-hexanetriol, 1,2,4-butanetriol, 1,2,3-butanetriol, 3-methyl-1,3,5-pentanetriol, 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, and 5-hexene-1,2-diol. Among these, 2-ethyl-1,3-hexanediol, 2,2,4-trimethyl-1,3-pentanediol, 1,2-propanediol, 1,2-butanediol, 1,3-butanediol, 1,2-pentanediol, 1,5-pentanediol, 1,2-hexanediol, 1,6-hexanediol, and 1,2-heptanediol are preferably used.

Examples of polyvalent alcohol alkyl ethers include ethylene glycol monoethyl ether, ethylene glycol monobutyl ether, tetraethylene glycol monomethyl ether, propylene glycol monoethyl ether, and propylene glycol monobutyl ether.

Examples of polyvalent alcohol aryl ethers include ethylene glycol monophenyl ether, diethylene glycol monophenyl ether, tetraethylene glycol chlorophenyl ether, ethylene glycol monobenzyl ether, and ethylene glycol monoallyl ether.

Examples of the nitrogen-containing heterocyclic compounds include 2-pyrrolidone, N-methyl-2-pyrrolidone, N-hydroxyethyl-2-pyrrolidone, 1,3-dimethylimidazolidinone, ε-caprolactam, and γ-butyrolactone. Examples of amides include formamide, N-methylformamide, and N,N-dimethylformamide. Examples of amines include monoethanolamine, diethanolamine, triethanolamine, monoethylamine, diethylamine, and triethylamine. Examples of the sulfur-containing compounds include dimethyl sulfoxide, sulfolane, and thiodiethanol.

Preferable examples of other water-soluble solvents include saccharides. Examples of saccharides include monosaccharides, disaccharides, oligosaccharides (including trisaccharides and tetrasaccharides), and polysaccharides. Examples of saccharides include glucose, mannose, fructose, ribose, xylose, arabinose, galactose, maltose, cellobiose, lactose, sucrose, trehalose, and maltotriose. Here, polysaccharides mean sugars in a wide sense and include substances that are widely present in the natural world such as $\alpha$-cyclodextrin and cellulose. Also, examples of derivatives of these saccharides include reduced saccharides of the aforementioned saccharides (for example, represented as sugar alcohol [represented by a formula: $HOCH_2(CHOH)_nCH_2OH$ (where n represents an integer of 2 to 5)], oxidized sugars (for example, aldonic acid or uronic acid), amino acid, and thio acid. Among these, sugar alcohols are preferably used, and maltitol and sorbitol are more preferably used.

(Resin)

As the resin, a water-soluble resin or a water dispersive resin (emulsion) is preferably used in terms of forms. Also, examples of the resin include a condensation-based synthetic resin, addition-based synthetic resin, a natural polymer compound, and the like in terms of materials. Examples of the aforementioned condensation-type synthetic resin include a polyester resin, a polyurethane resin, a polyepoxy resin, a polyamide resin, a polyether resin, and a silicon resin. Examples of the addition-type synthetic resin include a polyolefin resin, a polystyrene-based resin, a polyvinyl alcohol-based resin, a polyvinyl ester-based resin, a polyacrylic-based resin, and an unsaturated carboxylic acid-based resin. Examples of the natural polymer compound include cellulose, rosin, and natural rubber.

(pH adjusting agent)

Examples of the pH adjusting agent include alcohol amine, alkali metal hydroxide, ammonium hydroxide, phosphonium hydroxide, and alkali metal carbonate.

Examples of alcohol amines include diethanolamine, triethanolamine, and 2-amino-2-ethyl-1,3 propanediol. Examples of the alkali metal hydroxide include lithium hydroxide, sodium hydroxide, and potassium hydroxide. Examples of ammonium hydroxide include ammonium hydroxide, quaternary ammonium hydroxide, and quaternary phosphonium hydroxide.

Examples of the alkali metal carbonate include lithium carbonate, sodium carbonate, and potassium carbonate.

(Others)

The other constituents described above are not particularly limited and can be appropriately selected as needed, and examples thereof include an antiseptic and antirust agent, a chelating reagent, an antioxidant, an ultraviolet absorber, an oxygen absorber, and light stabilizer.

(Antiseptic and antirust agent)

Examples of the aforementioned antiseptic and antirust agent include sodium dehydroacetate, sodium sorbate, 2-pyridinethiol-1-sodium oxide, sodium benzoate, and pentachlorophenol sodium.

(Chelating reagent)

Examples of the aforementioned chelating reagent include sodium ethylenediamine tetraacetate, sodium nitrilotriacetate, sodium hydroxyethyl ethylenediamine triacetate, sodium diethylenetriamine pentaacetate, and sodium uramil diacetate.

(Antirust agent)

Examples of the aforementioned antirust agent include acidic sulfites, sodium thiosulfate, ammonium thioglycolate, diisopropyl ammonium nitrite, pentaerythritol tetranitrate, dicyclohexyl ammonium nitrite, and benzotriazole.

(Antioxidant)

Examples of the aforementioned antioxidant include a phenol-based antioxidant (including a hindered phenol-based antioxidant), an amine-based antioxidant, a sulfur-based antioxidant, and a phosphorus-based antioxidant.

Examples of the aforementioned phenol-based antioxidant (including a hindered phenol-based antioxidant) include butylated hydroxyanisole, 2,6-di-tert-butyl-4-ethylphenol, stearyl-[3-(3,5-di-tert-butyl-4-hydroxyphenyl)propionate, 2,2'-methylenebis(4-methyl-6-tert-butylphenol), 2,2'-methylenebis(4-ethyl-6-tert-butylphenol), 4,4'-butylidenebis(3-methyl-6-tert-butylphenol), 3,9-bis[1,1-dimethyl-2-[β-(3-tert-butyl-4-hydroxy-5-methylphenyl)propionyloxy]ethyl]2,4,8,10-tetraoxaspiro[5,5]undecane, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, and tetrakis[methylene-3-(3 ' ,5 '-di-tert-butyl-4'-hydroxyphenyl)propionate] methane.

Examples of the aforementioned amine-based antioxidant include phenyl-β-naphthylamine, α-naphthylamine, N,N'-di-sec-butyl-p-phenylenediamine, phenothiazine, N,N'-diphenyl-p-phenylenediamine, 2,6-di-tert-butyl-p-cresol, 2,6-di-tert-butylphenol, 2,4-dimethyl-6-tert-butyl-phenol, butylhydroxyanisol, 2,2'-methylenebis(4-methyl-6-tert-butylphenol), 4,4'-butylidenebis(3-methyl-6-tert-butylphenol), 4,4'-thiobis(3-methyl-6-tert-butylphenol), tetrakis[methylene-3(3,5-di-tert-butyl-4-dihydroxyphenyl)propionate]methane, and 1,1,3-tris(2-methyl-4-hydroxy-5-tert-butylphenyl)butane.

Examples of the aforementioned sulfur-based antioxidant include dilauryl 3,3'-thiodipropionate, distearyl thiodipropionate, laurylstearyl thiodipropionate, dimyristyl 3,3'-thiodipropionate, distearyl β,β'-thiodipropionate, 2-mercaptobenzimidazole, and dilaurylsulfide.

Examples of the aforementioned phosphorus-based antioxidant include triphenyl phosphite, octadecyl phosphite, triisodecyl phosphite, trilauryl trithiophosphite, and trinonylphenyl phosphite.

(Ultraviolet absorber)

Examples of the aforementioned ultraviolet absorber include a benzophenone-based ultraviolet absorber, a benzotriazole-based ultraviolet absorber, a salicylate-based ultraviolet absorber, a cyanoacrylate-based ultraviolet absorber, and a nickel complex salt-based ultraviolet absorber.

Examples of the benzophenone-based ultraviolet absorber include 2-hydroxy-4-n-oxtoxybenzophenone, 2-hydroxy-4-n-dodecyloxobenzophenone, 2,4-dihydroxybenzophenone, 2-hydroxy-4-methoxybenzophenone, and 2,2',4,4'-tetrahydroxybenzophenone. Examples of the aforementioned benzotriazole-based ultraviolet absorber include 2-(2'-hydroxy-5'-tert-octylphenyl)benzotriazole, 2-(2' -hydroxy-5 '-methylphenyl)benzotriazole, 2-(2' -hydroxy-4' -octoxyphenyl)benzotriazole, and 2-(2'-hydroxy-3'-tert-butyl-5'-methylphenyl)-5-chlorobenzotriazole.

Examples of the aforementioned salicylate-based ultrasonic absorber include phenyl salicylate, p-tert-butylphenyl salicylate, and p-octylphenyl salicylate.

Examples of the aforementioned cyanoacrylate-based ultraviolet absorber include ethyl-2-cyano-3,3'-diphenylacrylate, methyl-2-cyano-3-methyl-3-(p-methoxyphenyl)acrylate, and butyl-2-cyano-3-methyl-3-(p-methoxyphenyl)acrylate.

Examples of the aforementioned nickel complex salt-based ultraviolet absorber include nickel bis(octylphenyl)sulfide, 2,2'-thiobis(4-tert-octylphelate)-n-butylamine nickel(II), 2,2'-thiobis(4-tert-octylphelate)-2-ethylhexylamine nickel(II), and 2,2'-thiobis(4-tert-octylphelate)triethanoamine nickel(II).

(Production of inkjet printing ink)

For producing inkjet printing ink, the aforementioned materials may be mixed, and the aforementioned mixing device may be used.

<Electrostatic image developing toner>

An electrostatic image developing toner in the specification preferably contains the coated pigment and the aqueous pigment dispersion. The electrostatic image developing toner in the specification further contains a bonder resin, and can contain a mold releasing agent, a charge control agent, a lubricant, a fluidity improver, a polishing agent, a conductivity imparting agent, an image peeling inhibitor, and the like as needed.

(Binding resin)

As the binding resin, a clear/transparent resin or a resin with a white color to a light color that does not inhibit a color hue of the coated pigment is preferably used.

Examples of the binding resin include: a homopolymer of styrene such as polystyrene, poly-p-chlorstyrene, or polyvinyltoluene and substituted products thereof; a styrene-based copolymer or crosslinked styrene-based copolymer such as a styrene-p-chlorstyrene copolymer, a styrene-vinyl toluene copolymer, a styrene-vinylnaphthalene copolymer, a styrene-acrylic acid ester copolymer, a styrene-methacrylic acid ester copolymer, a styrene-α-methyl chlormethacrylate copolymer, a styrene-acrylonitrile copolymer, a styrene-vinyl methyl ether copolymer, a styrene-vinyl ethyl ether copolymer, a styrene-vinyl methyl ketone copolymer, a styrene-butadiene copolymer, a styrene-isoprene copolymer, or a styrene-acrylonitrile-indene copolymer; polyvinyl chloride, a phenol resin, a natural modified phenol resin, a natural resin-modified maleic acid resin, an acrylic resin, a methacrylic resin, polyvinyl acetate, a silicone resin, a polyester resin, polyurethane, a polyamide resin, a furan resin, an epoxy resin, a xylene resin, polyvinyl butyral, a terpene resin, a coumarone indene resin, and a petroleum-based resin. Among these, a polyester resin and a styrene-based copolymer are preferably used.

The amount of binding resin mixed in is preferably 900 to 5,000 parts by mass per 100 parts by mass of the coated pigment.

The charge control agent is used to control an electric charge of toner particles. As the charge control agent, a positive charge control agent or a negative charge control agent is used in accordance with polarity of the toner particles.

Examples of the positive charge control agent include quaternary ammonium salt compounds (for example, tributylbenzylammonium-1-hydroxy-4-naphthosulfonate and tetrabutyl benzylammonium tetrafluoroborate), quaternary ammonium salt organic tin oxides (for example, dibutyltin oxide, dioctyltin oxide, and dicyclohexyltin oxide), diorganotin borate (dibutyltin borate, dioctyltin borate, and dicyclohexyltin borate), and a polymer having an amino group.

Examples of the negative charge control agent include a zinc salt, a calcium salt, a chromium salt of an aromatic hydroxycarboxylic acid, a bivalent or trivalent metal salt or metal chelate (complex) of aryloxy carboxylic acid such as a salicylic acid or a salicylic acid derivative, a fatty acid soap, and a naphthenic acid metal salt.

The amount of charge control agent used is preferably 0.1 to 10 parts by mass and is more preferably 0.5 to 8 parts by mass per 100 parts by mass of the binding resin.

The fluidity improver is a fine powder that not only imparts fluidity to the toner particles but also has functions such as imparting chargeability to the toner particles. Examples of the fluidity improver include silica, alumina, titania, magnesia, an amorphous silicon-aluminum co-oxide, and an amorphous silicon-titanium co-oxide.

The surface of the fluidity improver is preferably coated with a silane compound, a silicone oil, a silane coupling agent, or the like. In this manner, since it is possible to obtain hydrophobic surfaces for the toner particles, the chargeability can easily be controlled.

In the specification, a carrier can be used instead of the charge control agent. As the carrier, particles used in a two-component-based dry developing toner are preferably used. Examples of the carrier include ferromagnetic metals or powdered alloys of ferromagnetic metals such as iron powder, metal oxides such as iron oxides, powdered ferrite and those formed from elements such as nickel, copper, zinc, magnesium, or barium, a magnetic powder carrier formed from a magnetic powder such as magnetite powder, a magnetic powder resin coated carrier obtained by coating such magnetic powder with a resin, a binder carrier formed from a magnetic powder and a binder resin, and glass beads that are or are not coated with a resin. An average particle diameter of the carrier is preferably 15 to 100 $\mu$m and is more preferably 20 to 80 $\mu$m.

Also, examples of the resin that can be used as a resin with which the magnetic powder resin coated carrier is coated include polyethylene, a silicon-containing resin such as a silicone resin, a fluorine-containing resin, a styrene-based resin, an acrylic-based resin, a styrene-acrylic-based resin, polyvinyl acetate, a cellulose derivative, a maleic acid resin, an epoxy resin, polyvinyl chloride, polyvinylidene chloride, polyvinyl bromide, polyvinylidene bromide, polycarbonate, polyester, polypropylene, a phenol resin, polyvinyl alcohol, a fumaric acid ester resin, polyacrylonitrile, polyvinyl ether, chloroprene rubber, an acetal resin, a ketone resin, a xylene resin, butadiene rubber, a styrene-butadiene copolymer, polyurethane, a polyamide resin, an ionomer resin, and a polyphenylene sulfide resin. Among these, a fluorine-containing resin and a silicon-containing resin are particularly preferably used since less spent toner is then formed. The magnetic powder resin coated carrier may be caused to contain conductive fine particles (carbon black, a conductive metal oxide, or metal powder), an inorganic filler (silica, silicon nitride, boron nitride, alumina, zirconia, silicon carbide, boron carbide, titanium oxide, clay, talc, or glass fiber), the charge control agents exemplified above, and the like as needed. The film thickness of the resin with which a carrier core material is coated is preferably about 0.1 to 5 $\mu$m.

For producing an electrostatic image developing toner (hereinafter, referred to as a toner), known methods for producing a toner can be used. The methods for producing a toner are roughly classified into two types, namely a grinding method in which the toner is obtained through kneading and grinding processes and a polymerization method in which the toner is obtained through chemical polymerization. In the case of the grinding method, the aforementioned materials are sufficiently mixed using a mixing machine such as a ball mill or a Henschel mixer, for example, and the mixture is well kneaded using a thermal kneading machine such as a thermal roll kneader or a one-axis or two-axis extruder. Next, the mixture is cooled and solidified, is then mechanically ground into rough particles using a grinding machine such as a hammer mill, is then ground into fine particles using a mechanical grinding machine such as a jet mill, and is classified into grades, thereby producing the toner according to the exemplified method.

Also, it is preferable to perform a process in which the coated pigment and the binding resin are mixed in advance, a coloring dispersion in which a coloring agent component is dispersed in the binding resin (conc.) is produced, and the rest of materials that form the toner are then added, melted, and kneaded, in order to uniformly disperse and blend the coated pigment in the binding resin. The coloring dispersion (conc.) is formed at least from a magenta coloring agent and the binding resin in the invention. The proportion of the coloring agent contained in the coloring dispersion (conc.) is preferably 10 to 70% in terms of the weight.

Also, in a case of a toner obtained by the polymerization method, further improvement in dispersibility of the pigment in an aggregation process is observed, the amount of electric charge is stabilized, and a satisfactory image with less fogging is obtained through utilization of the pigment component in the form of a crosslinked pigment dispersion.

Meanwhile, in the case of the polymerization method, a method of producing a toner on the basis of a so-called microcapsule method in which the other toner component materials are dispersed in the binding resin solution and the dispersion is spray-dried, a method of obtaining a toner by mixing a monomer that forms the binding rein with predetermined materials and causing emulsification or suspension polymerization, and the like are exemplified. In the emulsification polymerization method, fine resin particles with particle diameters of submicron are caused to associate with a pigment component that is dispersed in water in advance in an aggregation process, an internal additive such as a wax, and the like, thereby obtaining desired particle diameters for a toner size. Also, in the suspension polymerization method, necessary materials such as a polymerization initiator, a pigment component, a mold releasing agent (wax), and a charge control agent are dispersed and heated in a monomer, and thereby causing polymerization. In addition, the pigment component dispersed in water in advance can be produced by a method that is similar to the aforementioned method for producing the pigment dispersion.

Preferably, an external additive is sufficiently mixed in and used with the thus obtained toner mother particles using a mixing machine such as a Henschel mixer.

In the specification, the weight average particle diameter of the toner is preferably 3 to 15μm and is more preferably 5 to 10μm.

The weight average particle diameter and the particle size distribution measurement of the toner can be measured using a Coulter counter (Multisizer 3), for example.

In the specification, the toner can further contain a mold releasing agent, a lubricant, a polishing agent, a conductivity imparting agent, an image peeling inhibitor, and the like.

<Paint composition>

A paint composition in the specification preferably contains the coated pigment and the aqueous pigment dispersion and further preferably contains a binder resin.

(Binder resin)

The binder resin is a resin containing a crosslinkable functional group. Preferable examples of the binder resin include an acrylic resin, a styrene-acrylic resin, a polyester resin, an alkyd resin, a fluorine resin, a urethane resin, and silicon-containing resin.

Also, examples of a crosslinking agent for the binder resin include a melamine resin, a urea resin, a polyisocyanate compound, a block polyisocyanate compound, and an epoxy compound.

Among these, a combination of an acrylic resin and a melamine resin is preferably employed.

The paint composition in the specification can be appropriately blended with a pigment dispersing agent, an anti-settling agent, a hardening catalyst, an antifoaming agent, an antioxidant, an ultraviolet absorber, a surface adjusting agent, an extender pigment, and the like as needed. Also, the paint composition can appropriately contain water or an organic solvent.

The paint composition can be produced by mixing and dispersing the aforementioned materials.

<Flexographic printing ink>

A flexographic printing ink in the specification (hereinafter, referred to as ink) preferably contains the coated pigment and the aqueous pigment dispersion and can further contain a binder resin, a solvent, a crosslinking agent, and the like.

(Resin)

Examples of the resin include an acrylic resin and a urethane resin.

The acrylic resin functions as a dispersing agent. Examples of the acrylic resin include a styrene-acrylic resin, an acryl-maleic acid resin, and an acryl-styrene-maleic acid resin in addition to a copolymer of an acryl monomer.

The acid value of the acrylic resin is preferably 40 to 180 mgKOH/g and is more preferably 40 to 100 mgKOH/g. If the acrylic resin has an appropriate acid value, resolubility of the ink is further improved, and solubility of the materials is further improved.

The weight average molecular weight of the acrylic resin is preferably 200,000 to 800,000. Also, a glass transition temperature (Tg) of the acrylic resin is preferably -30°C to 30°C.

(Urethane resin)

The urethane resin functions as a binder resin. As the urethane resin, a urethane-urea resin can be used in addition to the urethane resin. A polyurethane resin preferably has an acid value in terms of film formability, and the acid value is preferably 10 to 50 mgKOH/g.

The content of the resin contained in the ink is preferably 10 to 40% by mass per 100 parts by mass of the non-volatile component.

The ink can contain an additive as needed. Examples of the additive include a leveling agent, a wetting agent, a water repellant, an antifoaming agent, a wax such as polyethylene, polypropylene, polyfluoroethylene, and a crosslinking agent.

Examples of the solvent include water, alcohol, and glycol. Examples of alcohol include methanol, ethanol, propanol, butanol, hexanol, octanol, and decanol. Examples of glycol include ethylene glycol, ethylene glycol monomethyl ether, ethylene glycol monoethyl ether, ethylene glycol monopropyl ether, ethylene glycol monobutyl ether, ethylene glycol monooctyl ether, diethylene glycol, diethylene glycol monoethyl ether, diethylene glycol monopropyl ether, diethylene glycol monobutyl ether, triethylene glycol, triethylene glycol monomethyl ether, triethylene glycol monoethyl ether, triethylene glycol monopropyl ether, triethylene glycol monobutyl ether, propylene glycol, propylene glycol monoethyl ether, propylene glycol monopropyl ether, propylene glycol monobutyl ether, dipropylene glycol, dipropylene glycol monomethyl ether, dipropylene glycol monoethyl ether, dipropylene glycol monopropyl ether, dipropylene glycol monobutyl ether, tripropylene glycol, tripropylene glycol monomethyl ether, tripropylene glycol monoethyl ether, tripropylene glycol monopropyl ether, tripropylene glycol monobutyl ether, and glycerin.

The ink can be produced by mixing and dispersing the materials described above.

As for the coated pigment, the content of the uncoated pigment (X) is preferably 1 to 50% by mass per 100% by mass of ink. Also, viscosity of the ink is preferably equal to or greater than 10 mPa·s and equal to or less than 1000 mPa·s in terms of prevention of settlement of the pigment and appropriate dispersion thereof. Also, the viscosity is measured at 25°C using a B-type viscometer manufactured by Tokimec.

Examples

Although the invention will be specifically described below with reference to examples, the invention is not particularly limited to the examples. Also, "parts" represents "parts by mass", and "%" represents "% by mass" in the examples.

(Melting point)

For measurement of the melting point, Thermo plus TG8120 (manufactured by Rigaku Corporation) was used. About 5 mg of sample was warmed from a start temperature of 25°C such that the temperature was raised at 10°C/minute until the temperature reached 500°C. An obtained heat absorption peak was read, thereby obtaining a melting point.

(Acid value)

About 1 g of sample was accurately weighed in a triangular flask, 50 ml of mixture solution of distilled water/dioxane (weight ratio: distilled water/dioxane = 1/9) was added thereto and dissolved therein. A potential difference measurement device (manufactured by Kyoto Electronics Manufacturing Co., Ltd.; device name "potential difference automatic titration device AT-710M") was used to titrate the aforementioned sample solution with 0.1 mol/L of potassium hydroxide-ethanol solution (titer a), and the amount (b(mL)) of the potassium hydroxide/ethanol solution required until an end point of the titration was measured. As a value of the resin in a dried state, an acid value (mgKOH/g) was obtained using the following equation.

$$\text{Acid value (mgKOH/g)} = \{(5.611 \times a \times F)/S\}/(\text{concentration of non-volatile component}/100)$$

In the equation,

S: The amount of collected sample (g)
a: The amount of consumption of 0.1 mol/L potassium hydroxide-ethanol solution (ml)
F: Titer of 0.1 mol/L potassium hydroxide-ethanol solution

(Weight average molecular weight (Mw))

The weight average molecular weight (Mw) is a weight average molecular weight (Mw) in terms of polystyrene that was measured using a TSKgel column (manufactured by Tosoh Corporation) and a GPC provided with an RI detector (manufactured by Tosoh Corporation, HLC-8320GPC) and using THF as a developing solvent.

(Number average molecular weight (Mn))

Measurement was performed using a gel permeation chromatography (GPC) provided with an RI detector. HLC-8220GPC (manufactured by Tosoh Corporation) was used as a device, two separation columns were connected in series, two sets of "TSK-GEL SUPER HZM-N" were connected and used as a filler for both the separation columns, the oven temperature was set to 40°C, a THF solution was used as an eluent, and a flow rate for the measurement was set to 0.35 ml/min. The sample was dissolved in a solvent that included 1 wt% of aforementioned eluent, and 20 microliters of the sample was poured. All molecular weights are values in terms of polystyrene.

(Synthesis of α-olefin copolymer A-1 having acid group)

1-tetradecene, maleic anhydride, maleic acid monobutyl ester were prepared as α-olefin in a reaction container provided with a gas introducing tube, a thermometer, a condenser, and a stirrer such that the molar ratios described in Table 1 were satisfied and the total amount was 100 g, 10 g of xylene was further prepared in a flask, substitution with nitrogen was performed, heating at 130°C was then performed, and stirring was performed. A mixture of 1.0 g of Perbutyl O (NOF Corporation) of a peroxide and 20 g of xylene was dropped thereto for 2 hours while the mixture was stirred. Thereafter, the mixture was further stirred for 1 hour while the temperature was maintained at 130°C to cause a reaction, and xylene was condensed at a reduced pressure and was completely removed, thereby obtaining a copolymer A-1. The number average molecular weight (Mn) of the obtained copolymer A-1 was about 2400, the acid value was about 130 mgKOH/g, and the melting point was about 75°C.

(Synthesis of α-olefin copolymers A-2 to A-5 having acid groups)

α-olefin copolymers A-2 to A-5 having acid groups were obtained by a method that is similar to that for A-1 other than that the composition of the α-olefin copolymer A-1 having an acid group was changed to compositions described in Table 1. Physical properties of the obtained copolymers are described in Table 1.

[Table 1]

| Table 1 | | α-olefin copolymer having acid group | | | | |
|---|---|---|---|---|---|---|
| | | A-1 | A-2 | A-3 | A-4 | A-5 |
| | | Polymer C | Polymer A | Polymer B | Polymer D | Polymer E |
| Composition ratio (mol%) | Maleic anhydride | 42 | 40 | 45 | 35 | 37 |
| | α-olefin | 42 | 40 | 45 | 35 | 37 |
| | Maleic acid monoalkyl ester | 16 | 20 | 10 | 30 | 26 |
| Physical properties | Number of carbons in α-olefin | 14 | 22 | 14, 18 | 14, 21 | 18 |
| | Type of alkyl ester | Butyl | Isopropyl | n-propyl | Isopropyl | Hexyl |
| | Number average molecular weight | 2400 | 4500 | 2100 | 2500 | 2900 |
| | Acid value (mgKOH/g) | 130 | 160 | 105 | 180 | 163 |
| | Melting point | 75 | 70 | 78 | 80 | 78 |

(Synthesis of α-olefin copolymer (Q-1) having acid group)

46.2 g of 1-hexen and 53.8 g of maleic anhydride were prepared as α-olefin in a reaction container provided with a gas introducing tube, a thermometer, a condenser, and a stirrer, 10 g of xylene was prepared in a flask, substitution with nitrogen was performed, heating at 130°C was then performed, and stirring was performed. A mixture of 1.0 g of Perbutyl O (NOF Corporation) of peroxide and 20 g of xylene was dropped thereto for 2 hours while the mixture was

stirred. Thereafter, the mixture was further stirred for 1 hour while the temperature was maintained at 130°C to cause a reaction, and xylene was condensed at a reduced pressure and was completely removed, thereby obtaining a copolymer Q-1. The Weight average molecular weight (Mw) of the obtained copolymer Q-1 was about 10,000, and the acid value was 615.7 mgKOH/g,

($\alpha$-olefin copolymers Q-2 to Q-10 having acid groups)

Synthesis was performed similarly to that for (Q-1) other than that materials and preparation amounts were changed to those described in Table 2, thereby respectively obtaining copolymers Q-2 to Q-10. Also, the molecular weights were appropriately adjusted by changing the amounts of Perbutyl O added. The respective weight average molecular weights (Mw) and acid values were as described in Table 2.

[Table 2]

| Table 2 | | α-olefin copolymer having acid group | | | | | | | | | |
|---|---|---|---|---|---|---|---|---|---|---|---|
| | | Q-1 | Q-2 | Q-3 | Q-4 | Q-5 | Q-6 | Q-7 | Q-8 | Q-9 | Q-10 |
| α-olefin | 1-hexen | 46.2 | | | | | | | | | |
| | 1-decene | | 58.9 | | | | | | | | |
| | 1-tetradecene | | | 66.7 | | | 61.6 | 70.6 | | | |
| | 1-octadecene | | | | 72 | | | | | 72 | 72 |
| | 1-tetracosane | | | | | 77.4 | | | 95.4 | | |
| Maleic anhydride | | 53.8 | 41.1 | 33.3 | 28 | 22.6 | 38.4 | 29.4 | 4.6 | 28 | 28 |
| Monomer total | | 100 | 100 | 100 | 100 | 100 | 100 | 100 | 100 | 100 | 100 |
| α-olefin/maleic anhydride (molar ratio) | | 50/50 | 50/50 | 50/50 | 50/50 | 50/50 | 44/56 | 55/45 | 86/14 | 50/50 | 50/50 |
| Weight average molecular weight Mw | | 10,000 | 10,000 | 10,000 | 10,000 | 10,000 | 10,000 | 10,000 | 10,000 | 4,000 | 25,000 |
| Acid value (mgKOH/g) | | 615.7 | 470.8 | 381.1 | 320.1 | 258.1 | 439.7 | 336.2 | 53.0 | 320.1 | 320.1 |
| Non-volatile component (%) | | 100 | 100 | 100 | 100 | 100 | 100 | 100 | 100 | 100 | 100 |

(Production ofα-olefin copolymer RQ-1 having acid group)

32.2 g of copolymer Q-1, 67.8 g of the compound (3)-2 described in Table 3, and 0.2 g of diazabicycloundecene as a catalyst were added to a reaction container provided with a gas introducing tube, a thermometer, a condenser, and a stirrer, and the mixture was warmed to 130°C while stirred. The Temperature was changed to 110°C 1 hour later, the mixture was further maintained for 1 hour, the temperature was further changed to 90°C, the mixture was maintained for 4 hours, and an ester reaction was caused, thereby obtaining an α-olefin maleic anhydride RQ-1 with a side chain that was represented by Formula (2), where $R_1$ = a methyl group, $A^1O = C_2H_4O$, m = 12, and n = 0. Also, the weight average molecular weight (Mw) of the obtained copolymer was about 13,000, and the acid value was 99 mgKOH/g.

(Production of α-olefin copolymers RQ-2 to RQ-19 and RQ-27 to RQ-31 having acid groups)

Synthesis was performed similarly to that for (RQ-1) other than that materials and preparation amounts were changed to those described in Tables 3 to 5, thereby obtaining copolymers (RQ-2) to (RQ-19) and (RQ-27) to (RQ-31). The respective weight average molecular weights (Mw) and acid values were as described in Tables 3 to 5.

(Production of α-olefin copolymer RQ-20 having acid group)

61.7 g of copolymer Q-5 and 38.3 g of stearylamine were added to a reaction container provided with a gas introducing tube, a thermometer, a condenser, and a stirrer, and a reaction was caused at a reaction temperature of 180°C for 5 hours in a nitrogen flow while the mixture was stirred. After the reaction ended, the substance in the container was extracted in a hot state, thereby obtaining an α-olefin copolymer (RQ-20) having an acid group. The weight average molecular weight (Mw) of the obtained copolymer was about 11,000, and the acid value was 79.7 mgKOH/g.

(Production of α-olefin copolymers RQ-21 to RQ-26 having acid groups)

Synthesis was performed similarly to that for (RQ-20) other than that materials and preparation amounts were changed to those described in Tables 3 to 5, thereby obtaining copolymers (RQ-21) to (RQ-26). The respective weight average molecular weights (Mw) and acid values were as described in Tables 3 to 5.

[Table 3]

| Table 3 | Compound | α-olefin copolymer having acid group with side chain | | | | | | | | | | |
|---|---|---|---|---|---|---|---|---|---|---|---|---|
| | | RQ-1 | RQ-2 | RQ-3 | RQ-4 | RQ-5 | RQ-6 | RQ-7 | RQ-8 | RQ-9 | RQ-10 | RQ-11 |
| α-olefin copolymer having acid group | Q-1 | 32.2 | | | | | | | | | | |
| | Q-2 | | 38.3 | | | | | | | | | |
| | Q-3 | | | 43.4 | | | | | | | | |
| | Q-4 | | | | 47.7 | | | | | | | |
| | Q-5 | | | | | 53.1 | | | | 67.6 | 30.3 | 45.9 |
| | Q-6 | | | | | | 43.4 | | | | | |
| | Q-7 | | | | | | | 43.4 | | | | |
| | Q-8 | | | | | | | | 53.1 | | | |
| | Q-9 | | | | | | | | | | | |
| | Q-10 | | | | | | | | | | | |

(continued)

| Table 3 | | Compound | α-olefin copolymer having acid group with side chain | | | | | | | | | | |
|---|---|---|---|---|---|---|---|---|---|---|---|---|---|
| | | | RQ-1 | RQ-2 | RQ-3 | RQ-4 | RQ-5 | RQ-6 | RQ-7 | RQ-8 | RQ-9 | RQ-10 | RQ-11 |
| Compound | Formula (3)/ Formula (4) | (3)-1 | | | | | | | | | 32.4 | | |
| | | (3)-2 | 67.8 | 61.7 | 56.6 | 52.3 | 46.9 | 56.6 | 56.6 | 46.9 | | | |
| | | (3)-3 | | | | | | | | | | 69.7 | |
| | | (3)-4 | | | | | | | | | | | 54.1 |
| | | (3)-5 | | | | | | | | | | | |
| | | (3)-6 | | | | | | | | | | | |
| | | (4)-1 | | | | | | | | | | | |
| | | (4)-2 | | | | | | | | | | | |
| | | (4)-3 | | | | | | | | | | | |
| | Formula (1) | Cyclohexyl alcohol | | | | | | | | | | | |
| | | Benzyl alcohol | | | | | | | | | | | |
| | | Lactic acid | | | | | | | | | | | |
| | Formula (2) | Stearylamine | | | | | | | | | | | |
| | | Diisopropylamine | | | | | | | | | | | |
| | | Cyclohexylamine | | | | | | | | | | | |
| | | Aniline | | | | | | | | | | | |
| | Formula (5) | (5)-1 | | | | | | | | | | | |
| | | (5)-2 | | | | | | | | | | | |
| | | (5)-3 | | | | | | | | | | | |
| Monomer total | | | 100 | 100 | 100 | 100 | 100 | 100 | 100 | 100 | 100 | 100 | 100 |
| Weight average molecular weight Mw | 13,000 | 13,000 | 13,000 | 13,000 | 13,000 | 13,000 | 13,000 | 13,000 | 12,000 | 16,000 | 13,000 | | |

(continued)

| Table 3 | | Compound | α-olefin copolymer having acid group with side chain | | | | | | | | | | |
|---|---|---|---|---|---|---|---|---|---|---|---|---|---|
| | | | RQ-1 | RQ-2 | RQ-3 | RQ-4 | RQ-5 | RQ-6 | RQ-7 | RQ-8 | RQ-9 | RQ-10 | RQ-11 |
| Acid value mgKOH/g | 99.0 | 90.1 | 82.6 | 76.3 | 68.5 | 95.4 | 72.9 | 14.1 | 87.3 | 39.1 | 59.2 | | |

[Table 4] (α-olefin copolymers RQ-20 to RQ-22 are not according to the present invention)

| Table 3 | Compound | α-olefin copolymer having acid group with side chain | | | | | | | | | | |
|---|---|---|---|---|---|---|---|---|---|---|---|---|
| | | RQ-12 | RQ-13 | RQ-14 | RQ-15 | RQ-16 | RQ-17 | | RQ-19 | RQ-20 | RQ-21 | RQ-22 |
| α-olefin copolymer having acid group | Q-1 | | | | | | | | | | | |
| | Q-2 | | | | | | | | | | | |
| | Q-3 | | | | | | | | | | | |
| | Q-4 | | | | | | | | | | | |
| | Q-5 | 47.4 | 39.1 | 42.5 | 37.4 | 39.5 | 81.3 | 80.1 | 82.8 | 61.7 | 81.1 | 81.5 |
| | Q-6 | | | | | | | | | | | |
| | Q-7 | | | | | | | | | | | |
| | Q-8 | | | | | | | | | | | |
| | Q-9 | | | | | | | | | | | |
| | Q-10 | | | | | | | | | | | |

(continued)

| Table 3 | | Compound | α-olefin copolymer having acid group with side chain | | | | | | | | | | |
|---|---|---|---|---|---|---|---|---|---|---|---|---|---|
| | | | RQ-12 | RQ-13 | RQ-14 | RQ-15 | RQ-16 | RQ-17 | | RQ-19 | RQ-20 | RQ-21 | RQ-22 |
| Compound | Formula (3)/ Formula (4) | (3)-1 | | | | | | | | | | | |
| | | (3)-2 | | | | | | | | | | | |
| | | (3)-3 | | | | | | | | | | | |
| | | (3)-4 | | | | | | | | | | | |
| | | (3)-5 | 52.6 | | | | | | | | | | |
| | | (3)-6 | | 60.9 | | | | | | | | | |
| | | (4)-1 | | | 57.5 | | | | | | | | |
| | | (4)-2 | | | | 62.6 | | | | | | | |
| | | (4)-3 | | | | | 60.5 | | | | | | |
| | Formula (1) | Cyclohexyl alcohol | | | | | | 18.7 | | | | | |
| | | Benzyl alcohol | | | | | | | 19.9 | | | | |
| | | Lactic acid | | | | | | | | 17.2 | | | |
| | Formula (2) | Stearylamine | | | | | | | | | 38.3 | | |
| | | Diisopropylamine | | | | | | | | | | 18.9 | |
| | | Cyclohexylamine Aniline | | | | | | | | | | | 18.5 |
| | Formula (5) | (5)-1 | | | | | | | | | | | |
| | | (5)-2 | | | | | | | | | | | |
| | | (5)-3 | | | | | | | | | | | |
| Monomer total | | | 100 | 100 | 100 | 100 | 100 | 100 | 100 | 100 | 100 | 100 | 100 |
| Weight average molecular weight Mw | | | 13,000 | 14,000 | 13,000 | 16,000 | 14,000 | 11,000 | 11,000 | 11,000 | 11,000 | 11,000 | 11,000 |
| Acid value mgKOH/g | | | 61.2 | 50.5 | 54.8 | 48.2 | 51.0 | 104.9 | 103.3 | 106.9 | 79.7 | 104.7 | 105.1 |

[Table 5] (α-olefin copolymers RQ-23 to RQ-26 are not according to the present invention)

| Table 5 | | Compound | α-olefin copolymer having acid group with side chain | | | | | | | | |
|---|---|---|---|---|---|---|---|---|---|---|---|
| | | | RQ-23 | RQ-24 | RQ-25 | RQ-26 | RQ-27 | RQ-28 | RQ-29 | RQ-30 | RQ-31 |
| α-olefin copolymer having acid group | | Q-1 | | | | | | | | | |
| | | Q-2 | | | | | | | | | |
| | | Q-3 | | | | | | | | | |
| | | Q-4 | | | | | | | | | |
| | | Q-5 | 82.4 | 59.2 | 46.5 | 30.3 | 91.9 | 85.0 | 79.0 | | |
| | | Q-6 | | | | | | | | | |
| | | Q-7 | | | | | | | | | |
| | | Q-8 | | | | | | | | | |
| | | Q-9 | | | | | | | | 47.7 | |
| | | Q-10 | | | | | | | | | 47.7 |
| Compound | Formula(3)/Formula (4) | (3)-1 | | | | | | | | | |
| | | (3)-2 | | | | | 8.1 | 15.0 | 21.0 | 52.3 | 52.3 |
| | | (3)-3 | | | | | | | | | |
| | | (3)-4 | | | | | | | | | |
| | | (3)-5 | | | | | | | | | |
| | | (3)-6 | | | | | | | | | |
| | | (4)-1 | | | | | | | | | |
| | | (4)-2 | | | | | | | | | |
| | | (4)-3 | | | | | | | | | |
| | Formula (1) | Cyclohexyl alcohol | | | | | | | | | |

(continued)

| Table 5 | | Compound | α-olefin copolymer having acid group with side chain | | | | | | | | |
|---|---|---|---|---|---|---|---|---|---|---|---|
| | | | RQ-23 | RQ-24 | RQ-25 | RQ-26 | RQ-27 | RQ-28 | RQ-29 | RQ-30 | RQ-31 |
| | | Benzyl alcohol | | | | | | | | | |
| | | Lactic acid | | | | | | | | | |
| | Formula (2) | Stearylamine | | | | | | | | | |
| | | Diisopropylamine | | | | | | | | | |
| | | Cyclohexylamine | | | | | | | | | |
| | | Aniline | 17.6 | | | | | | | | |
| | Formula (5) | (5)-1 | | 40.8 | | | | | | | |
| | | (5)-2 | | | 53.5 | | | | | | |
| | | (5)-3 | | | | 69.7 | | | | | |
| Monomer total | | | 100 | 100 | 100 | 100 | 100 | 100 | 100 | 100 | 100 |
| Weight average molecular weight Mw | | | 11,000 | 13,000 | 14,000 | 14,000 | 11,000 | 11,000 | 11,000 | 5,000 | 27,000 |
| Acid value mgKOH/g | | | 106.3 | 76.4 | 60.0 | 39.1 | 215.6 | 182.8 | 156.9 | 76.3 | 76.3 |

Hereinafter, abbreviations in Tables 3 to 5 will be described. Also, compounds to which hydrogen atoms were bonded were used for all monovalent bonding hands in Formulae (1) to (6).

(3)-1: A compound represented by Formula (3), where $R_1$ = methyl group, $A^1O$ = $C_2H_4O$, m = 4, and n = 0.
(3)-2: A compound represented by Formula (3), where $R_1$ - methyl group, $A^1O$ = $C_2H_4O$, m = 12, and n = 0.
(3)-3: A compound represented by Formula (3), where $R_1$ = methyl group, $A^1O$ = $C_2H_4O$, m = 22, and n = 0.
(3)-4: A compound represented by Formula (3), where $R_1$ = methyl group, $A^1O$ = $C_2H_4O$, $A^2O$ = $C_3H_6O$, m = 3, and n = 6.
(3)-5: A compound represented by Formula (3), where $R_1$ = $C_8H_{17}$, $A^1O$ = $C_2H_4O$, $A^2O$ = $C_3H_6O$, m = 3, and n = 6.
(3)-6: A compound represented by Formula (3), where $R_1$ = $C_{18}H_{37}$, $A^2O$ = $C_3H_6O$, m = 0, and n = 7.
(4)-1: A compound represented by Formula (4), where $R_1$ = methyl group, $A^1O$ = $C_2H_4O$, m = 12, and n = 0.
(4)-2: A compound represented by Formula (4), where $R_1$ = $C_{11}H_{23}$, $A^1O$ = $C_2H_4O$, m = 12, and n = 0.
(4)-3: A compound represented by Formula (4), where $R_1$ = $C_{11}H_{23}$, $A^2O$ = $C_3H_6O$, m = 0, and n = 8.
(5)-1: (JEFFAMINE M-600 (manufactured by HUNTSMAN) was used; In Formula (5), $R_1$ = methyl group, $A^1O$ = $C_2H_4O$, A2O = $C_3H_6O$, m = 1, n = 9, and $R^2$ = hydrogen atom.
(5)-2: (JEFFAMINE M-1000 (manufactured by HUNTSMAN) was used; in Formula (5), $R_1$ = methyl group, $A^1O$ = $C_2H_4O$, $A^2O$ = $C_3H_6O$, m = 19, n = 3, and $R^2$ = hydrogen atom.
(5)-3: (JEFFAMINE M-2005 (manufactured by HUNTSMAN) was used; in Formula (5), $R_1$ = methyl group, $A^1O$ = $C_2H_4O$, $A^2O$ = $C_3H_6O$, m = 6, n = 29, and $R^2$ = hydrogen atom.

Cyclohexyl alcohol: A compound represented by Formula (1), where $R_1$ = cyclohexyl group.
Benzyl alcohol: A compound represented by Formula (1), where $R_1$ = benzene ring.
Lactic acid: A compound represented by Formula (1), where $R_1$ is represented by Formula (6) below.

[Chem. 6]

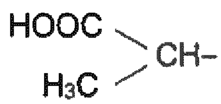

Stearylamine: A compound represented by Formula (2), where $R_1$ = $CH_3(CH_2)_{17}$-, and $R_2$ = hydrogen atom.
Diisopropyamine: A compound represented by Formula (2), where $R_1$ = $(CH_3)_2CH$-, and $R_2$ = $(CH_3)_2CH$-.
Cyclohexylamine: A compound represented by Formula (2), where $R_1$ = cyclohexyl group, and $R_2$ = hydrogen atom.

(Coated pigment (Wet) PA1-1 to PA1-50)

(Production of PA1-1)

250 parts of PR122 ("Toner Magenta E" manufactured by Clariant Chemicals) as a pigment, 1250 parts of sodium chloride as a water-soluble inorganic salt, 87.5 parts of (A-2) as a resin, and 250 parts of diethylene glycol as a water-soluble organic solvent were prepared in a 3L kneader made of stainless steel (manufactured by Inoue MFG, Inc.), and the mixture was kneaded at 80°C for 6 hours. The mixture was poured into 7,500 parts of water, the mixture was left for 24 hours and was stirred with a high-speed mixer for about 1 hour to obtain the mixture in a slurry form, and filtration and washing with water were repeated to remove sodium chloride and the water-soluble organic solvent, thereby obtaining a pigment with a surface coated with resin (coated pigment PA1-1). (Concentration of the non-volatile component: 30.2%)

(Production of coated pigments (Wet) PA1-2 to PA1-48 and PA1-50)

Coated pigments (PA1-2) to (PA1-48) and (PA1-50) were obtained by a method that was similar to that for the coated pigment (PA 1-1) other than that compositions were changed to those shown in Table 6. Also, 87.5 parts of resin was changed to resins described below for the coated pigments (PA1-42) to (PA 1-44).
Coated pigment (PA1-42)

Resin 1: (A-2) 60 parts

(continued)

| | |
|---|---|
| Resin 2: Joncryl690 | 27.5 parts |

Coated pigment (PAI-43)

| | |
|---|---|
| Resin 1: (A-2) | 60 parts |
| Resin 2: X-1 | 27.5 parts |

Coated pigment (PA1-44)

| | | |
|---|---|---|
| Resin 1: | (A-2) | 60 parts |
| Resin 2: | SMA1440 | 27.5 parts |

(Production of coated pigment (Wet) PA1-49)

250 parts of PR122 ("Toner Magenta E" manufactured by Clariant Chemicals) as a pigment, 1250 parts of sodium chloride as a water-soluble inorganic salt, and 250 parts of diethylene glycol as a water-soluble organic solvent were prepared in a 3L kneader made of stainless steel (manufactured by Inoue MFG., Inc.), and the mixture was kneaded at 80°C for 6 hours. The mixture was poured into 7,500 parts of water, was left for 24 hours, and was stirred with a high-speed mixer for about 1 hour to obtain the mixture in a slurry form, and filtration and washing with water were repeated to remove sodium chloride and the water-soluble organic solvent, thereby obtaining a coated pigment (PA1-49) (actually, uncoated pigment). (Concentration of the non-volatile component: 34.2%)

[Table 6]

| Table 6 | C.I. No. | Pigment (X) | | | Resin | | | | Non-volatile component (%) | Amount of resin for coating (%) |
|---|---|---|---|---|---|---|---|---|---|---|
| Coated pigment | | Product name | Manufacturer | Part | Resin 1 | | Resin 2 | | | |
| | | | | | Type | Part | Type | Part | | |
| (PAI-1) | PR122 | Toner Magenta E | Clariant Chemicals | 250.0 | A-2 | 87.5 | - | - | 30.2% | 27.0% |
| (PA1-2) | PR146 | PERMANENT CARMINE FBB02-JP | Clariant Chemicals | 250.0 | A-2 | 87.5 | - | - | 30.5% | 28.2% |
| (PA1-3) | PR150 | TOSHIKI RED 150TR | Tokyo Shikizai Industry Co., Ltd. | 250.0 | A-2 | 87.5 | - | - | 31.2% | 25.8% |
| (PA1-4) | PR170 | Brilliant Carmine 7014 | Sanyo Color Works, LTD. | 250.0 | A-3 | 87.5 | - | - | 29.8% | 27.6% |
| (PA1-5) | PR177 | CINILEX RED SR3C | Cinic Chemicals | 250.0 | A-1 | 87.5 | - | - | 30.1% | 27.5% |
| (PA1-6) | PR179 | PERRINDO Maroon 179 229-8801 | DIC | 250.0 | A-3 | 87.5 | - | - | 32.4% | 29.2% |
| (PA1-7) | PR184 | PARMANENT RUBINE F6B | Clariant Chemicals | 250.0 | A-4 | 87.5 | - | - | 31.8% | 23.8% |
| (PA1-8) | PR185 | NOVOPERM CARMINE HF4C | Clariant Chemicals | 250.0 | A-2 | 87.5 | - | - | 32.0% | 25.5% |
| (PA1-9) | PR254 | CINILEX DPP RED SR2P | Cinic Chemicals | 250.0 | A-1 | 87.5 | - | - | 31.6% | 29.8% |
| (PA1-10) | PR269 | Shimra Fast Red 1022 | DIC | 250.0 | A-2 | 87.5 | - | - | 30.4% | 26.5% |
| (PA1-11) | PR57:1 | Permanent Rubine L5B-01 | Clariant Chemicals | 250.0 | A-4 | 87.5 | - | - | 30.8% | 27.3% |
| (PA1-12) | PR48:3 | TCR48302 | Trust Chem Co., Ltd. | 250.0 | A-3 | 87.5 | - | - | 30.7% | 28.8% |
| (PA1-13) | PV19 | Inkjet Magenta E5B02 | Clariant Chemicals | 250.0 | A-2 | 87.5 | - | - | 30.2% | 26.5% |
| (PA1-14) | PV23 | HOST AFFINE VIOLET RL | Clariant Chemicals | 250.0 | A-5 | 87.5 | - | - | 30.4% | 27.2% |
| (PA1-15) | PV32 | GRAPHTOL BQPRDO HF3R | Clariant Chemicals | 250.0 | A-2 | 87.5 | - | - | 21.6% | 29.4% |
| (PA1-16) | PB15:3 | LIONOL BLUE FG-7351 | Toyocolor Co., Ltd. | 250.0 | A-2 | 87.5 | - | - | 32.8% | 28.4% |
| (PA1-17) | PB15:4 | LIONOL BLUE FG-7400-G | Toyocolor Co., Ltd. | 250.0 | A-4 | 87.5 | - | - | 32.4% | 25.4% |
| (PA1-18) | PY12 | LIONOL YELLOW TCH1205 | Tovocolor Co., Ltd. | 250.0 | A-2 | 87.5 | - | - | 30.5% | 23.6% |
| (PA1-19) | PY13 | PERMANENT YELLOW GR-01 | Clariant Chemicals | 250.0 | A-5 | 87.5 | - | - | 30.6% | 27.2% |
| (PA1-20) | PY14 | PERMANENT YELLOW GS0 | Clariant Chemicals | 250.0 | A-1 | 87.5 | - | - | 29.8% | 26.4% |
| (PA1-21) | PY74 | Hansa Yellow 5GX 01 | Clariant Chemicals | 250.0 | A-3 | 87.5 | - | - | 29.6% | 27.8% |
| (PA1-22) | PY83 | LIONOL YELLOW TT=1805G | Toyocolor Co., Ltd. | 250.0 | A-5 | 87.5 | - | - | 29.9% | 25.6% |

(continued)

| Table 6 | C.I. No. | Pigment (X) | | | Resin | | | | Non-volatile component (%) | Amount of resin for coating (%) |
|---|---|---|---|---|---|---|---|---|---|---|
| Coated pigment | | Product name | Manufacturer | Part | Resin 1 | | Resin 2 | | | |
| | | | | | Type | Part | Type | Part | | |
| (PA1-23) | PY93 | Cromophtal Yellow 3G | BASF | 250.0 | A-4 | 87.5 | - | - | 30.2% | 27.6% |
| (PA1-24) | PY109 | CINILEX YELLOW SQY | Cinic Chemicals | 250.0 | A-3 | 87.5 | - | - | 30.7% | 28.7% |
| (PA1-25) | PY110 | CINILEX YELLOW SY2T | Cinic Chemicals | 250.0 | A-4 | 87.5 | - | - | 31.6% | 25.4% |
| (PA1-26) | PY120 | PV FAST YELLOW H2G | Clariant Chemicals | 250.0 | A-4 | 87.5 | - | - | 30.5% | 26.5% |
| (PA1-27) | PY138 | Paliotol Yellow D0960 | BASF | 250.0 | A-1 | 87.5 | - | - | 31.6% | 29.8% |
| (PA1-28) | PY139 | GRAPHTOL YELLOW H2R | Clariant Chemicals | 250.0 | A-4 | 87.5 | - | - | 29.8% | 25.6% |
| (PA1-29) | PY150 | Hauce Yellow 115002 | Haubach Toyo Colour Pvt. Ltd. | 250.0 | A-1 | 87.5 | - | - | 28.6% | 26.6% |
| (PA1-30) | PY151 | HOST APERM YELLOW H4G | Clariant Chemicals | 250.0 | A-3 | 87.5 | - | - | 27.9% | 23.5% |
| (PA1-31) | PY154 | HOST APERM YELLOW IDG | Clariant Chemicals | 250.0 | A-1 | 87.5 | - | - | 31.6% | 21.0% |
| (PA1-32) | PY155 | INK JET YELLOW 4GC | Clariant Chemicals | 250.0 | A-4 | 87.5 | - | - | 32.2% | 27.8% |
| (PA1-33) | PY174 | PERMANENT YELLOW GRS 80 | Clariant Chemicals | 250.0 | A-5 | 87.5 | - | - | 30.5% | 26.8% |
| (PA1-34) | PY180 | NOVOPERM YELLOW P-HG | Clariant Chemicals | 250.0 | A-2 | 87.5 | - | - | 31.5% | 25.4% |
| (PA1-35) | PY185 | Paliotol Yellow D1155 | BASF | 250.0 | A-2 | 87.5 | - | - | 31.7% | 27.2% |
| (PA1-36) | PG7 | LIONOL GREEN 8930-I | Tovocolor Co., Ltd. | 250.0 | A-5 | 87.5 | - | - | 32.2% | 30.0% |
| (PAI-37) | PG36 | LIONOL GREEN 6Y-501 | Toyocolor Co., Ltd. | 250.0 | A-2 | 87.5 | - | - | 31.9% | 29.5% |
| (PAI-38) | PO36 | NOVOPERM ORANGE HL | Clariant Chemicals | 250.0 | A-2 | 87.5 | - | - | 30.6% | 27.2% |
| (PA-39) | PO38 | GRAPHTOL RED HFG | Clariant Chemicals | 250.0 | A-5 | 87.5 | - | - | 31.0% | 28.0% |
| (PA-40) | PB17 | Printex 35 | Orion Engineered Carbons | 250.0 | A-2 | 87.5 | - | - | 29.8% | 27.6% |
| (PA1-41) | PR122 | Toner Magenta E | Clariant Chemicals | 250.0 | A-2 | 200 | - | - | 28.6% | 48.8% |
| (PA1-42) | PR122 | Toner Magenta E | Clariant Chemicals | 250.0 | A-2 | 60 | Joncryl690 | 27.5 | 31.2% | 21.8% |
| (PA1-43) | PB15:3 | LIONOL BLUE FG-7351 | Tovocolor Co., Ltd. | 250.0 | A-2 | 60 | X-1 | 27.5 | 29.5% | 22.4% |
| (PA1-44) | PR180 | NOVOPERM YELLOW P-HG | Clariant Chemicals | 250.0 | A-2 | 60 | SMA1440 | 27.5 | 32.2% | 21.6% |

(continued)

| Table 6 | C.I. No. | Pigment (X) | | | Resin | | | | Non-volatile component (%) | Amount of resin for coating (%) |
|---|---|---|---|---|---|---|---|---|---|---|
| Coated pigment | | Product name | Manufacturer | Part | Resin 1 | | Resin 2 | | | |
| | | | | | Type | Part | Type | Part | | |
| (PA1-45) | PY122 | Toner Magenta E | Clariant Chemicals | 250.0 | Joncrvl690 | 87.5 | - | - | 32.4% | 9.8% |
| (PA1-46) | PB153 | LIONOL BLUE FG-7351 | Tovocolor Co., Ltd. | 250.0 | X-1 | 87.5 | - | - | 31.4% | 9.5% |
| (PA1-47) | PY180 | NOVOPERM YELLOW P-HG | Clariant Chemicals | 250.0 | SMA1440 | 87.5 | - | - | 30.2% | 9.2% |
| (PA1-48) | PR122 | Toner Magenta E | Clariant Chemicals | 250.0 | A-2 | 37.5 | - | - | 33.2% | 8.9% |
| (PA1-49) | PR122 | Toner Magenta E | Clariant Chemicals | 250.0 | - | - | - | - | 34.2% | - |
| (PA1-50) | PR122 | Toner Magenta E | Clariant Chemicals | 250.0 | A-2 | 250 | - | - | 28.6% | 56.2% |

(Names)

Hereinafter, the names and the note in Table 6 will be described.

Joncryl690: Styrene (meth)acrylic resin (manufactured by BASF)
X-1: Styrene (meth)acrylic resin (manufactured by Seiko PMC Corporation)
SMA1440: Styrene maleic (anhydride) resin (manufactured by CrayValley)

(Note)

(PA-1-49) was a pigment that was actually not coated with resin although it is categorized as a coated pigment.

(Production of coated pigment (Wet) PRQ-1 to PRQ-82)

(Production of PRQ-1)

250 parts of PR122 ("Toner Magenta E" manufactured by Clariant Chemicals) as the pigment (X), 1250 parts of sodium chloride as a water-soluble inorganic salt, 87.5 parts of (RQ-1) as a resin, and 250 parts of diethylene glycol as a water-soluble organic solvent were prepared in a 3L kneader made of stainless steel (manufactured by Inoue MFG, Inc.), and the mixture was kneaded at 80°C for 6 hours. The mixture was poured into 7.500 parts of water, was left for 24 hours, and was stirred with a high-speed mixer for about 1 hour to obtain the mixture in a slurry form, and filtration and washing with water were repeated, thereby removing sodium chloride and the water-soluble organic solvent. In this manner, a pigment (coated pigment) (PRQ-1) solution with the surface coated with the resin was obtained. (Concentration of the non-volatile component: 30.5%). Also, the concentration of the non-volatile component was calculated by measuring the weight of the non-volatile component 30 minutes later at 105°C.

(Production of PRQ-2 to PRQ-78)

Processing similar to that for (PRQ-1) was performed other than that materials and preparation amounts were changed to those described in Tables 9 to 11, thereby obtaining pigment (coated pigment) (PRQ-2 to PRQ-78) solutions with surfaces coated with the resin.

Also, processing similar to that for (PRQ-1) was performed other than that 87.5 parts of (RQ-1) used for producing (PRQ-1) was changed to utilization of the resins described below and the compositions were changed, for the coated pigments (PRQ-76) to (PRQ-78).
Coated pigment (PRQ-76)

| | |
|---|---|
| Resin 1: (RQ-5) | 60 parts |
| Resin 2: Joncryl690 | 27.5 parts |

Coated pigment (PRQ-77)

| | |
|---|---|
| Resin 1: (RQ-5) | 60 parts |
| Resin 2: X-1 | 27.5 parts |

Coated pigment (PRQ-78)

| | |
|---|---|
| Resin 1: (RQ-5) | 60 parts |
| Resin 2: SMA1440 | 27.5 parts |

For the coated pigments (PRQ-75), (PRQ-79), and (PRQ-80), processing similar to that for (PRQ-1) was performed other than that 87.5 parts of (RQ-1) used to produce (PRQ-1) was changed to the resins and the compositions described below,
Coated pigment (PRQ-75)

| | |
|---|---|
| Resin 1: (RQ-5) | 200.0 parts |

Coated pigment (PRQ-79)

Resin 1: (RQ-5) 37.5 parts

Coated pigment (PRQ-80)

Resin 1: (RQ-5) 250.0 parts

For the coated pigments (PRQ-81) to (PRQ-83), processing similar to that for (PRQ-1) was performed other than that 87.5 parts of (RQ-1) used to produce (PRQ-1) was changed to the resins and the compositions described below.
Coated pigment (PRQ-81)

Resin 1: Joncryl690 87.5 parts

Coated pigment (PRQ-82)

Resin 1: X-1 87.5 parts

Coated pigment (PRQ-83)

Resin 1: SMA1440 87.5 parts

The respective concentrations of the non-volatile components and the amounts of resin coating were as described in Tables 9-11. Also, the amounts of resin coating were represented as proportions (%) of the amounts (part by mass) of resin coating per 100 parts by mass of pigment (X).

(Production of pigment PRQ-84 without resin coating)

250 parts of PR122 ("Toner Magenta E" manufactured by Clariant Chemicals) as a pigment, 1250 parts of sodium chloride as a water-soluble inorganic salt, and 250 parts of diethylene glycol as a water-soluble organic solvent were prepared in a 3L kneader made of stainless steel (manufactured by Inoue MFG., Inc.), and the mixture was kneaded at 80°C for 6 hours. The mixture was poured into 7,500 parts of water, was left for 24 hours, and was stirred with a high-speed mixer for about 1 hour to obtain the mixture in a slurry form, and filtration and washing with water were repeated to remove sodium chloride and the water-soluble organic solvent, thereby obtaining a coated pigment (PRQ-84) (this was actually an uncoated pigment). (Concentration of the non-volatile component: 34.2%). Also, the concentration of the non-volatile component was calculated by measuring the weight of the non-volatile component 30 minutes later at 105°C.

[Table 7]

| Table 7 | Production of aqueous pigment dispersion | | | Evaluation results of aqueous pigment dispersion | | | | Evaluation of inkjet ink (A1) | | | |
|---|---|---|---|---|---|---|---|---|---|---|---|
| | Coated pigment | Basic substance | Aqueous pigment dispersion | Particle size distribution (nm) | | | Filtration test (second) | Inkjet ink | | Evaluation results | |
| | | | | D1 | D50 | D99 | | | Diluent | Ejection properties | Water resistance |
| Example (A1-1) | (PA1-1) | Dimethylamino ethanol | (DPA1-1) | 25 | 53 | 160 | 21.2 | (IA1-1) | A | S | S |
| Example (A1-2) | (PA1-2) | Dimethylamino ethanol | (DPA1-2) | 60 | 120 | 250 | 23.4 | (IA1-2) | A | S | S |
| Example (A1-3) | (PA1-3) | Dimethylamino ethanol | (DPA1-3) | 50 | 85 | 120 | 25.5 | (IA1-3) | A | S | S |
| Example (A1-4) | (PA1-4) | Potassium hydroxide | (DPA1-4) | 58 | 112 | 224 | 27.2 | (IA1-4) | B | S | S |
| Example (A1-5) | (PA1-5) | Sodium hydroxide | (DPA1-5) | 53 | 113 | 209 | 20.8 | (IA1-5) | C | S | S |
| Example (A1-6) | (PA1-6) | Potassium hydroxide | (DPA1-6) | 22 | 45 | 120 | 24.2 | (IA1-6) | D | S | S |
| Example (A1-7) | (PA1-7) | Sodium hydroxide | (DPA1-7) | 68 | 120 | 295 | 23.6 | (IA1-7) | E | S | A |
| Example (A1-8) | (PA1-8) | Dimethylamino ethanol | (DPA1-8) | 30 | 81 | 212 | 27.2 | (IA1-8) | A | S | S |
| Example (A1-9) | (PA1-9) | Dimethylamino ethanol | (DPA1-9) | 60 | 137 | 400 | 30.0 | (IA1-9) | B | S | S |
| Example (A1-10) | (PA1-10) | Dimethylamino ethanol | (DPA1-10) | 45 | 94 | 235 | 26.8 | (IA1-10) | C | S | S |
| Example (A1-11) | (PA1-11) | Potassium hydroxide | (DPA1-11) | 51 | 125 | 262 | 24.6 | (IA1-11) | D | S | A |
| Example (A1-12) | (PA1-12) | N-ethyldiethanolamine | (DPA1-12) | 49 | 185 | 420 | 25.7 | (IA1-12) | E | S | S |
| Example (A1-13) | (PA1-13) | Dimethylamino ethanol | (DPA1-13) | 34 | 69 | 153 | 23.5 | (IA1-13) | A | S | S |
| Example (A1-14) | (PA1-14) | N-ethyldiethanolamine | (DPA1-14) | 68 | 145 | 320 | 22.6 | (IA1-14) | B | A | S |

(continued)

| Table 7 | Production of aqueous pigment dispersion | | | Evaluation results of aqueous pigment dispersion | | | | Evaluation of inkjet ink (A1) | | | |
|---|---|---|---|---|---|---|---|---|---|---|---|
| | Coated pigment | Basic substance | Aqueous pigment dispersion | Particle size distribution (nm) | | | Filtration test (second) | Inkjet ink | | Evaluation results | |
| | | | | D1 | D50 | D99 | | | Diluent | Ejection properties | Water resistance |
| Example (A1-15) | (PA1-15) | Dimethylamino ethanol | (DPA1-15) | 38 | 79 | 187 | 29.2 | (IA1-15) | A | S | S |
| Example (A1-16) | (PA1-16) | Dimethylamino ethanol | (DPA1-16) | 46 | 88 | 195 | 25.7 | (IA1-16) | A | S | S |
| Example (A1-17) | (PA1-17) | Potassium hydroxide | (DPA1-17) | 52 | 125 | 295 | 28.3 | (IA1-17) | C | S | A |
| Example (A1-18) | (PA1-18) | Dimethylamino ethanol | (DPA1-18) | 10 | 46 | 171 | 22.5 | (IA1-18) | A | S | S |
| Example (A1-19) | (PA1-19) | Sodium hydroxide | (DPA1-19) | 15 | 52 | 188 | 29.5 | (IA1-19) | D | A | S |
| Example (A1-20) | (PA1-20) | Potassium hydroxide | (DPA1-20) | 20 | 68 | 192 | 32.0 | (IA1-20) | E | S | S |
| Example (A1-21) | (PA1-21) | N-ethyldiethanolamine | (DPA1-21) | 43 | 89 | 142 | 31.8 | (IA1-21) | A | S | S |
| Example (A1-22) | (PA1-22) | Sodium hydroxide | (DPA1-22) | 25 | 73 | 197 | 22.6 | (IA1-22) | B | A | S |
| Example (A1-23) | (PA1-23) | Potassium hydroxide | (DPA1-23) | 52 | 132 | 321 | 24.5 | (IA1-23) | C | S | A |
| Example (A1-24) | (PA1-24) | Dimethylamino ethanol | (DPA1-24) | 48 | 109 | 188 | 26.4 | (IA1-24) | D | S | S |
| Example (A1-25) | (PA1-25) | Dimethylamino ethanol | (DPA1-25) | 52 | 115 | 176 | 27.2 | (IA1-25) | E | S | A |
| Example (A1-26) | (PA1-26) | Potassium hydroxide | (DPA1-26) | 54 | 105 | 188 | 28.5 | (IA1-26) | A | S | A |
| Example (A1-27) | (PA1-27) | Sodium hydroxide | (DPA1-27) | 42 | 108 | 179 | 24.3 | (IA1-27) | B | S | S |
| Example (A1-28) | (PA1-28) | Sodium hydroxide | (DPA1-28) | 25 | 89 | 144 | 25.8 | (IA1-28) | C | S | A |
| Example (A1-29) | (PA1-29) | Potassium hydroxide | (DPA1-29) | 28 | 56 | 182 | 22.9 | (IA1-29) | D | S | S |
| Example (A1-30) | (PA1-30) | Dimethylamino ethanol | (DPA1-30) | 45 | 98 | 162 | 29.4 | (IA1-30) | E | S | S |

(continued)

| Table 7 | Production of aqueous pigment dispersion | | | Evaluation results of aqueous pigment dispersion | | | | Evaluation of inkjet ink (A1) | | | |
|---|---|---|---|---|---|---|---|---|---|---|---|
| | Coated pigment | Basic substance | Aqueous pigment dispersion | Particle size distribution (nm) | | | Filtration test (second) | Inkjet ink | | Evaluation results | |
| | | | | D1 | D50 | D99 | | | Diluent | Ejection properties | Water resistance |
| Example (A1-31) | (PA1-31) | Potassium hydroxide | (DPA1-31) | 44 | 89 | 148 | 34.2 | (IA1-31) | A | S | S |
| Example (A1-32) | (PA1-32) | Dimethylamino ethanol | (DPA1-32) | 9 | 30 | 158 | 33.0 | (IA1-32) | B | S | A |
| Example (A1-33) | (PA1-33) | Sodium hydroxide | (DPA1-33) | 11 | 44 | 166 | 31.0 | (IA1-33) | C | A | S |
| Example (A1-34) | (PA1-34) | Dimethylamino ethanol | (DPA1-34) | 27 | 67 | 178 | 27.3 | (IA1-34) | A | S | S |
| Example (A1-35) | (PA1-35) | Dimethylamino ethanol | (DPA1-35) | 42 | 104 | 324 | 25.6 | (IA1-35) | D | S | S |
| Example (A1-36) | (PA1-36) | Sodium hydroxide | (DPA1-36) | 44 | 86 | 185 | 29.3 | (IA1-36) | E | A | S |
| Example (A1-37) | (PA1-37) | Dimethylamino ethanol | (DPA1-37) | 52 | 99 | 176 | 25.3 | (IA1-37) | A | S | S |
| Example (A1-38) | (PA1-38) | Dimethylamino ethanol | (DPA1-38) | 28 | 82 | 164 | 24.6 | (IA1-38) | A | S | S |
| Example (A1-39) | (PA1-39) | Sodium hydroxide | (DPA1-39) | 45 | 98 | 162 | 27.0 | (IA1-39) | B | A | S |
| Example (A1-40) | (PA1-40) | Dimethylamino ethanol | (DPA1-40) | 53 | 116 | 261 | 30.2 | (IA1-40) | C | S | S |
| Example (A1-41) | (PA1-41) | Dimethylamino ethanol | (DPA1-41) | 24 | 55 | 158 | 40.2 | (IA1-41) | A | S | S |
| Example (A1-42) | (PA1-42) | Dimethylamino ethanol | (DPA1-42) | 22 | 48 | 124 | 45.2 | (IA1-42) | A | S | S |
| Example (A1-43) | (PA1-43) | Dimethylamino ethanol | (DPA1-43) | 46 | 66 | 174 | 48.6 | (IA1-43) | A | S | S |
| Example (A1-44) | (PA1-44) | Dimethylamino ethanol | (DPA1-44) | 27 | 58 | 165 | 42.3 | (IA1-44) | A | S | S |

(continued)

| Table 7 | Production of aqueous pigment dispersion | | | Evaluation results of aqueous pigment dispersion | | | | Evaluation of inkjet ink (A1) | | | |
|---|---|---|---|---|---|---|---|---|---|---|---|
| | Coated pigment | Basic substance | Aqueous pigment dispersion | Particle size distribution (nm) | | | Filtration test (second) | Inkjet ink | | Evaluation results | |
| | | | | D1 | D50 | D99 | | | Diluent | Ejection properties | Water resistance |
| Comparative Example (A1-1) | (PA1-45) | Dimethylamino ethanol | (DPA1-45) | 25 | 78 | 202 | 13.8 g | (IA1-45) | A | B | S |
| Comparative Example (A1-2) | (PA1-46) | Dimethylamino ethanol | (DPA1-46) | 38 | 52 | 134 | 12.5 g | (IA 1-46) | A | B | S |
| Comparative Example (A1-3) | (PA1-47) | Dimethylamino ethanol | (DPA1-47) | 25 | 52 | 158 | 13.5 g | (IA1-47) | A | B | S |
| Comparative Example (A1-4) | (PA1-48) | Dimethylamino ethanol | (DPA1-48) | 29 | 102 | 258 | 10.2 g | (IA1-48) | A | B | S |
| Comparative Example (A1-5) | (PA1-49) | Dimethylamino ethanol | (DPA1-49) | Settled | | | 15.0 g | (IA1-49) | A | B | - |
| Comparative Example (A1-6) | (PA1-50) | Dimethylamino ethanol | (DPA-50) | 23 | 52 | 163 | 48.3 | (IA1-50) | A | S | B |

[Table 8]

| Table 8 | Coated pigment | Crosslinked pigment dispersion | Evaluation results | | |
|---|---|---|---|---|---|
| | | | Inkjet ink (A2) | Particle size distribution stability | Viscosity stability |
| Example (A2-1) | (PA1-1) | (CPA1-1) | (IA2-1) | S | S |
| Example (A2-2) | (PA1-2) | (CPA1-2) | (IA2-2) | S | S |
| Example (A2-3) | (PA1-3) | (CPA1-3) | (IA2-3) | S | S |
| Example (A2-4) | (PA1-4) | (CPA1-4) | (IA2-4) | S | S |
| Example (A2-5) | (PA1-5) | (CPA1-5) | (IA2-5) | S | S |
| Example (A2-6) | (PA1-6) | (CPA1-6) | (IA2-6) | S | S |
| Example (A2-7) | (PA1-7) | (CPA1-7) | (IA2-7) | S | S |
| Example (A2-8) | (PA1-8) | (CPA1-8) | (IA2-8) | S | S |
| Example (A2-9) | (PA1-9) | (CPA1-9) | (IA2-9) | S | S |
| Example (A2-10) | (PA1-10) | (CPA1-10) | (IA2-10) | S | S |
| Example (A2-11) | (PA1-11) | (CPA1-11) | (IA2-11) | S | S |
| Example (A2-12) | (PA1-12) | (CPA1-12) | (IA2-12) | S | S |
| Example (A2-13) | (PA1-13) | (CPA1-13) | (IA2-13) | S | S |
| Example (A2-14) | (PA1-14) | (CPA1-14) | (IA2-14) | S | S |
| Example (A2-15) | (PA1-15) | (CPA1-15) | (IA2-15) | S | S |
| Example (A2-16) | (PA1-16) | (CPA1-16) | (IA2-16) | S | S |
| Example (A2-17) | (PA1-17) | (CPA1-17) | (IA2-17) | S | S |
| Example (A2-18) | (PA1-18) | (CPA1-18) | (IA2-18) | S | S |
| Example (A2-19) | (PA1-19) | (CPA1-19) | (IA2-19) | S | S |
| Example (A2-20) | (PA 1-20) | (CPA1-20) | (IA2-20) | S | S |
| Example (A2-21) | (PA1-21) | (CPA1-21) | (IA2-21) | S | S |
| Example (A2-22) | (PA1-22) | (CPA1-22) | (IA2-22) | S | S |
| Example (A2-23) | (PA1-23) | (CPA1-23) | (IA2-23) | S | S |
| Example (A2-24) | (PA1-24) | (CPA1-24) | (IA2-24) | S | S |
| Example (A2-25) | (PA1-25) | (CPA1-25) | (IA2-25) | S | S |
| Example (A2-26) | (PA1-26) | (CPA1-26) | (IA2-26) | S | S |
| Example (A2-27) | (PA1-27) | (CPA1-27) | (IA2-27) | S | S |
| Example (A2-28) | (PA1-28) | (CPA1-28) | (IA2-28) | S | S |
| Example (A2-29) | (PA1-29) | (CPA1-29) | (IA2-29) | S | S |
| Example (A2-30) | (PA1-30) | (CPA1-30) | (IA2-30) | S | S |
| Example (A2-31) | (PA1-31) | (CPA1-31) | (IA2-31) | S | S |
| Example (A2-32) | (PA1-32) | (CPA1-32) | (IA2-32) | S | S |
| Example (A2-33) | (PA1-33) | (CPA1-33) | (IA2-33) | S | S |
| Example (A2-34) | (PA1-34) | (CPA1-34) | (IA2-34) | S | S |
| Example (A2-35) | (PA1-35) | (CPA1-35) | (IA2-35) | S | S |
| Example (A2-36) | (PA1-36) | (CPA1-36) | (IA2-36) | S | S |

(continued)

| Table 8 | Coated pigment | Crosslinked pigment dispersion | Evaluation results | | |
|---|---|---|---|---|---|
| | | | Inkjet ink (A2) | Particle size distribution stability | Viscosity stability |
| Example (A2-37) | (PA1-37) | (CPA1-37) | (IA2-37) | S | S |
| Example (A2-38) | (PA1-38) | (CPA1-38) | (IA2-38) | S | S |
| Example (A2-39) | (PA1-39) | (CPA1-39) | (IA2-39) | S | S |
| Example (A2-40) | (PA1-40) | (CPA1-40) | (IA2-40) | S | S |
| Example (A2-41) | (PA1-41) | (CPA1-41) | (IA2-41) | S | S |
| Example (A2-42) | (PA1-42) | (CPA1-42) | (IA2-42) | A | A |
| Example (A2-43) | (PA1-43) | (CPA1-43) | (IA2-43) | A | A |
| Example (A2-44) | (PA1-44) | (CPA1-44) | (IA2-44) | A | A |
| Comparative Example (A2-1) | (PA1-45) | (CPA1-45) | (IA2-45) | B | B |
| Comparative Example (A2-2) | (PA1-46) | (CPA1-46) | (IA2-46) | B | B |
| Comparative Example (A2-3) | (PA1-47) | (CPA1-47) | (IA2-47) | B | B |
| Comparative Example (A2-4) | (PA1-48) | (CPA1-48) | (IA2-48) | B | B |
| Comparative Example (A2-5) | (PA1-49) | (CPA1-49) | (IA2-49) | Settled | - |
| Comparative Example (A2-6) | (PA1-1) | (DPA11-1-2) | (IA2-50) | B | B |

[Table 9] (Coated pigments (PRQ-22) to (PRQ-28) are not according to the present invention)

| Table 9 | Pigment (X) | | | | Resin | | | | Non-volatile component (%) | Amount of resin for coating (%) |
|---|---|---|---|---|---|---|---|---|---|---|
| Coated pigment | C.I. No. | Product name | Manufacturer | Part | Resin 1 | | Resin 2 | | | |
| | | | | | Type | Part | Type | Part | | |
| PRQ-1 | PR122 | TonerMagenta E | Clariant Chemicals | 250.0 | RQ-1 | 87.5 | - | - | 30.5 | 27.8 |
| PRQ-2 | PR146 | PERMANENT CARMINE FBB02-JP | Clariant Chemicals | 250.0 | RQ-2 | 87.5 | - | - | 30.8 | 28.2 |
| PRQ-3 | PR150 | TOSHIKI RED 150TR | Tokyo Shikizai Industry Co., Ltd. | 250.0 | RQ-3 | 87.5 | - | - | 32.6 | 26.9 |
| PRQ-4 | PR170 | Brilliant Carmine 7014 | Sanvo Color Works, Ltd. | 250.0 | RQ-4 | 87.5 | - | - | 31.8 | 27.9 |
| PRQ-5 | PR122 | TonerMagenta E | Clariant Chemicals | 250.0 | RQ-5 | 87.5 | - | - | 29.8 | 28.4 |
| PRQ-6 | PR176 | Graphtol Carmine HF3C | Clariant Chemicals. | 250.0 | RQ-6 | 87.5 | - | - | 32.4 | 26.6 |
| PRQ-7 | PR177 | CINILEX RED SR3C | Cinic Chemicals | 250.0 | RQ-7 | 87.5 | - | - | 31.8 | 27.2 |
| PRQ-8 | PR179 | PERRINDO Maron 179 229-8801 | DIC | 250.0 | RQ-8 | 87.5 | - | - | 30.5 | 27.8 |

(continued)

| Table 9 | Pigment (X) | | | | Resin | | | | Non-volatile component (%) | Amount of resin for coating (%) |
|---|---|---|---|---|---|---|---|---|---|---|
| Coated pigment | C.I. No. | Product name | Manufacturer | Part | Resin 1 | | Resin 2 | | | |
| | | | | | Type | Part | Type | Part | | |
| PRQ-9 | PR184 | PERMANENT RUBINE F6B | Clariant Chemicals | 250.0 | RQ-9 | 87.5 | - | - | 30.9 | 27.6 |
| PRQ-10 | PR185 | NOVOPERM CARMINE HF4C | Clariant Chemicals | 250.0 | RQ-10 | 87.5 | - | - | 31.2 | 30.2 |
| PRQ-11 | PR254 | CINILEX DPP RED SR2P | Cinic Chemicals | 250.0 | RQ-11 | 87.5 | - | - | 32.2 | 29.8 |
| PRQ-12 | PR269 | Shimura Fast Red 1022 | DIC | 250.0 | RQ-12 | 87.5 | - | - | 30.4 | 28.8 |
| PRQ-13 | PR57:1 | Permanent Rubine L5B-01 | Clariant Chemicals | 250.0 | RQ-13 | 87.5 | - | - | 30.7 | 28.4 |
| PRQ-14 | PR48:3 | TCR48302 | Trust Chem Co., Ltd/ | 250.0 | RQ-14 | 87.5 | - | - | 31.5 | 27.9 |
| PRQ-15 | PV19 | Inkjet Magenta E5B02 | Clariant Chemicals | 250.0 | RQ-15 | 87.5 | - | - | 33.2 | 26.8 |
| PRQ-16 | PV23 | HOSTAFINE VIOLET RL | Clariant Chemicals | 250.0 | RQ-16 | 87.5 | - | - | 31.6 | 26.2 |
| PRQ-17 | PV32 | GRAPHTOL BORDO HF3R | Clariant Chemicals | 250.0 | RQ-5 | 87.5 | - | - | 30.9 | 28.4 |
| PRQ-18 | PB15:3 | LIONOL BLUE FG-7351 | Tovocolor Co., Ltd. | 250.0 | RQ-5 | 87.5 | - | - | 30.4 | 29.3 |
| PRQ-19 | PB15:4 | LIONOL BLUE FG-7400-G | Tovocolor Co., Ltd. | 250.0 | RQ-17 | 87.5 | - | - | 31.4 | 29.5 |
| PRQ-20 | PY12 | LIONOL YELLOW TCH1205 | Heubach Tovo Colour Pvt. Ltd. | 250.0 | RQ-18 | 87.5 | - | - | 30.5 | 30.2 |
| PRQ-21 | PY13 | PERMANENT YELLOW GR-01 | Clariant Chemicals | 250.0 | RQ-19 | 87.5 | - | - | 30.7 | 28.8 |
| PRQ-22 | PY14 | PERMANENT YELLOW GSO | Clariant Chemicals | 250.0 | RQ-20 | 87.5 | - | -- | 31.2 | 27.9 |
| PRQ-23 | PY74 | Hansa Yellow 5GX 01 | Clariant Chemicals | 250.0 | RQ-21 | 87.5 | - | - | 29.8 | 29.9 |
| PRQ-24 | PY83 | LIONOL YELLOW TT-1805G | Tovocolor Co., Ltd. | 250.0 | RQ-22 | 87.5 | - | - | 29.6 | 30.1 |
| PRQ-25 | PY93 | Cromophtal Yellow 3G | BASF | 250.0 | RQ-23 | 87.5 | - | - | 30.2 | 30.4 |
| PRQ-26 | PY109 | CINILEX YELLOW SQY | Cinic Chemicals | 250.0 | RQ-24 | 87.5 | - | -- | 30.4 | 29.4 |

(continued)

| Table 9 | Pigment (X) | | | | Resin | | | | Non-volatile component (%) | Amount of resin for coating (%) |
|---|---|---|---|---|---|---|---|---|---|---|
| Coated pigment | C.I. No. | Product name | Manufacturer | Part | Resin 1 | | Resin 2 | | | |
| | | | | | Type | Part | Type | Part | | |
| PRQ-27 | PY110 | CINILEX YELLOW SY2T | Cinic Chemicals | 250.0 | RQ-25 | 87.5 | - | - | 31.2 | 28.8 |
| PRQ-28 | PY120 | PV FAST YELLOW H2G | Clariant Chemicals | 250.0 | RQ-26 | 87.5 | - | - | 30.5 | 29.6 |

Hereinafter, the names and the notes in the table will be described.

(Names)

Joncryl690: Styrene (meth)acrylic resin (manufactured by BASF)
X-1: Styrene (meth)acrylic resin (manufactured by Seiko PMC Corporation)
SMA1440: Styrene maleic (anhydride) resin (manufactured by Cray Valley)

(Note)

(PRQ-84) was a pigment that was actually not coated with resin although it is categorized as a coated pigment.

(Note)

For the pigments for which a plurality of C.I. Nos. are described in the table ((PRQ-47) to (PRQ-74)), the coated pigments were produced using the plurality of pigments at the same time such that the parts by mass in the table were satisfied. For producing the coated pigment (PRQ-47), for example, a method similar to the method for producing the coated pigment (PRQ-1) was performed other than that 250 parts of Toner Magenta E was changed to 125 parts of Toner Magenta E and 125 parts of PERMANENT CARMINE FBB02-JP and they were used in combination in the production of the coated pigment (PRQ-1), thereby obtaining the coated pigment (PRQ-47). The coated pigments (PRQ-48) to (PRQ-74) were processed by a method similar to that for the coated pigment (PRQ-47).

(Inkjet printing ink)

(Evaluation of coated pigments (PA1-1) to (PA 1-50))

(Production of aqueous pigment dispersion)

[Example A1-1]

The coated pigment (PA1-1), deionized water, and dimethylamino ethanol of an equivalent amount calculated from an acid value and parts by mass of the resin contained in the coated pigment were weighed for neutralization such that 15 parts of pigment is contained in the coated pigment in 100 parts of aqueous pigment dispersion (DPA1-1), the mixture was stirred with a high-speed mixer at a liquid temperature of 70°C for 1 hour, and volatilized water was adjusted with deionized water, thereby obtaining 100 parts of aqueous pigment dispersion (DPA1-1). Particle size distribution of the obtained aqueous pigment dispersion was evaluated as particle size distribution of the coated pigment (PA1-1). The particle size distribution was measured using Nanotrac Wave (MicrotracBEL Corporation) by diluting the aqueous pigment dispersion with deionized water. As for the particle size distribution of the pigment dispersion (DPA1-1), d1 = 25 nm, d50 = 53 nm, and d99 = 160 nm (volume average particle diameters). Also, parts by mass of the pigment contained in the coated pigment was calculated by the following method.

$$\text{Parts by mass of the pigment contained in the coated pigment} = (1)\times(2)\div((2)+(3))$$

(1) Parts by mass of the non-volatile component in the coated pigment
(2) Parts by mass of the pigment (X) used when the coated pigment was produced
(3) Parts by mass of the resin used when the coated pigment was produced

Also, parts by mass of the resin contained in the coated pigment was calculated by the following method.

$$\text{Parts by mass of the resin contained in the coated pigment} = (1)\times(2)\div((2)+(3))$$

(1) Parts by mass of the non-volatile component in the coated pigment
(2) Parts by mass of the resin used when the coated pigment was produced
(3) Parts by mass of the pigment (X) used when the coated pigment was produced

Also, the parts by mass of a neutralization equivalent amount corresponding to an equivalent amount of dimethylamino ethanol was calculated by the following method.

$$\text{Parts by mass of dimethylamino ethanol} = ((1)\times(2)\div1000)\div(3)\times(4)$$

(1) Parts by mass of the resin contained in the coated pigment
(2) An acid value (mgKOH/g) of the resin contained in the coated pigment
(3) A molar mass of potassium hydroxide (56.11 g/mol)
(4) A molar mass of dimethylamino ethanol (89.14 g/mol)

[Examples A1-2 to A1-44 and Comparative Examples A1-1 to 4 and A1-6]

Aqueous pigment dispersions (DPA1-2) to (DPA1-48) and (DPA1-50) were obtained by a method similar to that for Example (A1-1) other than that coated pigments and basic substances were changed to the compositions described in Table 7. Particle size distribution was measured for the obtained pigment dispersions similarly to Example (A1-1). Results of the particle diameter distribution were as described in Table 7.

[Comparative Example A1-5]

5.3 parts of resin (A-2) and dimethylamino ethanol of a neutralization equivalent amount calculated from the acid value and parts by mass of the resin (A-2) were added, deionized water was further weighed, and the total amount of the solution was adjusted to 56.1 parts. Next, the mixture was stirred and mixed with a high-speed mixer for 1 hour while being warmed to 70°C, and the volatilized water was adjusted with deionized water, thereby obtaining an aqueous dispersion of the resin (A-2). 43.9 parts of the coated pigment (PA1-49 (actually uncoated pigment) was weighed from the obtained aqueous dispersion of the resin (A-2) and was stirred with a high-speed mixer for 1 hour at a liquid temperature of 70°C, and the volatilized water was adjusted with deionized water, thereby obtaining 100 parts by aqueous pigment dispersion (DPA1-49). Although particle size distribution was measured by a method similar to that in Example A1-1, the pigment was settled, and evaluation was not able to be conducted. As a measurement result, "Settled" was described in Table 7.

[Production of inkjet printing ink (A1)]

[Example A1-1]

26.7 parts of aqueous pigment dispersion (DPA1-1) and 73.3 parts of the following diluent A were stirred and mixed with a high-speed mixer at 500 rpm, thereby obtaining an inkjet printing ink (IA1-1).

(Diluent A)

Glycerin 10.0 parts

1,3-propanediol 15.0 parts
Surfynol DF110D (antifoaming agent manufactured by Air Products Japan K.K.) 0.5 parts

Proxel GXL (preservative manufactured by LONZA) 0.2 parts

Deionized water 47.6 parts

[Examples A1-2 to A1-44 and Comparative Examples A1-1 to A1-6]

Inkjet printing inks (IA1-2) to (IA1-50) were obtained by employing a composition and a method similar to that for Example (A1-1) other than that the blending in Example (A1-1) was changed to the compositions described in Table 7.

(Evaluation of aqueous pigment dispersion)

The obtained aqueous pigment dispersions were evaluated on the basis of the following items. Evaluation results were shown in Table 7.

(1) Filtration test

The amounts of coarse particles in the aqueous pigment dispersions were evaluated in filtration tests. The evaluation was conducted on the basis of a passing time of a specific amount of aqueous pigment dispersion through a 25 mmϕ filter made of glass fiber (manufactured by GF/B GE Health Care Life Science). In a case in which a large number of coarse particles were contained, clogging of the filter occurred, and a long passing time was observed. Also, in a case in which a larger number of coarse particles were contained, the filter was blocked, and the total amount of aqueous pigment dispersion cannot be filtered. A typical filter used for a route through which ink is supplied to an inkjet head is generally greater than 1 μm, and the concentration of a pigment in the inkjet printing ink is typically lower than that of the aqueous pigment dispersion, and it is possible to state that a sufficient effect was obtained if the aqueous pigment dispersion passed through the filtration by the test method. Specific evaluation conditions will be described below. A filter holder with a diameter of 25 mm (manufactured by ADVANTEC) on which a funnel with a 15 ml scale and 25 mmϕ filter made of glass fiber (manufactured by GF/B GE Health Care Life Science) was placed was placed on a suction vessel provided with a depressurization pump via a cock. The depressurization pump was operated using the cock such that the pressure in the suction vessel was not reduced. 15 g of aqueous pigment dispersion was weighed in the funnel. A time (second) taken for the total amount of aqueous pigment dispersion to pass through the filter was measured starting from pressure release of the pump and the suction vessel. The pressure in the suction vessel at this time was 0.05 MPa to 0.07 MPa. In a case in which the filtration filter was blocked within 60 seconds, and the aqueous pigment dispersion did not pass therethrough, the amount of aqueous pigment dispersion (g) remaining in the funnel was measured. Also, shorter passing time was evaluated as a more satisfactory result. In regard to samples that took 60 seconds or more to pass through the filter and the samples due to which the filter was blocked and the dispersion did not pass through the filtration paper, large number of coarse particles were contained, and unsatisfactory dispersibility was achieved.

For the samples that took 60 seconds or more to pass through the filter, the amounts (g) of dispersion on the filtration paper at the timing at which 60 seconds passed were measured. Also, for the samples due to which the filter was blocked and the total amount of dispersion did not pass through the filtration paper, the amounts (g) of dispersion on the filtration paper at the timing at which 60 seconds passed were measured. Results are shown in Table 7.

[Evaluation of inkjet printing ink (A1)]

The obtained inkjet printing ink (A1) was evaluated as follows. Results are shown in Table 7.

(1) Ejection properties

An inkjet printer with an inkjet head having a piezoelectric element mounted thereon was filled with the inkjet printing ink (A1) in an environment at 25°C, continuous printing was performed on 30 copy sheets (4024 manufactured by Xerox), and dot missing was observed. In regard to what % the number of dot missing nozzles occupied with respect to the total number of nozzles, this was evaluated based on the following:

0%: S, Satisfactory

Greater than 0% and equal to or less than 5%: A, available range
Greater than 5%: Not available in practical use

(2) Water resistance

An inkjet printer with an inkjet head having a piezoelectric element mounted thereon was filled with the inkjet printing ink (A1) in an environment at 25°C, printing was performed on a copy sheet (4024 manufactured by Xerox) using cyan, magenta, yellow, black, orange, green, violet, and white inks, the printed product was dipped into a tap water immediately after the printing under conditions at a temperature of 25°C and a humidity of 50%, and bleeding of the printed product was observed and evaluated on the basis of the following criteria.

No bleeding occurred in the printing after elapse of 1 hour from the dipping: S, satisfactory
Bleeding occurred in the printing10 minutes later and before 1hour after the dipping: A; available range
Bleeding occurred in the printing immediately after the dipping and before 10 minutes after the dipping: B; not available in practical use

[Table 10]

| Table 10 | Pigment (X) | | | | Resin | | | | Non-volatile component (%) | Amount of resin for coating (%) |
|---|---|---|---|---|---|---|---|---|---|---|
| Coated pigment | C.I. No. | Product name | Manufacturer | Parts | Resin 1 | | Resin 2 | | | |
| | | | | | Type | Parts | Type | Parts | | |
| PRQ-29 | PY138 | Paliotol Yellow D0960 | BASF | 250.0 | RQ-27 | 87.5 | - | - | 29.9 | 30.1 |
| PRQ-30 | PY139 | GRAPHTOL YELLOW H2R | Clariant Chemicals | 250.0 | RQ-28 | 87.5 | - | - | 31.2 | 27.9 |
| PRQ-31 | PY150 | Heuco Yellow 115002 | Haubach GmbH | 250.0 | RQ-29 | 87.5 | - | - | 30.5 | 28.1 |
| PRQ-32 | PY151 | HOSTAPERM YELLOW H4G | Clariant Chemicals | 250.0 | RQ-30 | 87.5 | - | - | 30.7 | 29.6 |
| PRQ-33 | PY154 | HOSTAPERM YELLOW H3G | Clariant Chemicals | 250.0 | RQ-31 | 87.5 | - | - | 3.9 | 28.4 |
| PRQ-34 | PY155 | INK JET YELLOW 4GC | Clariant Chemicals | 250.0 | RQ-5 | 87.5 | - | - | 31.2 | 27.7 |
| PRQ-35 | PY174 | PERMANENT YELLOW GRS 80 | Clariant Chemicals | 250.0 | RQ-3 | 87.5 | - | - | 31.5 | 26.5 |
| PRQ-36 | PY180 | NOVOPERM YELLOW P-HG | Clariant Chemicals | 250.0 | RQ-4 | 87.5 | - | - | 30.8 | 27.9 |
| PRQ-37 | PY185 | Paliotol Yellow D1155 | BASF | 250.0 | RQ-5 | 87.5 | - | - | 29.8 | 28.1 |
| PRQ-38 | PG7 | LIONOL GREEN 8930-I | Toyocolor Co., Ltd. | 250.0 | RQ-3 | 87.5 | - | - | 29.4 | 27.9 |
| PRQ-39 | PG36 | LIONOL GREEN 6Y-501 | Toyocolor Co., Ltd. | 250.0 | RQ-4 | 87.5 | - | - | 30.1 | 27.2 |
| PRQ-40 | PO36 | NOVOPERM ORANGE HL | Clariant Chemicals | 250.0 | RQ-5 | 87.5 | - | - | 30.6 | 26.9 |

(continued)

| Table 10 | Pigment (X) | | | | Resin | | | | Non-volatile component (%) | Amount of resin for coating (%) |
|---|---|---|---|---|---|---|---|---|---|---|
| Coated pigment | C.I. No. | Product name | Manufacturer | Parts | Resin 1 | | Resin 2 | | | |
| | | | | | Type | Parts | Type | Parts | | |
| PRQ-41 | PO38 | GRAPHTOL RED HFG | Clariant Chemicals | 250.0 | RQ-3 | 87.5 | - | - | 30.7 | 27.1 |
| PRQ-42 | PO43 | PV FAST ORANGE GRL | Clariant Chemicals | 250.0 | RQ-4 | 87.5 | - | - | 30.8 | 28.8 |
| PRQ-43 | PO64 | PV FAST ORANGE H2GL | Clariant Chemicals | 250.0 | RQ-3 | 87.5 | - | - | 31.2 | 28.2 |
| PRQ-44 | PO73 | Cinilex DPP Orange SJIC | Cinic Chemicals | 250.0 | RQ-5 | 87.5 | - | - | 30.9 | 28.4 |
| PRQ-45 | PB17 | Printex 35 | Orion Engineered Carbons | 250.0 | RQ-5 | 87.5 | - | - | 29.8 | 27.6 |
| PRQ-46 | PW6 | TIPAQUE CR-58-2 | Ishihara Sangyo Kaisha Ltd. | 250.0 | RQ-5 | 87.5 | - | - | 30.4 | 24.4 |
| PRQ-47 | R122/R146 | Toner Magenta E/ PERMANENT CARMINE FBB02-JP | Clariant Chemicals/Clariant Chemicals | 125.0/125.0 | RQ-5 | 87.5 | - | - | 30.6 | 28.2 |
| PRQ-48 | R122/R150 | Toner Magenta E/TOSHIKI RED 150TR | Clariant Chemicals/Tokyo Shikizai Industry Co., Ltd. | 125.0/125.0 | RQ-5 | 87.5 | - | - | 30.8 | 27.8 |
| PRQ-49 | PR122/PR176 | Toner Magenta E/Graphtol Carmine HF3C | Clariant Chemicals/Clariant | 125.0/125.0 | RQ-5 | 87.5 | - | - | 30.4 | 26.8 |

(continued)

| | | | | | | | | | | |
|---|---|---|---|---|---|---|---|---|---|---|
| | | | Chemicals | | | | | | | |
| PRQ-50 | PR122/PR185 | Toner Magenta E/ NOVOPERM CARMINE HF4C | Clariant Chemicals/Clariant Chemicals | 125.0/125.0 | RQ-5 | 87.5 | - | - | 30.6 | 27.1 |
| PRQ-51 | PR122/PR254 | Toner Magenta E/CINILEX DPP RED SR2P | Clariant Chemicals/Cinic Chemicals | 125.0/125.0 | RQ-5 | 87.5 | - | - | 30.5 | 27.4 |
| PRQ-52 | PR122/PR269 | Toner Magenta E/Shimura Fast Red 1022 | Clariant Chemicals/DIC | 125.0/125.0 | RQ-5 | 87.5 | - | - | 31.5 | 27.5 |
| PRQ-53 | PR122/PR57:1 | Toner Magenta E/Permanent Rubine L5B-01 | Clariant Chemicals/Clariant Chemicals | 125.0/125.0 | RQ-5 | 87.5 | - | - | 29.8 | 26.8 |
| PRQ-54 | PR122/PR48:3 | Toner Magenta E/TCR48302 | Clariant Chemicals/Trust Chem Co., Ltd. | 125.0/125.0 | RQ-5 | 87.5 | - | - | 30.6 | 26.9 |
| PRQ-55 | PR122/PV19 | Toner Magenta E/Inkjet Magenta E5B02 | Clariant Chemicals/Clariant Chemicals | 125.0/125.0 | RQ-5 | 87.5 | - | - | 30.8 | 26.8 |
| PRQ-56 | PR122/PV32 | Toner Magenta E/GRAPHTOL BORDO HF3R | Clariant Chemicals/Clariant Chemicals | 125.0/125.0 | RQ-5 | 87.5 | - | - | 31.5 | 27.2 |

The diluents in Table 7 will be described below.

(Diluent A)

| | |
|---|---|
| Glycerin | 10 parts |
| 1,3-propanediol | 15.0 parts |
| Surfynol DF110D (antifoaming agent manufactured by Air Products Japan K.K.) | 0.5 parts |
| Proxel GXL (preservative manufactured by LONZA) | 0.2 parts |
| Deionized water | 47.6 parts |

(Diluent B)

| | |
|---|---|
| Voncoat 4001 (manufactured by DIC) | 6.0 parts |
| Glycerin | 10.0 parts |
| Triethylene glycol | 25.0 parts |
| 2,2,4-trimethyl-1,3-pentanediol | 4.0 parts |
| PolyFox PF-151N (manufactured by OMNOVA) | 2.0 parts |
| Proxel LV (preservative manufactured by LONZA) | 0.2 parts |
| Triethanolamine | 0.1 parts |
| Deionized water | 26.0 parts |

(Diluent C)

| | |
|---|---|
| Hydran HW-940 (manufactured by DIC) | 7.0 parts |
| Glycerin | 6.0 parts |
| 3-methyl-1,3-butanediol | 19.0 parts |
| 2-ethyl-1,3-hexanediol | 2.0 parts |
| Zonyl FS-300 (manufactured by Dupont) | 2.5 parts |
| Proxel LV (preservative manufactured by LONZA) | 0.2 parts |
| 2-amino-2-ethyl-1,3-propanediol | 0.1 parts |
| Deionized water | 36.5 parts |

(Diluent D)

| | |
|---|---|
| Acrit WEM-321U (manufactured by Taisei Kako Co., Ltd.) | 7.9 parts |
| Glycerin | 7.5 parts |
| 1,3-butanediol | 22.5 parts |
| 2-ethyl-1,3-hexanediol | 4.0 parts |
| PolyFox PF-156A (manufactured by OMNOVA) | 3.3 parts |
| Proxel LV (preservative manufactured by LONZA) | 0.2 parts |
| 2-amino-2-ethyl-1,3-propanediol | 0.1 parts |
| Deionized water | 27.8 parts |

(Diluent E)

| | |
|---|---|
| Voncoat 4001 (manufactured by DIC) | 7.0 parts |
| Glycerin | 7.5 parts |
| Diethylene glycol | 22.5 parts |
| 2,2,4-trimethyl-1,3-pentanediol | 4.0 parts |
| PolyFox PF-151N (manufactured by OMNOVA) | 2.0 parts |
| Proxel LV (preservative manufactured by LONZA) | 0.2 parts |
| 2-amino-2-ethyl-1,3-propanediol | 0.1 parts |
| Deionized water | 30.0 parts |

In Table 7, the aqueous pigment dispersions in Examples (A1-1) to (A1-44) exhibited satisfactory results, and the coated pigments (PA1-1) to (PA1-44) exhibited excellent dispersibility of coarse particles. Meanwhile, the total amounts of coated pigments did not pass through the filter in the filtration test in Comparative Examples (A1-1) to (A1-5).

In Table 7, the inkjet printing inks in Examples (A1-1) to (A1-44) exhibited more excellent ejection properties than those in Comparative Examples (A1-1) to (A1-5). In particular, it was not possible to eject the inkjet printing ink using the inkjet printer in Comparative Example (A1-5). Also, printed products obtained using the inkjet printing inks in Examples (A1-1) to (A1-44) exhibited more excellent water resistance than that in Comparative Example (A1-6). In addition, since it was not possible to eject the inkjet printing ink using the inkjet printer with the inkjet head having the piezoelectric element mounted thereon and to produce a printed product in Comparative Example (A1-5), water resistance was not evaluated.

(Production of crosslinked dispersion)

[Example A2-1]

The coated pigment (PA1-1) and deionized water were weighed such that the amount of the pigment contained in the coated pigment was 20 parts per 100 parts of aqueous pigment dispersion (DPA1-1'), potassium hydroxide of an equivalent amount calculated from parts by mass and the acid value of the resin contained in the weighed coated pigment (PA1-1) was further weighed, the mixture was stirred at a liquid temperature of 70°C with a high-speed mixer for 1 hour, and volatilized water was adjusted with deionized water, thereby obtaining 100 parts of aqueous pigment dispersion (DPA1-1'). Denacol EX321 (an epoxy crosslinking agent manufactured by Nagase ChemteX Corporation, non-volatile component: 100%, epoxy equivalent amount: 140 g/eq) was added as a crosslinking agent to 100 parts of aqueous pigment dispersion (DPA1-1') such that the molar number of potassium hydroxide used when the aqueous pigment dispersion (DPA1-1') was produced and the molar number of the epoxy group were equivalent, the mixture was stirred at 70°C for about 2 hours, and volatized water was adjusted with deionized water, thereby obtaining a crosslinked pigment dispersion (CPA1-1'). Further, the crosslinked pigment dispersion (CPA1-1') was adjusted using deionized water such that 15 parts of pigment was contained in the coated pigment per 100 parts of crosslinked pigment dispersion (CPA1-1'), thereby obtaining 100 parts of crosslinked pigment dispersion (CPA1-1).

In addition, parts by mass of the pigment contained in the coated pigment and parts by mass of the resin contained in the coated pigment were calculated by methods similar to those in Example (A1-1).

Also, parts by mass of potassium hydroxide was calculated by the following method.

$$\text{Parts by mass of potassium hydroxide} = (1)\times(2)\div 1000$$

(1) Parts by mass of the resin contained in the coated pigment
(2) Acid value (mgKOH/g) of the resin contained in the coated pigment

[Examples A2-2 to A2-44 and Comparative Examples A2-1 to A2-4]

Crosslinked pigment dispersions (CPA1-2 to CPA1-48) were obtained by a method similar to that in Example A2-1 other than that compositions were changed to those shown in Table 8.

[Comparative Example A2-5]

7.0 parts of resin (A-2), potassium hydroxide of an equivalent amount calculated from the acid value of the resin (A-2), and deionized water of the amount with which the total amount became 34.5 parts were weighed, the mixture was stirred and mixed with a high-speed mixer for 1 hour while being warmed to 70°C, and the volatized water was adjusted with deionized water, thereby obtaining an aqueous dispersion of the resin (A-2). 58.5 parts of coated pigment (PA1-49) (the pigment that was actually not coated) was weighed in the obtained aqueous dispersion of the resin (A-2), the mixture was stirred at a liquid temperature of 70°C with a high-speed mixer for 1 hour, and the volatized water was adjusted with deionized water, thereby obtaining 100 parts of aqueous pigment dispersion (DPA1-49'). Further, Denacol EX321 (an epoxy crosslinking agent manufactured by Nagase ChemteX Corporation, non-volatile component: 100%, epoxy equivalent amount: 140 g/eq) was added as a crosslinking agent to 100 parts of aqueous pigment dispersion (DPA1-49') such that the molar number of potassium hydroxide used when the aqueous pigment dispersion (DPA 1-49') was produced and the molar number of the epoxy group were equivalent, the mixture was stirred at 70°C for about 2 hours, and volatized water was adjusted with deionized water, thereby obtaining a crosslinked pigment dispersion (CPA1-49'). Further, the crosslinked pigment dispersion (CPA1-49') was adjusted using deionized water such that 15 parts of pigment (that was actually not coated) was contained in the coated pigment per 100 parts of crosslinked pigment dispersion (CPA1-49'), thereby obtaining 100 parts of crosslinked pigment dispersion (CPA1-49). Also, for parts by mass of the pigment contained in the coated pigment, the non-volatile component in the coated pigment (PA1-49) was set to parts by mass of the pigment.

[Comparative Example A2-6]

An aqueous pigment dispersion was produced by a method similar to that in Example (A1-1) other than that dimethylaminoethanol was changed to potassium hydroxide, thereby obtaining an aqueous pigment dispersion (DPA1-1-2) that was not subjected to a treatment with a crosslinking agent.

[Production of inkjet printing ink (A2)]

[Example A2-1]

For obtaining 100 parts of inkjet printing ink, the crosslinked pigment dispersion (CPA1-1) of the amount such that 4 parts of pigment was contained in the coated pigment in the inkjet printing ink, 16.0 parts of 1,2-hexanediol, 16.0 parts of 1,2-butanediol, 0.5 parts of Surfynol DF110D (antifoaming agent manufactured by Air Products Japan K.K.), 0.2 parts of Proxel GXL (preservative manufactured by LONZA), and deionized water was stirred and mixed with a high-speed mixer at 500 rpm, thereby obtaining an inkjet printing ink (IA2-1).

[Examples A2-2 to A2-44 and Comparative Examples A2-1 to A2-6]

Inkjet printing inks (IA2-2) to (IA2-50) were obtained by a method similar to that in Example (A2-1) other than that the crosslinked pigment dispersion (CPA1-1) described in Example (A2-1) was changed to the crosslinked pigment dispersions (CPA1-2) to (CPA -1-49) shown in Table 8 and to the aqueous pigment dispersion (DPA1-1-2) that was not crosslinked.

[Evaluation of inkjet printing ink (A2)]

The obtained inkjet printing ink (A2) was evaluated as follows. Results are shown in Table 8.

(Particle size distribution stability)

Particle size distribution of the obtained inkjet printing ink (A2) was measured using Nanotrac Wave (manufactured by (MicrotracBEL Corporation) by diluting the inkjet printing ink (A2) with deionized water such that a loading index ranges from 15 to 20 (volume average particle diameters). Further, the inkjet printing ink was stored in an incubator at 70°C for 1 week, particle size distribution was similarly measured to obtain change rates. Evaluation criteria were as follows.

S: A rate of change in particle size distribution (D50) before and after storage at 70°C for 1 week was less than ±10% (satisfactory)
A: A rate of change in particle size distribution (D50) before and after storage at 70°C for 1 week was equal to or

greater than ±10% and less than ±20% (no problems in practical use)

B: A rate of change in particle size distribution (D50) before and after storage at 70°C for 1 week was equal to or greater than ±20% (not available in practical use)

(Viscosity stability)

The viscosity of the produced inkjet printing ink (A2) was measured using an E-type viscometer ("ELD-type viscometer" manufactured by Toki Sangyo Co., Ltd.) under conditions at 25°C and at a rotation frequency of 20 rpm. Further, the inkjet printing ink (A2) was stored in an incubator at 70°C for 1 week, the viscosity was similarly measured, and change rates were obtained. Evaluation criteria were as follows.

S: A rate of change in viscosity before and after storage at 70°C for 1 week was less than ±10% (satisfactory)

A: A rate of change in viscosity before and after storage at 70°C for 1 week was equal to or greater than ±10% and less than ±20% (no problems in practical use)

B: A rate of change in viscosity before and after storage at 70°C for 1 week was equal to or greater than ±20% (defective)

[Table 11]

| Table 11 | Pigment (X) | | Resin | | | | | | Non-volatile component (%) | Amount of resin for coating (%) |
|---|---|---|---|---|---|---|---|---|---|---|
| Coated pigment | C.I. No. | Product name | Manufacturer | Parts | Resin 1 | | Resin 2 | | | |
| | | | | | Type | Parts | Type | Parts | | |
| PRQ-57 | PV32/PR146 | GRAPHTOL BORDO HF3R/ PERMANENT CARMINE FBB02-JP | Clariant Chemicals/ Clariant Chemicals | 125.0/125.0 | RQ-5 | 87.5 | - | - | 29.8 | 28.2 |
| PRQ-58 | PV32/PR150 | GRAPHTOL BORDO HF3R/ TOSHIKI RED 150TR | Clariant Chemicals/ Tokyo Shikizai Industry Co., Ltd. | 125.0/125.0 | RQ-5 | 87.5 | - | - | 30.6 | 26.4 |
| PRQ-59 | PV32/PR176 | GRAPHTOL BORDO HF3R/ Graphtol Carmine HF3C | Clariant Chemicals/ Clariant Chemicals | 125.0/125.0 | RQ-5 | 87.5 | - | - | 29.9 | 26.2 |
| PRQ-60 | PV32/PR185 | GRAPHTOL BORDO HF3R/ NOVOPERM CARMINE HF4C | Clariant Chemicals/ Clariant Chemicals | 125.0/125.0 | RQ-5 | 87.5 | - | - | 28.8 | 27.2 |
| PRQ-61 | PV32/PR254 | GRAPHTOL BORDO HF3R/ CINILEX DPP RED SR2P | Clariant Chemicals/ Cinic Chemicals | 125.0/125.0 | RQ-5 | 87.5 | - | - | 30.5 | 27.6 |
| PRQ-62 | PV32/PR269 | GRAPHTOL BORDO HF3R/ Shimura Fast Red 1022 | Clariant Chemicals/DIC | 125.0/125.0 | RQ-5 | 87.5 | - | - | 30.6 | 26.8 |
| PRQ-63 | PV32/PR57:1 | GRAPHTOL BORDO HF3R/ Permanent Rubine L5B-01 | Clariant Chemicals/ Clariant Chemicals | 125.0/125.0 | RQ-5 | 87.5 | - | - | 30.1 | 27.1 |
| PRQ-64 | PV32/PR48:3 | GRAPHTOL BORDO HF3R/TCR48302 | Clariant Chemicals/ Trust Chem Co., Ltd. | 125.0/125.0 | RQ-5 | 87.5 | - | - | 30.8 | 26.9 |
| PRQ-65 | PV32/PV19 | GRAPHTOL BORDO HF3R/ Inkjet Magenta E5b02 | Clariant Chemicals/ Clariant Chemicals | 125.0/125.0 | RQ-5 | 87.5 | - | - | 32.6 | 27.2 |
| PRQ-66 | PY 109/PY 110 | CINILEX YELLOW SQY/ CINILEX YELLOW SY2T | Cinic Chemicals/Cinic Chemicals | 125.0/125.0 | RQ-5 | 87.5 | - | - | 30.7 | 28.1 |
| PRQ-67 | PO73/PY12 | Cinilex DPP Orange SJIIC/ LIONOL YELLOW TCH 1205 | Cinic Chemicals/ Heubach Toyo Colour Pvt. Ltd. | 125.0/125.0 | RQ-5 | 87.5 | - | - | 30.5 | 26.2 |

(continued)

| Table 11 | Pigment (X) | | Resin | | | | | | Non-volatile component (%) | Amount of resin for coating (%) |
|---|---|---|---|---|---|---|---|---|---|---|
| Coated pigment | C.I. No. | Product name | Manufacturer | Parts | Resin 1 | | Resin 2 | | | |
| | | | | | Type | Parts | Type | Parts | | |
| PRQ-68 | PO73/PY14 | Cinilex DPP Orange SJ1C/ PERMANENT YELLOW GSO | Cinic Chemicals/ Clariant Chemicals | 125.0/125.0 | RQ-5 | 87.5 | - | - | 30.1 | 27.4 |
| PRQ-69 | PO73/PY74 | Cinilex DPP Orange SJ1C/ Hansa Yellow 5GX 01 | Cinic Chemicals/ Clariant Chemicals | 125.0/125.0 | RQ-5 | 87.5 | - | - | 30.9 | 27.6 |
| PRQ-70 | PO73/PY155 | Cinilex DPP Orange SJ1C/INK JET YELLOW 40C | Cinic Chemicals/ Clariant Chemicals | 125.0/125.0 | RQ-5 | 87.5 | - | - | 32.2 | 28.9 |
| PRQ-71 | PO73/PY174 | Cinilex DPP Orange SJ1C/ PERMANENT YELLOW GRS 80 | Cinic Chemicals/ Clariant Chemicals | 125.0/125.0 | RQ-5 | 87.5 | - | - | 29.8 | 26.4 |
| PRQ-72 | PO73/PY180 | Cinilex DPP Orange SJ1C/ NOVOPERM YELLOW P-HG | Cinic Chemicals/ Clariant Chemicals | 125.0/125.0 | RQ-5 | 87.5 | - | - | 30.6 | 27.1 |
| PRQ-73 | PO73/PY185 | Cinilex DPP Orange SJ1C/ Paliotol Yellow D1155 | Cinic Chemicals/ BASF | 125.0/125.0 | RQ-5 | 87.5 | - | - | 30.7 | 26.4 |
| PRQ-74 | PB15:3/PB17 | LIONOL BLUE FG-7351/Printex 35 | Toyocolor Co., Ltd./ Orion Engineered Carbons | 125.0/125.0 | RQ-5 | 87.5 | - | - | 30.4 | 26.2 |
| PRQ-75 | PR122 | Toner Magenta E | Clariant Chemicals | 250.0 | RQ-5 | 200.0 | - | - | 28.6 | 48.8 |
| PRQ-76 | PB15:3 | LIONOL BLUE FG-7351 | Toyocolor Co., Ltd. | 250.0 | RQ-5 | 60.0 | Joncryl690 | 27.5 | 30.2 | 20.9 |
| PRQ-77 | PY180 | NOVOPERM YELLOW P-HG | Clariant Chemicals | 250.0 | RQ-5 | 60.0 | X-1 | 27.5 | 32.2 | 20.8 |
| PRQ-78 | PR122 | Toner Magenta E | Clariant Chemicals | 250.0 | RQ-5 | 60.0 | SMA1440 | 27.5 | 29.8 | 20.6 |
| PRQ-79 | PR122 | Toner Magenta E | Clariant Chemicals | 250.0 | RQ-5 | 37.5 | - | - | 28.6 | 9.5 |
| PRQ-80 | PR122 | Toner Magenta E | Clariant Chemicals | 250.0 | RQ-5 | 250.0 | - | - | 30.4 | 57.2 |

(continued)

| Table 11 | Pigment (X) | | Resin | | | | | | Non-volatile component (%) | Amount of resin for coating (%) |
|---|---|---|---|---|---|---|---|---|---|---|
| Coated pigment | C.I. No. | Product name | Manufacturer | Parts | Resin 1 | | Resin 2 | | | |
| | | | | | Type | Parts | Type | Parts | | |
| PRQ-81 | PB15:3 | LINOL BLUE FG-7351 | Toyocolor Co., Ltd. | 250.0 | - | - | Joncryl690 | 87.5 | 30.8 | 9.8 |
| PRQ-82 | PY180 | NOVOPERM YELLOW P-HG | Clariant Chemicals | 250.0 | - | - | X-1 | 87.5 | 30.4 | 9.5 |
| PRQ-83 | PR122 | Toner Magenta E | Clariant Chemicals | 250.0 | - | - | SMA1440 | 87.5 | 30.6 | 9.2 |
| PRQ-84 | PR122 | Toner Magenta E | Clariant Chemicals | 250.0 | - | - | - | - | 34.2 | 0 |

In Table 8, Examples (A2-1) to (A2-44) exhibited excellent stability of viscosities and particle size distribution after the inkjet printing inks were obtained, due to utilization of the crosslinking agent. Meanwhile, since no crosslinking agent was used in Comparative Example (A2-6), sufficient storage stability of particle size distribution and viscosity after the promotion with time was not able to be obtained. Also, since the piments were not sufficiently coated with the resins in Comparative Examples (A2-1) to (A2-4), sufficient crosslinking effects were not able to be obtained, and sufficient storage stability after promoting particle size distribution and viscosity with time was not able to be obtained. In Comparative Example (A2-5), since the pigment was settled, and it was not possible to produce a dispersion, "Settled" was described. Also, viscosity was not able to be measured.

(Evaluation of coated pigments (PRQ-1) to (PRQ-84))

[Example B1-1]

(Production of aqueous pigment dispersion (DPRQ-1))

The coated pigment (PRQ-1), the deionized water, and diethylamino ethanol of an equivalent amount calculated from the acid value and parts by mass of the resin contained in the coated pigment were weighed for neutralization such that 15 parts of pigment was contained in the coated pigment per 100 parts of aqueous pigment dispersion (DPRQ-1), the mixture was stirred at a liquid temperature of 70°C with a high-speed mixer for 1 hour, and volatilized water was adjusted with deionized water, thereby obtaining 100 parts of aqueous pigment dispersion (DPRQ-1). Particle size distribution of the obtained aqueous pigment dispersion was evaluated as particle size distribution of the coated pigment (PRQ-1). The particle size distribution was measured using Nanotrac Wave (manufactured by MicrotracBEL Corporation) by diluting the aqueous pigment dispersion with deionized water. The particle size distribution of the aqueous pigment dispersion (DPRQ-1) was d50 = 58 nm (volume average particle diameter).

Also, parts by mass of the pigment contained in the coated pigment, parts by mass of the resin contained in the coated pigment, and parts by mass corresponding to the equivalent amount of dimethylamino ethanol were calculated by a method similarly to that in Example (A1-1).

[Examples B1-2 to B1-78 and Comparative Examples B1-1 to B105]

Aqueous pigment dispersions (DPRQ-1) to (DPRQ-83) were obtained by a method similar to that in Example (B1-1) other than that the coated pigment (PRQ-1) in Example (B1-1) was changed to the coated pigments shown in Tables 12 to 13. For the obtained aqueous pigment dispersions, particle size distribution was measured similarly to Example (B1-1). In addition, measurement results are shown in Tables 12 and 13.

[Comparative Example B1-6]

5.3 parts of resin (RQ-5) and dimethylamino ethanol of a neutralization equivalent amount calculated from the acid value and parts by mass of (RQ-5) were added, and deionized water was further weighed such that the total amount of the solution was adjusted to 56.1 parts. Then, the mixture was stirred and mixed with a high-speed mixer for 1 hour while being warmed to 70°C, and volatized water was adjusted with deionized water, thereby obtaining an aqueous dispersion of the resin (RQ-5). 43.9 parts of the coated pigment (PRQ-84) (the pigment that was actually not coated) was weighed in the obtained aqueous dispersion of (RQ-5), the mixture was stirred at a liquid temperature of 70°C with a high-speed mixer for 1 hour, and volatized water was adjusted with deionized water, thereby obtaining 100 parts of aqueous pigment dispersion (DPRQ-84). Although particle size distribution was measured by a method similar to that in Example A1-1, the pigment was settled, and evaluation was not able to be conducted. In addition, the measurement result was described as "Settled" in Table 13.

[Method for producing inkjet printing ink {B1)]

[Example B1-1]

26.7 parts of aqueous pigment dispersion (DPRQ-1) and 7.3 parts of the diluent A described in the production of the inkjet printing ink (A1) were stirred and mixed with a high-speed mixer at 500 rpm, thereby obtaining an inkjet printing ink (IB1-1).

[Examples B1-2 to B1-78 and Comparative Examples B1-1 to B1-6]

Inkjet printing inks (IB1-2) to (IS1-$4) were obtained by employing compositions and methods similar to that in Example (B1-1) other than that the diluent was changed to those shown in Tables 12 and 13. Also, the diluents B to E described in Tables 12 to 13 were the compositions described in the production of the inkjet printing ink (A1).

(Evaluation of aqueous pigment dispersions)

For the obtained aqueous pigment dispersions, filtration tests were conducted, and ejection properties and water resistance were evaluated similarly to the above description. Evaluation results are shown in Tables 12 and 13.

[Table 12] (Examples (B1-22) to (B1-28) are not according to the present invention)

| Table 12 | Coated pigment | Evaluation of aqueous pigment dispersion | | | Evaluation of inkjet ink (B1) | | | |
|---|---|---|---|---|---|---|---|---|
| | | Aqueous pigment dispersion | Evaluation result | | Inkjet ink (B1) | | Evaluation result | |
| | | | D50 (nm) | Filtration test (seconds) | | Diluent | Ejection properties | Water resistance |
| Example (B1-1) | PRQ-1 | DPRQ-1 | 58 | 22.4 | (IB1-1) | A | S | S |
| Example (B1-2) | PRQ-2 | DPRQ-2 | 118 | 23.2 | (IB1-2) | C | S | S |
| Example (B1-3) | PRQ-3 | DPRQ-3 | 82 | 23.3 | (IB1-3) | B | S | S |
| Example (B1-4) | PRQ-4 | DPRQ-4 | 116 | 24.2 | (IB1-4) | E | S | S |
| Example (B1-5) | PRQ-5 | DPRQ-5 | 54 | 22.6 | (IB1-5) | A | S | S |
| Example (B1-6) | PRQ-6 | DPRQ-6 | 81 | 23.4 | (IB1-6) | D | S | S |
| Example (B1-7) | PRQ-7 | DPRQ-7 | 111 | 24.4 | (IB1-7) | A | S | S |
| Example (B1-8) | PRQ-8 | DPRQ-8 | 44 | 38.7 | (IB1-8) | C | A | S |
| Example (B1-9) | PRQ-9 | DPRQ-9 | 118.2 | 38.4 | (IB1-9) | B | A | S |
| Example (B1-10) | PRQ-10 | DPRQ-10 | 84.2 | 24.5 | (IB1-10) | E | S | S |
| Example (B1-11) | PRQ-11 | DPRQ-11 | 131 | 24.4 | (IB1-11) | A | S | S |
| Example (B1-12) | PRQ-12 | DPRQ-12 | 89.9 | 31.2 | (IB1-12) | D | S | S |
| Example (B1-13) | PRQ-13 | DPRQ-13 | 118 | 31.6 | (IB1-13) | A | S | S |
| Example (B1-14) | PRQ-14 | DPRQ-14 | 181 | 24.2 | (IB1-14) | C | S | S |
| Example (B1-15) | PRQ-15 | DPRQ-15 | 64.2 | 26.4 | (IB1-15) | B | S | S |

(continued)

| Table 12 | Coated pigment | Evaluation of aqueous pigment dispersion | | | Evaluation of inkjet ink (B1) | | | |
|---|---|---|---|---|---|---|---|---|
| | | Aqueous pigment dispersion | Evaluation result | | Inkjet ink (B1) | | Evaluation result | |
| | | | D50 (nm) | Filtration test (seconds) | | Diluent | Ejection properties | Water resistance |
| Example (B1-16) | PRQ-16 | DPRQ-16 | 138 | 31.1 | (IB1-16) | E | S | S |
| Example (B1-17) | PRQ-17 | DPRQ-17 | 74.5 | 22.3 | (IB1-17) | A | S | S |
| Example (B1-18) | PRQ-18 | DPRQ-18 | 92.2 | 24.5 | (IB1-18) | D | S | S |
| Example (B1-19) | PRQ-19 | DPRQ-19 | 116 | 23.6 | (IB1-19) | A | S | S |
| Example (B1-20) | PRQ-20 | DPRQ-20 | 100.2 | 22.1 | (IB1-20) | C | S | S |
| Example (B1-21) | PRQ-21 | DPRQ-21 | 98 | 24.5 | (IB1-21) | B | S | S |
| Example (B1-22) | PRQ-22 | DPRQ-22 | 110 | 25.2 | (IB1-22) | E | S | S |
| Example (B 1-23) | PRQ-23 | DPRQ-23 | 125 | 22.1 | (IB1-23) | A | S | S |
| Example (B1-24) | PRQ-24 | DPRQ-24 | 71 | 23.4 | (IB1-24) | D | S | S |
| Example (B 1-25) | PRQ-25 | DPRQ-25 | 128 | 23.6 | (IB1-25) | A | S | S |
| Example (B1-26) | PRQ-26 | DPRQ-26 | 111 | 24.7 | (IB1-26) | C | S | S |
| Example (B1-27) | PRQ-27 | DPRQ-27 | 113 | 22.3 | (IB1-27) | B | S | S |
| Example (B1-28) | PRQ-28 | DPRQ-28 | 102 | 24.2 | (IB1-28) | E | S | S |
| Example (B1-29) | PRQ-29 | DPRQ-29 | 105 | 23.6 | (IB 1-29) | A | S | A |
| Example (B1-30) | PRQ-30 | DPRQ-30 | 84 | 23.8 | (IB 1-30) | D | S | A |
| Example (B1-31) | PRQ-31 | DPRQ-31 | 65 | 22.6 | (IB1-31) | A | S | S |
| Example (B1-32) | PRQ-32 | DPRQ-32 | 96 | 24.2 | (IB1-32) | C | S | S |
| Example (B1-33) | PRQ-33 | DPRQ-33 | 88 | 23.7 | (IB 1-33) | B | S | S |
| Example (B1-34) | PRQ-34 | DPRQ-34 | 95 | 22.5 | (IB1-34) | E | S | S |
| Example (B1-35) | PRQ-35 | DPRQ-35 | 108 | 23.6 | (IB1-35) | A | S | S |

(continued)

| Table 12 | Coated pigment | Evaluation of aqueous pigment dispersion | | | Evaluation of inkjet ink (B1) | | | |
|---|---|---|---|---|---|---|---|---|
| | | Aqueous pigment dispersion | Evaluation result | | Inkjet ink (B1) | | Evaluation result | |
| | | | D50 (nm) | Filtration test (seconds) | | Diluent | Ejection properties | Water resistance |
| Example (B1-36) | PRQ-36 | DPRQ-36 | 98 | 24.2 | (IB1-36) | D | S | S |
| Example (B1-37) | PRQ-37 | DPRQ-37 | 105 | 25.5 | (IB1-37) | A | S | S |
| Example (B1-38) | PRQ-38 | DPRQ-38 | 84 | 24.6 | (IB 1-38) | C | S | S |
| Example (B1-39) | PRQ-39 | DPRQ-39 | 66 | 23.5 | (IB1-39) | B | S | S |
| Example (B1-40) | PRQ-40 | DPRQ-40 | 84 | 24.2 | (IB 1-40) | E | S | S |
| Example (B1-41) | PRQ-41 | DPRQ-41 | 96 | 26.2 | (IB1-41) | A | S | S |

[Table 13]

| Table 13 | Coated pigment | Evaluation of aqueous pigment dispersion | | | Evaluation of inkjet ink (B1) | | | |
|---|---|---|---|---|---|---|---|---|
| | | Aqueous pigment dispersion | Evaluation result | | Inkjet ink (B1) | | Evaluation result | |
| | | | D50 (nm) | Filtration test (seconds) | | Diluent | Ejection properties | Water resistance |
| Example (B1-42) | PRQ-42 | DPRQ-42 | 121 | 25.5 | (IB1-42) | D | S | S |
| Example (B1-43) | PRQ-43 | DPRQ-43 | 117 | 24.1 | (IB1-43) | A | S | S |
| Example (B1-44) | PRQ-44 | DPRQ-44 | 151 | 23.6 | (IB1-44) | C | S | S |
| Example (B1-45) | PRQ-45 | DPRQ-45 | 82 | 22.5 | (IB1-45) | B | S | S |
| Example (B1-46) | PRQ-46 | DPRQ-46 | 284 | 23.9 | (IB1-46) | E | S | S |
| Example (B1-47) | PRQ-47 | DPRQ-47 | 98 | 24.1 | (IB1-47) | A | S | S |
| Example (B1-48) | PRQ-48 | DPRQ-48 | 75 | 23.7 | (IB1-48) | A | S | S |
| Example (B1-49) | PRQ-49 | DPRQ-49 | 68 | 22.8 | (IB1-49) | A | S | S |
| Example (B1-50) | PRQ-50 | DPRQ-50 | 69 | 23.1 | (IB1-50) | A | S | S |

(continued)

| Table 13 | Coated pigment | Evaluation of aqueous pigment dispersion | | | Evaluation of inkjet ink (B1) | | | |
|---|---|---|---|---|---|---|---|---|
| | | Aqueous pigment dispersion | Evaluation result | | Inkjet ink (B1) | | Evaluation result | |
| | | | D50 (nm) | Filtration test (seconds) | | Diluent | Ejection properties | Water resistance |
| Example (B1-51) | PRQ-51 | DPRQ-51 | 95 | 23.6 | (IB1-51) | A | S | S |
| Example (B1-52) | PRQ-52 | DPRQ-52 | 79 | 22.9 | (IB1-52) | A | S | S |
| Example (B1-53) | PRQ-53 | DPRQ-53 | 88 | 24.1 | (IB1-53) | A | S | S |
| Example (B1-54) | PRQ-54 | DPRQ-54 | 115 | 23.6 | (IB1-54) | A | S | S |
| Example (B1-55) | PRQ-55 | DPRQ-55 | 66 | 22.8 | (IB 1-55) | A | S | S |
| Example (B1-56) | PRQ-56 | DPRQ-56 | 69 | 24.2 | (IB1-56) | A | S | S |
| Example (B1-57) | PRQ-57 | DPRQ-57 | 96 | 23.6 | (IB 1-57) | A | S | S |
| Example (B1-58) | PRQ-58 | DPRQ-58 | 89 | 23.8 | (IB 1-58) | A | S | S |
| Example (B1-59) | PRQ-59 | DPRQ-59 | 79.5 | 22.9 | (IB1-59) | A | S | S |
| Example (B1-60) | PRQ-60 | DPRQ-60 | 78.6 | 23.1 | (IB 1-60) | A | S | S |
| Example (B1-61) | PRQ-61 | DPRQ-61 | 105 | 24.6 | (IB1-61) | A | S | S |
| Example (B1-62) | PRQ-62 | DPRQ-62 | 85.2 | 21.5 | (IB1-62) | A | S | S |
| Example (B1-63) | PRQ-63 | DPRQ-63 | 95 | 21.9 | (IB1-63) | A | S | S |
| Example (B1-64) | PRQ-64 | DPRQ-64 | 119 | 22.7 | (IB1-64) | A | S | S |
| Example (B1-65) | PRQ-65 | DPRQ-65 | 71 | 23.8 | (IB1-65) | A | S | S |
| Example (B1-66) | PRQ-66 | DPRQ-66 | 113 | 23.4 | (IB 1-66) | A | S | S |
| Example (B1-67) | PRQ-67 | DPRQ-67 | 123 | 22.9 | (IB 1-67) | A | S | S |
| Example (B1-68) | PRQ-68 | DPRQ-68 | 118 | 24.5 | (IB 1-68) | A | S | S |
| Example (B1-69) | PRQ-69 | DPRQ-69 | 132 | 25.2 | (IB1-69) | A | S | S |
| Example (B1-70) | PRQ-70 | DPRQ-70 | 117 | 23.6 | (IB1-70) | A | S | S |

(continued)

| Table 13 | Coated pigment | Evaluation of aqueous pigment dispersion | | | Evaluation of inkjet ink (B1) | | | |
|---|---|---|---|---|---|---|---|---|
| | | Aqueous pigment dispersion | Evaluation result | | Inkjet ink (B1) | | Evaluation result | |
| | | | D50 (nm) | Filtration test (seconds) | | Diluent | Ejection properties | Water resistance |
| Example (B1-71) | PRQ-71 | DPRQ-71 | 126 | 23.8 | (IB1-71) | A | S | S |
| Example (B1-72) | PRQ-72 | DPRQ-72 | 131 | 22.4 | (IB1-72) | A | S | S |
| Example (B1-73) | PRQ-73 | DPRQ-73 | 124 | 24.9 | (IB1-73) | A | S | S |
| Example (B1-74) | PRQ-74 | DPRQ-74 | 91 | 23.8 | (IB1-74) | A | S | S |
| Example (B1-75) | PRQ-75 | DPRQ-75 | 58 | 40.2 | (IB 1-75) | A | A | A |
| Example (B1-76) | PRQ-76 | DPRQ-76 | 54 | 44.2 | (IB1-76) | A | A | S |
| Example (B1-77) | PRQ-77 | DPRQ-77 | 64 | 45.1 | (IB1-77) | A | A | S |
| Example (B1-78) | PRQ-78 | DPRQ-78 | 56 | 43.2 | (IB1-78) | A | A | S |
| Comparative Example (B1-1) | PRQ-79 | DPRQ-79 | 110 | 13 g | (IB1-79) | A | B | S |
| Comparative Example (B1-2) | PRQ-80 | DPRQ-80 | 54 | 48.2 | (IB 1-80) | A | A | B |
| Comparative Example (B1-3) | PRQ-81 | DPRQ-81 | 71 | 5 g | (IB1-81) | A | B | S |
| Comparative Example (B1-4) | PRQ-82 | DPRQ-82 | 49 | 7 g | (IB1-82) | A | B | S |
| Comparative Example (B1-5) | PRQ-83 | DPRQ-83 | 51 | 2 g | (IB1-83) | A | B | S |
| Comparative Example (B1-6) | PRQ-84 | DPRQ-84 | Settled | 15 g | (IB1-84) | A | B | Not performed |

The Diluents in the tables were similar to the compositions described in the production of the inkjet printing ink (A1).

The aqueous pigment dispersions in Examples (B1-1) to (B1-78) in the tables exhibited satisfactory results in the coarse particle amount test while the aqueous pigment dispersions were blocked in the coarse particle amount test in Comparative Examples (B1-1) and (B1-3) to (B1-6), and the coated pigments (PRQ-1) to (PRQ-78) exhibited excellent dispersibility of coarse particles.

On the basis of the results in Tables 12 and 13, the inkjet printing ink in Examples (B1-1) to (B1-78) exhibited

more excellent ejection properties than those in Comparative Examples (B1-1), and (B1-3) to (B1-6). In particular, it was not possible to eject the inkjet printing ink from an inkjet printer in Comparative Example (B1-6). Also, printed products obtained using the inkjet printing inks in Example (B1-1) to (B1-78) exhibited more excellent water resistance than that in Comparative Example (B1-2). In addition, since it was not possible to eject the inkjet printing ink in Comparative Example (B1-6) using an inkjet printer with an inkjet head having a piezoelectric element mounted thereon and to produce a recorded product, water resistance was not evaluated.

(Production of crosslinked dispersion)

[Example B2-1]

The coated pigment (PRQ-1) and deionized water were weighed such that 20 parts of pigment was contained in the coated pigment per 100 parts of aqueous pigment dispersion (DPRQ-1'), potassium hydroxide of an equivalent amount calculated from parts by mass and the acid value of the resin contained in the weighed coated pigment (PRQ-1) was further weighed, the mixture was stirred at a liquid temperature of 70°C with a high-speed mixer for 1 hour, and volatilized water was adjusted with deionized water, thereby obtaining 100 parts of aqueous pigment dispersion (DPRQ-1'). Denacol EX321 (an epoxy crosslinking agent manufactured by Nagase ChemteX Corporation, non-volatile component: 100%, epoxy equivalent amount: 140 g/eq) was added as a crosslinking agent to 100 parts of aqueous pigment dispersion (DPRQ-1') such that the molar number of potassium hydroxide used when the aqueous pigment dispersion (DPRQ-1') was produced and the molar number of the epoxy group were equivalent, the mixture was stirred at 70°C for about 2 hours, and volatized water was adjusted with deionized water, thereby obtaining a crosslinked pigment dispersion (CPRQ-1'). Further, the crosslinked pigment dispersion (CPRQ-1') was adjusted using deionized water such that 15 parts of pigment was contained in the coated pigment per 100 parts of crosslinked pigment dispersion (CPRQ-1'), thereby obtaining 100 parts of crosslinked pigment dispersion (CPRQ-1).

In addition, parts by mass of the pigment contained in the coated pigment and parts by mass of the resin contained in the coated pigment were calculated by a method similar to that in Example (A1-1). Also, parts by mass of potassium hydroxide was calculated by a method in Example (A2-1).

[Examples B2-2 to B2-78 and Comparative Examples B2-1 to B2-5]

Crosslinked pigment dispersions (CPRQ-2 to CPRQ-83) were obtained by a method similar to that in Example (B2-1) other than that compositions were changed to those shown in Tables 14 and 15.

[Comparative Example B2-6]

7.0 parts of resin (RQ-5), potassium hydroxide of an equivalent amount calculated from an acid value of (RQ-5), and deionized water with which the total amount was 34.5 parts were weighed, the mixture was stirred and mixed with a high-speed mixer for 1 hour while being warmed to 70°C, and volatized water was adjusted with deionized water, thereby obtaining an aqueous dispersion of the resin (RQ-5). 58.5 parts of coated pigment (PRQ-84) (the pigment that was actually not coated) was weighed in the obtained aqueous dispersion of the resin (RQ-5), the mixture was stirred at a liquid temperature of 70°C with a high-speed mixer for 1 hour, and the volatized water was adjusted with deionized water, thereby obtaining 100 parts of aqueous pigment dispersion (DPRQ-84'). Further, Denacol EX321 (an epoxy crosslinking agent manufactured by Nagase ChemteX Corporation, non-volatile component: 100%, epoxy equivalent amount: 140 g/eq) was added as a crosslinking agent to 100 parts of aqueous pigment dispersion (DPRQ-84') such that the molar number of potassium hydroxide used when the aqueous pigment dispersion (DPRQ-84') was produced and the molar number of the epoxy group were equivalent, the mixture was stirred at 70°C for about 2 hours, and volatized water was adjusted with deionized water, thereby obtaining a crosslinked pigment dispersion (CPRQ-84'). Further, the crosslinked pigment dispersion (CPRQ-84') was adjusted using deionized water such that 15 parts of pigment (that was actually not coated) was contained in the coated pigment per 100 parts of crosslinked pigment dispersion (CPRQ-84'), thereby obtaining 100 parts of crosslinked pigment dispersion (CPRQ-84). Also, for parts by mass of the pigment contained in the coated pigment, the non-volatile component in PRQ-84 was set to parts by mass of the pigment.

[Comparative Example B2-7]

An aqueous pigment dispersion was produced by a method similar to that in (B1-5) other than that dimethylamino ethanol was changed to potassium hydroxide, thereby obtaining an aqueous pigment dispersion (DPRQ-5-2) that was not subjected to a treatment with a crosslinking agent.

[Production of inkjet printing ink (B2)]

[Example B2-1]

For obtaining 100 parts of inkjet printing ink, the crosslinked pigment dispersion (CPRQ-1), 16.0 parts of 1,2-hexanediol, 16.0 parts of 1,2-butanediol, 0.5 parts of Surfynol DF110D (antifoaming agent manufactured by Air Products Japan K.K.), 0.2 parts of Proxel GLX (preservative manufactured by LONZA), and deionized water were stirred and mixed with a high-speed mixer at 500 rpm such that 4 parts of pigment was contained in the coated pigment in the inkjet printing ink, thereby obtaining an inkjet printing ink (IB2-1).

[Examples B2-2 to B2-78 and Comparative Examples B2-1 to B2-7]

Inkjet printing inks (IB2-2) to (IB2-85) were obtained by a method similar to that in Example (B2-1) other than that the crosslinked pigment dispersion (CPRQ-1) described in Example (B2-1) was changed to the crosslinked pigment dispersions (CPRQ-2) to (CPRQ-84) shown in Tables 14 and 15 and the aqueous pigment dispersion (DPRQ-5-2) that was not crosslinked.

[Evaluation of inkjet printing ink (B2)

The obtained inkjet printing ink (B2) was evaluated as follows. Results are shown in Tables 14 and 15.

(Particle size distribution stability)

Particle size distribution of the produced inkjet printing ink (B2) was measured using Nanotrac Wave (manufactured by (MicrotracBEL Corporation) by diluting the inkjet printing ink (B2) with deionized water such that a loading index ranges from 15 to 20 (volume average particle diameters). Further, the inkjet printing ink (B2) was stored in an incubator at 70°C for 1 week, particle size distribution was similarly measured, and change rates were obtained. Evaluation criteria were as follows.

S: A rate of change in particle size distribution (D50) before and after storage at 70°C for 1 week was less than ±10% (satisfactory)

A: A rate of change in particle size distribution (D50) before and after storage at 70°C for 1 week was equal to or greater than ±10% and less than ±20% (no problems in practical use)

B: A rate of change in particle size distribution (D50) before and after storage at 70°C for 1 week was equal to or greater than ±20% (defective)

(Viscosity stability)

The viscosity of the produced inkjet printing ink (B2) was evaluated similarly to the above description.

[Table 14] (Examples (B2-22) to (B2-28) are not according to the present invention)

| Table 14 | Coated pigment | Crosslinked pigment dispersion | Evaluation results of (B2) | | |
|---|---|---|---|---|---|
| | | | Inkjet ink (B2) | Particle size distribution stability | Viscosity stability |
| Example (B2-1) | PRQ-1 | CPRQ-1 | (B2-1) | S | S |
| Example (B2-2) | PRQ-2 | CPRQ-2 | (B2-2) | S | S |
| Example (B2-3) | PRQ-3 | CPRQ-3 | (B2-3) | S | S |
| Example (B2-4) | PRQ-4 | CPRQ-4 | (B2-4) | S | S |
| Example (B2-5) | PRQ-5 | CPRQ-5 | (B2-5) | S | S |
| Example (B2-6) | PRQ-6 | CPRQ-6 | (B2-6) | S | S |
| Example (B2-7) | PRQ-7 | CPRQ-7 | (B2-7) | S | S |

(continued)

| Table 14 | Coated pigment | Crosslinked pigment dispersion | Evaluation results of (B2) | | |
|---|---|---|---|---|---|
| | | | Inkjet ink (B2) | Particle size distribution stability | Viscosity stability |
| Example (B2-8) | PRQ-8 | CPRQ-8 | (B2-8) | A | A |
| Example (B2-9) | PRQ-9 | CPRQ-9 | (B2-9) | A | A |
| Example (B2-10) | PRQ-10 | CPRQ-10 | (B2-10) | S | S |
| Example (B2-11) | PRQ-11 | CPRQ-11 | (B2-11) | S | S |
| Example (B2-12) | PRQ-12 | CPRQ-12 | (B2-12) | A | A |
| Example (B2-13) | PRQ-13 | CPRQ-13 | (B2-13) | A | A |
| Example (B2-14) | PRQ-14 | CPRQ-14 | (B2-14) | S | S |
| Example (B2-15) | PRQ-15 | CPRQ-15 | (B2-15) | S | S |
| Example (B2-16) | PRQ-16 | CPRQ-16 | (B2-16) | A | A |
| Example (B2-17) | PRQ-17 | CPRQ-17 | (B2-17) | S | S |
| Example (B2-18) | PRQ-18 | CPRQ-18 | (B2-18) | S | S |
| Example (B2-19) | PRQ-19 | CPRQ-19 | (B2-19) | S | S |
| Example (B2-20) | PRQ-20 | CPRQ-20 | (B2-20) | S | S |
| Example (B2-21) | PRQ-21 | CPRQ-21 | (B2-21) | S | S |
| Example (B2-22) | PRQ-22 | CPRQ-22 | (B2-22) | S | S |
| Example (B2-23) | PRQ-23 | CPRQ-23 | (B2-23) | S | S |
| Example (B2-24) | PRQ-24 | CPRQ-24 | (B2-24) | S | S |
| Example (B2-25) | PRQ-25 | CPRQ-25 | (B2-25) | S | S |
| Example (B2-26) | PRQ-26 | CPRQ-26 | (B2-26) | S | S |
| Example (B2-27) | PRQ-27 | CPRQ-27 | (B2-27) | S | S |
| Example (B2-28) | PRQ-28 | CPRQ-28 | (B2-28) | S | S |
| Example (B2-29) | PRQ-29 | CPRQ-29 | (B2-29) | S | S |
| Example (B2-30) | PRQ-30 | CPRQ-30 | (B2-30) | S | S |
| Example (B2-31) | PRQ-31 | CPRQ-31 | (B2-31) | S | S |
| Example (B2-32) | PRQ-32 | CPRQ-32 | (B2-32) | S | S |
| Example (B2-33) | PRQ-33 | CPRQ-33 | (B2-33) | S | S |
| Example (B2-34) | PRQ-34 | CPRQ-34 | (B2-34) | S | S |
| Example (B2-35) | PRQ-35 | CPRQ-35 | (B2-35) | S | S |
| Example (B2-36) | PRQ-36 | CPRQ-36 | (B2-36) | S | S |
| Example (B2-37) | PRQ-37 | CPRQ-37 | (B2-37) | S | S |
| Example (B2-38) | PRQ-38 | CPRQ-38 | (B2-38) | S | S |
| Example (B2-39) | PRQ-39 | CPRQ-39 | (B2-39) | S | S |
| Example (B2-40) | PRQ-40 | CPRQ-40 | (B2-40) | S | S |
| Example (B2-41) | PRQ-41 | CPRQ-41 | (B2-41) | S | S |
| Example (B2-42) | PRQ-42 | CPRQ-42 | (B2-42) | S | S |
| Example (B2-43) | PRQ-43 | CPRQ-43 | (B2-43) | S | S |

[Table 15]

| Table 15 | Coated pigment | Crosslinked pigment dispersion | Evaluation results of (B2) | | |
|---|---|---|---|---|---|
| | | | Inkjet ink (B2) | Particle size distribution stability | Viscosity stability |
| Example (B2-44) | PRQ-44 | CPRQ-44 | (B2-44) | S | S |
| Example (B2-45) | PRQ-45 | CPRQ-45 | (B2-45) | S | S |
| Example (B2-46) | PRQ-46 | CPRQ-46 | (B2-46) | S | S |
| Example (B2-47) | PRQ-47 | CPRQ-47 | (B2-47) | S | S |
| Example (B2-48) | PRQ-48 | CPRQ-48 | (B2-48) | S | S |
| Example (B2-49) | PRQ-49 | CPRQ-49 | (B2-49) | S | S |
| Example (B2-50) | PRQ-50 | CPRQ-50 | (B2-50) | S | S |
| Example (B2-51) | PRQ-51 | CPRQ-51 | (B2-51) | S | S |
| Example (B2-52) | PRQ-52 | CPRQ-52 | (B2-52) | S | S |
| Example (B2-53) | PRQ-53 | CPRQ-53 | (B2-53) | S | S |
| Example (B2-54) | PRQ-54 | CPRQ-54 | (B2-54) | S | S |
| Example (B2-55) | PRQ-55 | CPRQ-55 | (B2-55) | S | S |
| Example (B2-56) | PRQ-56 | CPRQ-56 | (B2-56) | S | S |
| Example (B2-57) | PRQ-57 | CPRQ-57 | (B2-57) | S | S |
| Example (B2-58) | PRQ-58 | CPRQ-58 | (B2-58) | S | S |
| Example (B2-59) | PRQ-59 | CPRQ-59 | (B2-59) | S | S |
| Example (B2-60) | PRQ-60 | CPRQ-60 | (B2-60) | S | S |
| Example (B2-61) | PRQ-61 | CPRQ-61 | (B2-61) | S | S |
| Example (B2-62) | PRQ-62 | CPRQ-62 | (B2-62) | S | S |
| Example (B2-63) | PRQ-63 | CPRQ-63 | (B2-63) | S | S |
| Example (B2-64) | PRQ-64 | CPRQ-64 | (B2-64) | S | S |
| Example (B2-65) | PRQ-65 | CPRQ-65 | (B2-65) | S | S |
| Example (B2-66) | PRQ-66 | CPRQ-66 | (B2-66) | S | S |
| Example (B2-67) | PRQ-67 | CPRQ-67 | (B2-67) | S | S |
| Example (B2-68) | PRQ-68 | CPRQ-68 | (B2-68) | S | S |
| Example (B2-69) | PRQ-69 | CPRQ-69 | (B2-69) | S | S |
| Example (B2-70) | PRQ-70 | CPRQ-70 | (B2-70) | S | S |
| Example (B2-71) | PRQ-71 | CPRQ-71 | (B2-71) | S | S |
| Example (B2-72) | PRQ-72 | CPRQ-72 | (B2-72) | S | S |
| Example (B2-73) | PRQ-73 | CPRQ-73 | (B2-73) | S | S |
| Example (B2-74) | PRQ-74 | CPRQ-74 | (B2-74) | S | S |
| Example (B2-75) | PRQ-75 | CPRQ-75 | (B2-75) | S | S |
| Example (B2-76) | PRQ-76 | CPRQ-76 | (B2-76) | A | A |
| Example (B2-77) | PRQ-77 | CPRQ-77 | (B2-77) | A | A |
| Example (B2-78) | PRQ-78 | CPRQ-78 | (B2-78) | A | A |
| Comparative Example (B2-1) | PRQ-79 | CPRQ-79 | (B2-79) | B | B |

(continued)

| Table 15 | Coated pigment | Crosslinked pigment dispersion | Evaluation results of (B2) | | |
|---|---|---|---|---|---|
| | | | Inkjet ink (B2) | Particle size distribution stability | Viscosity stability |
| Comparative Example (B2-2) | PRQ-80 | CPRQ-80 | (B2-80) | S | S |
| Comparative Example (B2-3) | PRQ-81 | CPRQ-81 | (B2-81) | B | B |
| Comparative Example (B2-4) | PRQ-82 | CPRQ-82 | (B2-82) | B | B |
| Comparative Example (B2-5) | PRQ-83 | CPRQ-83 | (B2-83) | B | B |
| Comparative Example (B2-6) | PRQ-84 | CPRQ-84 | (B2-84) | Settled | - |
| Comparative Example (B2-7) | PRQ-5 | DPRQ-5442 | (B2-85) | B | B |

On the basis of the results in Tables 14 and 15, excellent stability of the viscosity and particle size distribution after the inkjet printing inks were obtained by using the crosslinking agent in Examples (B2-1) to (B2-78). Meanwhile, since no crosslinking agent was used in Comparative Example (B2-7), sufficient storage stability was not able to be obtained after promoting the particle size distribution and the viscosity with time. In addition, since the pigments were not sufficiently coated with the resin in Comparative Examples (B2-1) and (B2-3) to (B2-5), sufficient crosslinking effects were not able to be obtained, and sufficient storage stability of the particle size distribution and the viscosity after the promotion with time was not able to be obtained. In Comparative Example (B2-6), since the pigment was settled, and it was not possible to produce a dispersion, "Settled" was described. Also, the viscosity was not able to be measured.

(Electrostatic image developing toner)

An electrostatic image developing toner was evaluated. The coated pigments that were dried and were formed in the form of powder, aqueous pigment dispersions, and crosslinked pigment dispersions were used to produce the toner.

(Evaluation of coated pigments (PA1-1) to (PA 1-50))

(Production of coated pigment (dry))

[Examples A3-1 to A3-4 and Comparative Example A3-1]

The coated pigments (Wet) (PA1-1) to (PA 1-49) shown in Table 16 were stored at 40°C at a reduced pressure (-0.9 MPa) for 24 hours, thereby obtaining coated pigments (dry) (PA1-1D) to (PA1-49D). The obtained dry pigments were observed with a scanning-type electron microscope. Also, the obtained coated pigments (dry) are shown in Table 16.

[Table 16]

| Table 16 | Coated pigment (dry) | Before drying | | After drying | | |
|---|---|---|---|---|---|---|
| | | Coated pigment (wet) | Non-volatile component | Non-volatile component | Concentration of pigment in non-volatile component | Scanning-type electron microwave |
| Example (A3-1) | (PA1-1D) | (PA1-1) | 30.2% | 98.8% | 74.0% | No particle aggregation was observed. The numerical value of the average particle diameter was maintained. |
| Example (A3-2) | (PA1-16D) | (PAI-16) | 32.8% | 98.9% | 74.0% | Same applies |

(continued)

| Table 16 | Coated pigment (dry) | Before drying | | After drying | | |
|---|---|---|---|---|---|---|
| | | Coated pigment (wet) | Non-volatile component | Non-volatile component | Concentration of pigment in non-volatile component | Scanning-type electron microwave |
| Example (A3-3) | (PA1-34D) | (PA1-34) | 31.5% | 99.1% | 74.0% | Same applies |
| Example (A3-4) | (PA1-40D) | (PA 1-40) | 29.8% | 98.7% | 74.0% | Same applies |
| Comparative Example (A3-1) | (PA1-49D) | (PA1-49) | 32.4% | 98.7% | 100.0% | Same applies |

<Method for producing toner (A)>

[Example A3-1]

(Production of magenta toner A1)

(1) Preparation of magenta conc. A1

The following materials (total of 3 kg) were mixed and kneaded in a pressurizing kneader under conditions at a setting temperature of 150°C and for 10 minutes and were then extracted. Further, kneading was performed with three rolls at a roll temperature of 95°C, and the mixture was cooled and then roughly ground to sizes of equal to or less than 10 mm, thereby obtaining a magenta cone. A1 that is a magenta coloring agent dispersion.

| | |
|---|---|
| Toner binding resin 1 | 60.0 parts |
| Pigment (coated pigment) (PA1-1D) | 40.0 parts |

* Toner binding resin 1: A thermoplastic polyester resin including a terephthalic acid, an isophthalic acid, a trimellitic acid, propylene oxide-added Bisphenol A, and ethylene glycol
Acid value: 10 mgKOH/g, OH value: 43 mgKOH/g, Tg: 58°C, softening temperature Ts: 65°C, true density 1.32 g/cc, molecular weight Mw: 28200, Mn: 2500

(2) Preparation of magenta toner mother particles A1

Next, the following materials (total of 5 kg) were mixed with a Henschel mixer with a volume of 20 L (3000 rpm, 3 minutes), melting and kneading were then performed with a two-axis kneading extruder (PCM30) with a supply amount of 6 kg/hr and at an ejection temperature of 145°C, the mixture was cooled and solidified, was then roughly ground with a hammer mill, was then finely ground with an I-type jet mill (IDS-2 type), and was classified into grades (DS-2 type), thereby obtaining a graded product with a weight average particle diameter of about 8.3 μm (magenta toner mother particles A1).

| | |
|---|---|
| Toner binding resin 1 | 77.0 parts |
| Magenta Cone. A1 | 20.0 parts |
| Charge control agent (a zinc salt compound of 3,5-di-tert-butylsalicylic acid) | 1.0 parts |
| Mold releasing agent (Sazole wax H1N4, melting point: 110°C) | 2.0 parts |

(3) Preparation of magenta toner A1

Next, 100 parts of the graded product obtained as described above, 1.0 parts of hydrophobic silica (NY-50 manufactured by Japan Aerosil), and 0.5 parts of hydrophobic silica (R-974 manufactured by Japan Aerosil) were mixed

with a 10 L Henschel mixer (3000 rpm, 3 minutes) and were subjected to a sieving process (150 mesh), and a magenta toner A1 was thus obtained.

[Example A3-2]

(Production of cyan toner A1)

A cyan cone. A1 that was a cyan coloring agent dispersion, cyan toner mother particles A1 that were graded products with a weight average particle diameter of about 8.2 μm, and a cyan toner A1 were obtained similarly to Example (A3-1) other than that the coated pigment (PA1-16D) was used instead of the coated pigment (PA1-1D) in Example (A3-1).

[Example A3-3]

(Production of yellow toner A1)

A yellow conc. A1 that was a yellow coloring agent dispersion, yellow toner mother particles A1 that were graded products with a weight average particle diameter of about 8.6 μm, and a yellow toner A1 were obtained similarly to Example (A3-1) other than that the coated pigment (PA1-34D) was used instead of the coated pigment (PA1-1D) in Example (A3-1).

[Example A3-4]

(Production of black toner A1)

A blank conc. A1 that was a black coloring agent dispersion (carbon black), black toner mother particles A1 that were graded products with a weight average particle diameter of about 8.4 μm, and a black toner A1 were obtained similarly to Example (A3-1) other than that the coated pigment (PA1-40D) was used instead of the coated pigment (PA1-1D) in Example (A3-1).

[Example A3-5]

(Production of magenta toner A2)

The aqueous pigment dispersion (DPA1-1) was used, thereby obtaining a magenta toner A2 by the following method.

(1) Preparation of dispersion
3 parts of sodium dodecylbenzenesulfonate (Neopelex G-15 manufactured by Kao Corporation) was added to 97 parts of aqueous pigment dispersion (DPA1-1), and the mixture was stirred with a high-speed mixer at 500 rpm for 1 hour, thereby obtaining a dispersion of a magenta pigment.
(2) Preparation of polymer emulsion
320 parts of ester wax emulsion (SELOSOLR-586 manufactured by Chukyo Yushi Co., Ltd.) as a non-volatile component and 14,000 parts of deionized water were placed in a reaction container, the temperature was raised to 90°C, and 3 parts of sodium dodecylbenzenesulfonate, 2,500 parts of styrene, 650 parts of n-butylacrylate, 170 parts of methacrylic acid, 330 parts of 8% aqueous solution of hydrogen peroxide, and 330 parts of 8% aqueous solution of ascorbic acid were added thereto. The reaction was continued at 90°C for 7 hours, thereby obtaining a polymer emulsion.
(3) Production of magenta toner mother particles A2
16.5 parts of the aforementioned dispersion of the magenta pigment was poured into 150 parts of the aforementioned polymer emulsion, and the mixture was mixed and stirred. 40 parts of 0.5% solution of aluminum sulfate was poured thereto while being stirred. The temperature was raised to 60°C, stirring was continued for 2 hours, and filtration, washing, and drying were performed, thereby obtaining magenta toner mother particles A2 according to the invention.
(4) Preparation of magenta toner A2
Then, 100 parts by mass of magenta toner mother particles A2 obtained as described above, 1.0 parts by mass of hydrophobic silica (NY-50 manufactured by Japan Aerosil), and 0.5 parts by mass of hydrophobic silica (R-974 manufactured by Japan Aerosil) were mixed with a 10 L Henschel mixer (3,000 rpm, 3 minutes) and were subjected to a sieving process (150 mesh), and a magenta toner A2 was thus obtained.

[Example A3-6]

(Production of magenta toner A4)

The crosslinked pigment dispersion (CPA1-1) was used to obtain a magenta toner A4 by the following method.

(1) Preparation of dispersion
3 parts of sodium dodecylbenzenesulfonate (Neopelex G-15 manufactured by Kao Corporation) was added to 97 parts of crosslinked pigment dispersion (CPA1-1), and the mixture was stirred with a high-speed mixer at 500 rpm for 1 hour, thereby obtaining a dispersion of a magenta pigment.
(2) Preparation of polymer emulsion
320 parts of ester was emulsion as a non-volatile component (SELOSOLR-586 manufactured by Chukyo Yushi Co., Ltd.) and 14,000 parts of deionized water were placed in a reactor, the temperature was raised to 90°C, and 5 parts of sodium dodecylbenzenesulfonate, 2,500 parts of styrene, 650 parts of n-butylacrylate, 170 parts of methacrylic acid, 330 parts of 8% aqueous solution of hydrogen peroxide, and 330 parts of 8% aqueous solution of ascorbic acid were added thereto. The reaction was continued at 90°C for 7 hours, thereby obtaining a polymer emulsion.
(3) Production of magenta toner mother particles A4
16.5 parts of the aforementioned dispersion of a magenta pigment was poured into 150 parts of the aforementioned polymer emulsion, and the mixture was mixed and stirred. 40 parts of 0.5% solution of aluminum sulfate was poured thereto while being stirred. The temperature was raised to 60°C, stirring was continued for 2 hours, and filtration, washing, and drying were performed, thereby obtaining magenta toner mother particles A4 according to the invention.
(4) Preparation of magenta toner A4
Next, 100 parts by mass of magenta toner mother particles A4 obtained as described above, 1.0 parts by mass of hydrophobic silica (NY-50 manufactured by Japan Aerosil), and 0.5 parts by mass of hydrophobic silica (R-974 manufactured by Japan Aerosil) were mixed with a 10 L Henschel mixer (3,000 rpm, 3 minutes) and were subjected to a sieving process (150 mesh; aperture of 0.1 mm), and a magenta toner A5 was thus obtained.

[Comparative Example A3-1]

Production of (magenta toner A3)

A magenta conc. A3 that was a magenta coloring agent dispersion, magenta toner mother particles A3 that were graded products with a weight average particle diameter of about 8.6 μm, and a magenta toner A3 were obtained similarly to Example (A3-1) other than that the coated pigment (PA1-49D) (that was actually not coated) was used instead of the coated pigment (PA1-1D) in Example (A3-1) and the composition was changed to 70.4 parts of toner binding resin 1 and 29.6 parts of coated pigment (PA1-49D).

<Evaluation of toner (A)>

The obtained toners were evaluated by the following methods. Results are shown in Table 17.

(Image concentration)

A color printer (a modified machine of N6100 manufactured by Cashio Computer Co., Ltd.) was used, and actual printing test was conducted under environmental conditions of 23°C/50%RH. As one of image producing conditions employed at this time, the image was output with a single-color toner for evaluation. In regard to the obtained images, initial image concentration and image concentration after 3,000 copies were printed were measured using a Macbeth photometer. If both the initial concentration and the concentration after 3,000 copies were printed were equal to or greater than 1.3 (equal to or greater than 1.2 for a yellow toner), the concentration was considered to be applicable.

(Fogging evaluation)

Initial fogging and fogging after 3,000 copies were printed were measured by measuring reflectance with a photovolt similarly to the image concentration evaluation. Values that were equal to or less than 1.0% were evaluated as satisfactory values.

(Appearance evaluation)

Scattering of the toner particles in the device and contamination of the obtained images were visually determined after 3,000 copies were printed similarly to the image concentration evaluation. The scattering of the toner in the device was determined by checking whether or not scattering toner was present around a developing device and a photosensitive drum. In a case in which toner scattering was observed, image contamination that accompanied the scattering occurred.

(Charge amount)

Charge amounts of the graded products and the toners were measured as follows. 19.0 g of iron powder carrier manufactured by Powdertech (product name: MF-70) and 1.0 go of graded product or toner after drying were weighed in a 50 cc polyethylene bottle, the bottle was shake 5 times, and mixing was performed for 30 minutes under a condition that an actual measurement value of a rotation frequency was 230 (120 for the polyethylene bottle body). A charge amount of a sample obtained after the mixing was measured with a blow-off charge amount measurement device manufactured by Toshiba Chemical Corporation. At this time, the maximum numerical value was red at a blow pressure of 1 $kgf/cm^2$ and for a measurement time of 20 seconds using a 400-mesh. Also, conditions of the measurement environment were set to 23°C/50%RH.

[Table 17]

| Table 17 | | Coated pigment | | Image concentration | | Fogging evaluation | | Appearance evaluation | | Charge amount | |
|---|---|---|---|---|---|---|---|---|---|---|---|
| | | Coated pigment (dry) | Aqueous pigment dispersion or crosslinked pigment dispersion | Initial state | After 3,000 copies were printed | Initial state | After 3,000 copies were printed | Scattering in device | Image contamination | Graded product | Toner |
| Example (A3-1) | Magenta toner A1 | (PA1-1D) | | 1.36 | 1.36 | 0.5 | 0.6 | Not present | Not present | -39.1 | -38.3 |
| Example (A3-2) | Cyan toner A1 | (PA1-16D) | | 1.38 | 1.39 | 0.5 | 0.5 | Not present | Not present | -40.1 | -37.6 |
| Example (A3-3) | Yellow toner A1 | (PA1-34D) | | 1.28 | 1.30 | 0.4 | 0.5 | Not present | Not present | -38.1 | -37.1 |
| Example (A3-4) | Black toner A1 | (PA1-40D) | | 1.43 | 1.41 | 0.4 | 0.6 | Not present | Not present | -39.2 | -39.9 |
| Example (A3-5) | Magenta toner A2 | | Aqueous pigment dispersion (DPA1-1) | 1.38 | 1.37 | 0.5 | 0.4 | Not present | Not present | -38.1 | -37.6 |
| Example (A3-6) | Magenta toner A4 | | Crosslinked pigment dispersion (CPA1-1) | 1.39 | 1.40 | 0.3 | 0.3 | Not present | Not present | -40.0 | -39.8 |
| Comparative Example (A3-1) | Magenta toner A3 | (PA1-49D) | | 1.30 | 1.15 | 0.4 | 1.2 | Present | Present | -35.1 | -30.1 |

On the basis of the results in Table 17, image concentration was high and stable in the image test from the initial state to the printing of 3,000 copies, only a small amount of fogging was observed in a white base part, and no scattering in the device was observed in Examples A3-1 to A3-6. Also, it was possible to recognize that there were no variations in charge amount due to a color difference for both the graded products (toner mother particles) and the toners even in a case in which the pigment was changed and that it was easy to adjust a charge level in designing a process color.

(Evaluation of coated pigments (PRQ-1) to (PRQ-84))

(Production of coated pigment (dry)

[Examples B3-1 to B3-4 and Comparative Example B3-1]

The respective coated pigments (wet) (PRQ-5) to (PRQ-84) shown in Table 18 were stored at 40°C at a reduced pressure (-0.9 MPa) for 24 hours, thereby obtaining coated pigments (dry) (PRQ-5D) to (PRQ-84D). The obtained dry pigments were observed with a scanning-type electron microscope. In addition, the obtained coated pigments (dry) are shown in Table 18.

[Table 18] (Example (B3-3) is not according to the present invention)

| Table 18 | Coated pigment (dry) | Before drying | | After drying | | |
|---|---|---|---|---|---|---|
| | | Coated pigment (wet) | Concentration of solid content | Concentration of solid content | Concentration of pigment in solid content | Scanning-type electron microscope |
| Example (B3-1) | (PRQ-5D) | (PRQ-5) | 30.2% | 98.7% | 74.0% | No aggregation of particles was observed. The numerical value of the average particle diameter was maintained. |
| Example (B3-2) | (PRQ-18D) | (PRQ-18) | 32.8% | 98.9% | 74.0% | Same applies. |
| Example (B3-3) | (PRQ-23D) | (PRQ-23) | 31.5% | 99.0% | 74.0% | Same applies. |
| Example (B3-4) | (PRQ-45D) | (PRQ-45) | 29.8% | 98.8% | 74.0% | Same applies. |
| Comparative Example (B3-1) | (PRQ-84D) | (PRQ-84) | 32.4% | 98.6% | 100.0% | Same applies. |

<Method for producing toner (B)>

[Example B3-1]

(Production of magenta toner B10)

(1) Preparation of magenta conc. B 1

The following materials (total of 3 kg) were mixed and kneaded with a pressurizing kneader under conditions at a setting temperature of 150°C and for 10 minutes, and the mixture was extracted. The mixture was further kneaded with three rolls at a roll temperature of 95°C, was cooled, and was then roughly ground to a size of equal to or less than 10 mm, thereby obtaining a magenta conc. B1 that was a magenta coloring agent dispersion.

| | |
|---|---|
| Toner binding resin 1 | 60.0 parts |
| Pigment (coated pigment) (PRQ-5D) | 40.0 parts |

* Toner binding resin 1: a thermoplastic polyester resin including a terephthalic acid, an isophthalic acid, a trimellitic acid, propylene oxide-added Bisphenol A, and ethylene glycol
Acid value: 10 mgKOH/g, OH value: 43 mgKOH/g, Tg: 58°C, softening temperature Ts: 65°C, true density 1.32 g/cc, molecular weight Mw: 28200, Mn: 2500

(2) Preparation of magenta toner mother particles B 1

Next, the following materials (total of 5 kg) were mixed with a Henschel mixer with a volume of 20 L (3000 rpm, 3 minutes), were melted and kneaded with a two-axis kneading extruder (PCM30) at a supply amount of δ kg/hr and at an ejection temperature of 145°C, were cooled and solidified, were then roughly ground with a hammer mill, were then finely ground with an I-type jet mill (IDS-2 type), and were graded (DS-2 type), thereby obtaining a graded product (magenta toner mother particles B1) with a weight average particle diameter of about 8.3 μm.

| | |
|---|---|
| Toner binding resin 1 | 77.0 parts |
| Magenta conc. B1 | 20.0 parts |
| Charge control agent (a zinc salt compound of 3,5-di-tert-butylsalicylic acid) | 1.0 parts |
| Mold releasing agent (Sazole wax H1N4, melting point: 110°C) | 2.0 parts |

(3) Preparation of magenta toner B1

Next, 100 parts of the graded product obtained as described above, 1.0 parts of hydrophobic silica (NY-50 manufactured by Japan Aerosil), and 0.5 parts of hydrophobic silica (R-974 manufactured by Japan Aerosil) were mixed with a 10 L Henschel mixer (3,000 rpm, 3 minutes) and were subjected to a sieving process (150 mesh), and a magenta toner B1 was thus obtained.

[Example B3-2]

(Production of cyan toner B1)

A cyan conc. B1 that was a cyan coloring agent dispersion, cyan toner mother particles B1 that were graded products with a weight average particle diameter of about 8.2 μm, and a cyan toner B1 were obtained similarly to Example (B3-1) other than that the coated pigment (PRQ-18D) was used instead of the coated pigment (PRQ-5D) in Example (B3-1).

[Example B3-3]

(Production of yellow toner B1)

A yellow conc. B1 that was a yellow coloring agent dispersion, yellow toner mother particles B1 that were graded products with a weight average particle diameter of about 8.6 μm, and a yellow toner B1 were obtained similarly to Example (B3-1) other than that the coated pigment (PRQ-23D) was used instead of the coated pigment (PRQ-5D) in Example (B3-1).

[Example B3-4]

(Production of black toner B1)

A black cone. B1 that was a black coloring agent (carbon black) dispersion, black toner mother particles B1 that were graded products with a weight average particle diameter of about 8. 4μm, and a black toner B1 were obtained similarly to Example (B3-1) other than that the coated pigment (PRQ-45D) was used instead of the coated pigment (PRQ-5D) in Example (B3-1).

[Example B3-5]

(Production of magenta toner B2)

The aqueous pigment dispersion (DPRQ-5) was used to obtain a magenta toner B2 by the following method.

(1) Preparation of dispersion
3 parts of sodium dodecylbenzenesulfonate (Neopelex G-15 manufactured by Kao Corporation) was added to 97 parts of aqueous pigment dispersion (DPRQ-5), and the mixture was stirred with a high-speed mixer at 500 rpm for 1 hour, thereby obtaining a dispersion of a magenta pigment.
(2) Preparation of polymer emulsion
320 parts of ester wax emulsion (SELOSOLR-586 manufactured by Chukyo Yushi Co., Ltd.) as a non-volatile component and 14,000 parts of deionized water were placed in a reaction container, the temperature was raised to 90°C, and 3 parts of sodium dodecylbenzenesulfonate, 2,500 parts of styrene, 650 parts of n-butylacrylate, 170 parts of methacrylic acid, 330 parts of 8% aqueous solution of hydrogen peroxide, and 330 parts of 8% aqueous solution of ascorbic acid were added thereto. The reaction was continued at 90°C for 7 hours, thereby obtaining a polymer emulsion.
(3) Production of magenta toner mother particles B2
16.5 parts of the aforementioned dispersion of the magenta pigment was poured into 150 parts of the aforementioned polymer emulsion, and the mixture was mixed and stirred. 40 parts of 0.5% solution of aluminum sulfate was poured thereto while being stirred. The temperature was raised to 60°C, stirring was continued for 2 hours, and filtration, washing, and drying were performed, thereby obtaining magenta toner mother particles B2 according to the invention.
(4) Preparation of magenta toner B2
Next, 100 parts by mass of the magenta toner mother particles B2 obtained as described above, 1.0 parts by mass of hydrophobic silica (NY-50 manufactured by Japan Aerosil), and 0.5 parts by mass of hydrophobic silica (R-974 manufactured by Japan Aerosil) were mixed with a 10 L Henschel mixer (3000 rpm, 3 minutes) and were subjected to a sieving process (150 mesh), and a magenta toner B2 was thus obtained.

[Example B3-6]

(Production of magenta toner B4)

The crosslinked pigment dispersion (CPRQ-5) was used to obtain a magenta toner B4 by the following method.

(1) Preparation of dispersion
3 parts of sodium dodecylbenzenesulfonate (Neopelex G-15 manufactured by Kao Corporation) was added to 97 parts of crosslinked pigment dispersion (CPRQ-5), and the mixture was stirred with a high-speed mixer at 500 rpm for 1 hour, thereby obtaining a dispersion of a magenta pigment.
(2) Preparation of polymer emulsion
320 parts of ester wax emulsion (SELOSOLR-586 manufactured by Chukyo Yushi Co., Ltd.) as a non-volatile component and 14,000 parts of deionized water were placed in a reaction container, the temperature was raised to 90°C, and 3 parts of sodium dodecylbenzenesulfonate, 2,500 parts of styrene, 650 parts of n-butylacrylate, 170 parts of methacrylic acid, 330 parts of 8% aqueous solution of hydrogen peroxide, and 330 parts of 8% aqueous solution of ascorbic acid were added thereto. The reaction was continued at 90°C for 7 hours, thereby obtaining a polymer emulsion.
(3) Production of magenta toner mother particles B4
16.5 parts of the aforementioned dispersion of the magenta pigment was poured into 150 parts of the aforementioned polymer emulsion, and the mixture was mixed and stirred. 40 parts of 0.5% solution of aluminum sulfate was poured thereto while being stirred. The temperature was raised to 60°C, stirring was continued for 2 hours, and filtration, washing, and drying were performed, thereby obtaining magenta toner mother particles B4 according to the invention.
(4) Preparation of magenta toner B4
Next, 100 parts by mass of the magenta toner mother particles B4 obtained as described above, 1.0 parts by mass of hydrophobic silica (NY-50 manufactured by Japan Aerosil), and 0.5 parts by mass of hydrophobic silica (R-974 manufactured by Japan Aerosil) were mixed with a 10 L Henschel mixer (3000 rpm, 3 minutes) and were subjected to a sieving process (150 mesh, aperture of 0.1 mm), and a magenta toner B4 was thus obtained.

[Comparative Example B3-1]

Production of (magenta toner B3)

A magenta conc. B3 that was a magenta coloring agent dispersion, magenta toner mother particles B3 that were graded products with a weight average particle diameter of about 8.6 μm, and a magenta toner B3 were obtained similarly to Example (B3-1) other than that the coated pigment (PRQ-84D) (that was actually not coated) was used instead of the coated pigment (PRQ-5D) in Example (B3-1) and the composition was changed to 70.4 parts of toner

binding resin 1 and 29.6 parts of coated pigment (PRQ-84D).

<Evaluation of toner (B)>

For the obtained toners, image concentration, a fogging test, appearance evaluation, and a charge amount were evaluated by methods similarly to those in Example (A3-1) described above. Results are shown in Table 19.

[Table 19] (Example (B3-3) is not according to the present invention)

| Table 19 | | Coated pigment | | Image concentration | | Fogging evaluation (%) | | Appearance evaluation | | Charge amount | |
|---|---|---|---|---|---|---|---|---|---|---|---|
| | | (DRY) | Aqueous pigment dispersion or crosslinked pigment dispersion | Initial state | After 3000 copies were printed | Initial state | After 3000 copies were printed | Scattering in device | Image contamination | Graded product | Toner |
| Example (B3-1) | Magenta toner B1 | (PRQ-5D) | | 1.34 | 1.37 | 0.6 | 0.5 | Not present | Not present | -40.1 | -39.2 |
| Example (B3-2) | Cyan toner B1 | (PRQ-18D) | | 1.36 | 1.38 | 0.4 | 0.6 | Not present | Not present | -39.5 | -37.9 |
| Example (B3-3) | Yellow toner B1 | (PRQ-23D) | | 1.29 | 1.31 | 0.5 | 0.4 | Not present | Not present | -38.4 | -37.8 |
| Example (B3-4) | Black toner B1 | (PRQ-45D) | | 1.44 | 1.40 | 0.6 | 0.5 | Not present | Not present | -39.1 | -39.6 |
| Example (B3-5) | Magenta toner B2 | | Aqueous pigment dispersion (DPRQ-5) | 1.39 | 1.40 | 04 | 0.4 | Not present | Not present | -38.3 | -37.9 |
| Example (B3-6) | Magenta toner B4 | | Crosslinked pigment dispersion (CPRQ-5) | 1.40 | 1.38 | 0.3 | 0.4 | Not present | Not present | -39.9 | -39.8 |
| Comparative Example (B3-1) | Magenta toner B3 | (PRQ-84D) | | 1.32 | 1.17 | 0.4 | 1.3 | Present | Present | -35.0 | -30.0 |

On the basis of the results in Table 19, image concentration was high and stable in the image test from the initial state to the printing of 3,000 copies, only a small amount of fogging was observed in a white base part, and no scattering in the device was observed in Examples B3-1 to B3-6. Also, it was possible to recognize that there were no variations in charge amount due to a color difference for both the graded products (toner mother particles) and the toners even in a case in which the pigment was changed and that it was easy to adjust a charge level in designing a process color.

(Paint)

(Evaluation of coated pigments (PA1-1) to (PA1-50))

(Method for producing paint composition (A))

[Example A4-1]

(Paint composition (A4-1))

The aqueous pigment dispersion (DPA-1) and a binder resin were blended to obtain the following composition in terms of the amount of non-volatile component, thereby obtaining a paint composition (A4-1).

Aqueous pigment dispersion (DPA-1): 4.1 parts
Watersol S-751: 60.0 parts (acrylic rein for a baking paint manufactured by DIC)
Cymel 303: 45.0 parts (melamine resin manufactured by Mitsui Cytec Ltd.)

[Examples A4-2 to A4-88 and Comparative examples A4-1 to A4-4]

Paint compositions (A4-2) to (A4-92) were obtained similarly to Example (A4-1) other than that the aqueous pigment dispersion described in Example (A4-1) was changed to the aqueous pigment dispersions or the crosslinked pigment dispersions described in Tables 20 to 21.

(Evaluation of paint composition (A))

The obtained paint compositions were applied to PET films that was subjected to a corona discharge treatment and BT-144 processed steel plates such that the film thicknesses were 37±2 μm with an applicator, were set for 30 minutes, were dried at 60°C for 20 minutes, and were baked at 140°C for 20 minutes, thereby producing test pieces of the respective paint compositions. The test pieces were evaluated as follows. Results are shown in Tables 20 and 21.

(Depth)

Sensory evaluation of depths of color hues in the coated films on the test pieces applied to the PET films based on the following criteria were performed through visual observation of the coated films at a low angle under white light.

S: A satisfactory color depth was achieved, satisfactory
A: A color depth was observed, available range
B: No color depth was observed, not available in practical use

(Glossiness)

For the coated films on the test pieces using the "BT-144 treated steel pates", 60° mirror surface glossiness was measured. Evaluation was performed on the basis of the following criteria. S indicating excellent glossiness means a favorable glossiness.

S: [Glossiness value] > 50 (satisfactory)
B: [Glossiness value] ≤ 50 (not available in practical use)

(Color developing properties)

The test pieces applied to the PET films were visually determined. Evaluation was performed on the basis of the following criteria.

S: Color concentration and concealability were high; satisfactory
A: Color concentration and concealability were in ordinary level; available range
B: Color concentration and concealability were inferior; not available in practical use

(Haze value)

Haze values of the coated films on the test pieces applied to the PET films were measured with a haze meter (manufactured by Nippon Denshoku Industries, Co., Ltd.). Evaluation was performed on the basis of the following criteria.

S: [Haze value] < 60 (satisfactory)
A: 60 ≤ [haze value] < 80 (applied range)
B: [Haze value] ≥ 80 (not available in practical use)

(Flipflop properties)

The test pieces applied to the PET films were visually observed, and evaluation was performed on the basis of the following criteria.

S: Excellent changes in color tone and glittering properties were achieved depending on an angle at which the coated surface was observed; satisfactory

A: Changes in color tone and glittering properties were observed depending on an angle at which the coated surface was observed; available range

B: Only small changes in color tone and glittering properties were observed even if an angle at which the coated surface was observed was changed; not available in practical use

(Particle size distribution stability)

Particle size distribution of the paint compositions was measured using Naonotrac Wave (MicrotracBEL Corporation) by diluting the paint compositions with deionized water (volume average particle diameters). Further, the paint compositions were stored at an incubator at 40°C for 1 week, particle size distribution was then similarly measured, and change rates were obtained. Evaluation criteria were as follows.

S: A rate of change in particle size distribution (D50) before and after storage at 40°C for 1 week was less than ±10% (satisfactory)

A: A rate of change in particle size distribution (D50) before and after storage at 40°C for 1 week was equal to or greater than ±10% and less than ±20% (available range)

B: A rate of change in particle size distribution (D50) before and after storage at 40°C for 1 week was equal to or greater than ±20% (not available in practical use)

[Table 20]

| Table 20 | Prescription | | Evaluation results | | | | | |
|---|---|---|---|---|---|---|---|---|
| | Paint composition | Aqueous pigment dispersion or crosslinked pigment dispersion | Depth | Glossiness | Color developin g properties | Haz e valu e | Flipflop properties | Particle size distributi on stability |
| Exampl e A4-1 | (A4-1) | Aqueous pigment dispersion (DPA1-1) | S | S | S | S | S | A |
| Exampl e A4-2 | (A4-2) | Aqueous pigment dispersion (DPA1-2) | S | S | S | S | S | A |
| Exampl e A4-3 | (A4-3) | Aqueous pigment dispersion (DPA1-3) | S | S | S | S | S | A |
| Exampl e A4-4 | (A4-4) | Aqueous pigment dispersion (DPA1-4) | A | S | S | S | S | A |
| Exampl e A4-5 | (A4-5) | Aqueous pigment dispersion (DPA1-5) | S | S | A | S | S | A |
| Exampl e A4-6 | (A4-6) | Aqueous pigment dispersion (DPA1-6) | S | S | S | A | S | A |
| Exampl e A4-7 | (A4-7) | Aqueous pigment dispersion (DPA1-7) | S | A | S | S | S | A |
| Exampl e A4-8 | (A4-8) | Aqueous pigment dispersion (DPA1-8) | S | S | S | S | S | A |
| Exampl e A4-9 | (A4-9) | Aqueous pigment dispersion (DPA1-9) | S | S | S | S | A | A |
| Exampl eA4-10 | (A4-10) | Aqueous pigment dispersion (DPA1-10) | S | S | S | S | S | A |
| Exampl e A4-11 | (A4-11) | Aqueous pigment dispersion (DPA1-11) | S | S | S | A | S | A |
| Exampl e A4-12 | (A4-12) | Aqueous pigment dispersion (DPA1-12) | S | S | A | S | S | A |
| Exampl e A4-13 | (A4-13) | Aqueous pigment dispersion (DPA1-13) | S | S | S | S | S | A |
| Exampl e A4-14 | (A4-14) | Aqueous pigment dispersion (DPA1-14) | S | A | S | S | S | A |
| Exampl e A4-15 | (A4-15) | Aqueous pigment dispersion (DPA1-15) | S | S | S | S | S | A |
| Exampl e A4-16 | (A4-16) | Aqueous pigment dispersion (DPA1-16) | S | S | S | S | A | A |
| Exampl e A4-17 | (A4-17) | Aqueous pigment dispersion (DPA1-17) | S | A | S | S | S | A |
| Exampl e A4-18 | (A4-18) | Aqueous pigment dispersion (DPA1-18) | S | S | S | S | S | A |
| Exampl e A4-19 | (A4-19) | Aqueous pigment dispersion (DPA1-19) | S | S | S | A | S | A |
| Exampl e A4-20 | (A4-20) | Aqueous pigment dispersion (DPA1-20) | S | S | S | S | S | A |
| Exampl e A4-21 | (A4-21) | Aqueous pigment dispersion (DPA1-21) | S | A | S | S | S | A |
| Exampl e A4-22 | (A4-22) | Aqueous pigment dispersion (DPA 1-22) | S | S | S | S | A | A |
| Exampl e A4-23 | (A4-23) | Aqueous pigment dispersion (DPA1-23) | S | S | S | S | A | A |

(continued)

| Table 20 | Prescription | | Evaluation results | | | | | |
|---|---|---|---|---|---|---|---|---|
| | Paint composition | Aqueous pigment dispersion or crosslinked pigment dispersion | Depth | Glossiness | Color developin g properties | Haz e valu e | Flipflop properties | Particle size distributi on stability |
| Exampl e A4-24 | (A4-24) | Aqueous pigment dispersion (DPA1-24) | S | S | A | S | S | A |
| Exampl e A4-25 | (A4-25) | Aqueous pigment dispersion (DPA1-25) | S | S | S | S | S | A |
| Exampl e A4-26 | (A4-26) | Aqueous pigment dispersion (DPA1-26) | S | S | S | S | S | A |
| Exampl e A4-27 | (A4-27) | Aqueous pigment dispersion (DPA1-27) | S | A | S | S | S | A |
| Exampl e A4-28 | (A4-28) | Aqueous pigment dispersion (DPA1-28) | A | S | S | S | S | A |
| Exampl e A4-29 | (A4-29) | Aqueous pigment dispersion (DPA1-29) | S | S | A | S | S | A |
| Exampl e A4-30 | (A4-30) | Aqueous pigment dispersion (DPA1-30) | S | S | S | A | S | A |
| Exampl e A4-31 | (A4-31) | Aqueous pigment dispersion (DPA1-31) | S | S | S | S | A | A |
| Exampl e A4-32 | (A4-32) | Aqueous pigment dispersion (DPA1-32) | S | S | A | S | S | A |
| Exampl e A4-33 | (A4-33) | Aqueous pigment dispersion (DPA1-33) | A | S | S | S | S | A |
| Exampl e A4-34 | (A4-34) | Aqueous pigment dispersion (DPA 1-34) | S | S | S | S | S | A |
| Exampl e A4-35 | (A4-35) | Aqueous pigment dispersion (DPA1-35) | S | S | S | S | S | A |
| Exampl e A4-36 | (A4-36) | Aqueous pigment dispersion (DPA1-36) | A | S | S | S | S | A |
| Exampl e A4-37 | (A4-37) | Aqueous pigment dispersion (DPA1-37) | S | S | S | S | S | A |
| Exampl e A4-38 | (A4-38) | Aqueous pigment dispersion (DPA1-38) | S | S | S | S | S | A |
| Exampl e A4-39 | (A4-39) | Aqueous pigment dispersion (DPA1-39) | S | S | S | S | S | A |
| Exampl e A4-40 | (A4-40) | Aqueous pigment dispersion (DPA1-40) | S | S | S | S | S | A |
| Exampl e A4-41 | (A4-41) | Aqueous pigment dispersion (DPA1-41) | S | S | S | S | S | A |
| Exampl e A4-42 | (A4-42) | Aqueous pigment dispersion (DPA1-42) | A | A | A | A | A | A |
| Exampl e A4-43 | (A4-43) | Aqueous pigment dispersion (DPA1-43) | A | A | A | A | A | A |
| Exampl e A4-44 | (A4-44) | Aqueous pigment dispersion (DPA1-44) | A | A | A | A | A | A |
| Exampl e A4-45 | (A4-45) | Crosslinked pigment dispersion (CPA1-1) | S | S | S | S | S | S |
| Exampl e A4-46 | (A4-46) | Crosslinked pigment dispersion (CPA1-2) | S | S | S | S | S | S |

(continued)

| Table 20 | Prescription | | Evaluation results | | | | | |
|---|---|---|---|---|---|---|---|---|
| | Paint composition | Aqueous pigment dispersion or crosslinked pigment dispersion | Depth | Glossiness | Color developin g properties | Haz e valu e | Flipflop properties | Particle size distributi on stability |
| Exampl e A4-47 | (A4-47) | Crosslinked pigment dispersion (CPA1-3) | S | S | S | S | S | S |
| Exampl e A4-48 | (A4-48) | Crosslinked pigment dispersion (CPA1-4) | A | S | S | S | S | S |

[Table 21]

| Table 21 | Prescription | | Evaluation results | | | | | |
|---|---|---|---|---|---|---|---|---|
| | Paint composition | Aqueous pigment dispersion or crosslinked pigment dispersion | Depth | Glossiness | Color developing properties | Haze value | Flipflop properties | Particle size distribution stability |
| Example A4-49 | (A4-49) | Crosslinked pigment dispersion (CPA1-5) | S | S | A | S | S | S |
| Example A4-50 | (A4-50) | Crosslinked pigment dispersion (CPA1-6) | S | S | S | A | S | S |
| Example A4-51 | (A4-51) | Crosslinked pigment dispersion (CPA1-7) | S | A | S | S | S | S |
| Example A4-52 | (A4-52) | Crosslinked pigment dispersion (CPA1-8) | S | S | S | S | S | S |
| Example A4-53 | (A4-53) | Crosslinked pigment dispersion (CPA1-9) | S | S | S | S | A | s |
| Example A4-54 | (A4-54) | Crosslinked pigment dispersion (CPA1-10) | S | S | S | S | S | S |
| Example A4-55 | (A4-55) | Crosslinked pigment dispersion (CPA1-11) | S | S | S | A | S | S |
| Example A4-56 | (A4-56) | Crosslinked pigment dispersion (CPA1-12) | S | S | A | S | S | S |
| Example A4-57 | (A4-57) | Crosslinked pigment dispersion (CPA1-13) | S | S | S | S | S | S |
| Example A4-58 | (A4-58) | Crosslinked pigment dispersion (CPA1-14) | S | A | S | S | S | S |

(continued)

| Table 21 | Prescription | | Evaluation results | | | | | |
|---|---|---|---|---|---|---|---|---|
| | Paint composition | Aqueous pigment dispersion or crosslinked pigment dispersion | Depth | Glossiness | Color developing properties | Haze value | Flipflop properties | Particle size distribution stability |
| Exampl e A4-59 | (A4-59) | Crosslinked pigment dispersion (CPA1-15) | S | S | S | S | S | S |
| Exampl e A4-60 | (A4-60) | Crosslinked pigment dispersion (CPA1-16) | S | S | S | S | A | S |
| Exampl e A4-61 | (A4-61) | Crosslinked pigment dispersion (CPA1-17) | S | A | S | S | S | S |
| Exampl e A4-62 | (A4-62) | Crosslinked pigment dispersion (CPA1-18) | S | S | S | S | S | S |
| Exampl e A4-63 | (A4-63) | Crosslinked pigment dispersion (CPA1-19) | S | S | S | A | S | S |
| Exampl e A4-64 | (A4-64) | Crosslinked pigment dispersion (CPA1-20) | S | S | S | S | S | S |
| Exampl e A4-65 | (A4-65) | Crosslinked pigment dispersion (CPA1-21) | S | A | S | S | S | S |
| Exampl e A4-66 | (A4-66) | Crosslinked pigment dispersion (CPA1-22) | S | S | S | S | A | S |
| Exampl e A4-67 | (A4-67) | Crosslinked pigment dispersion (CPA1-23) | S | S | S | S | A | S |
| Exampl e A4-68 | (A4-68) | Crosslinked pigment dispersion (CPA 1-24) | S | S | A | S | S | S |

(continued)

| Table 21 | Prescription | | Evaluation results | | | | | |
|---|---|---|---|---|---|---|---|---|
| | Paint composition | Aqueous pigment dispersion or crosslinked pigment dispersion | Depth | Glossiness | Color developing properties | Haze value | Flipflop properties | Particle size distribution stability |
| Example A4-69 | (A4-69) | Crosslinked pigment dispersion (CPA1-25) | S | S | S | S | S | S |
| Example A4-70 | (A4-70) | Crosslinked pigment dispersion (CPA1-26) | S | S | S | S | S | S |
| Example A4-71 | (A4-71) | Crosslinked pigment dispersion (CPA1-27) | S | A | S | S | S | S |
| Example A4-72 | (A4-72) | Crosslinked pigment dispersion (CPA1-28) | A | S | S | S | S | S |
| Example A4-73 | (A4-73) | Crosslinked pigment dispersion (CPA1-29) | S | S | A | S | S | S |
| Example A4-74 | (A4-74) | Crosslinked pigment dispersion (CPA1-30) | S | S | S | A | S | S |
| Example A4-75 | (A4-75) | Crosslinked pigment dispersion (CPA1-31) | S | S | S | S | A | S |
| Example A4-76 | (A4-76) | Crosslinked pigment dispersion (CPA1-32) | S | S | A | S | S | S |
| Example A4-77 | (A4-77) | Crosslinked pigment dispersion (CPA1-33) | A | S | S | S | S | S |
| Example A4-78 | (A4-78) | Crosslinked pigment dispersion (CPA1-34) | S | S | S | S | S | S |

(continued)

| Table 21 | Prescription | | Evaluation results | | | | | |
|---|---|---|---|---|---|---|---|---|
| | Paint composition | Aqueous pigment dispersion or crosslinked pigment dispersion | Depth | Glossiness | Color developing properties | Haze value | Flipflop properties | Particle size distribution stability |
| Example A4-79 | (A4-79) | Crosslinked pigment dispersion (CPA1-35) | S | S | S | S | S | S |
| Example A4-80 | (A4-80) | Crosslinked pigment dispersion (CPA1-36) | A | S | S | S | S | S |
| Example A4-81 | (A4-81) | Crosslinked pigment dispersion (CPA1-37) | S | S | S | S | S | S |
| Example A4-82 | (A4-82) | Crosslinked pigment dispersion (CPA1-38) | S | S | S | S | S | S |
| Example A4-83 | (A4-83) | Crosslinked pigment dispersion (CPA1-39) | S | S | S | S | S | S |
| Example A4-84 | (A4-84) | Crosslinked pigment dispersion (CPA 1-40) | S | S | S | S | S | S |
| Example A4-85 | (A4-85) | Crosslinked pigment dispersion (CPA1-41) | S | S | S | S | S | S |
| Example A4-86 | (A4-86) | Crosslinked pigment dispersion (CPA 1-42) | A | A | A | A | A | S |
| Example A4-87 | (A4-87) | Crosslinked pigment dispersion (CPA1-43) | A | A | A | A | A | S |
| Example A4-88 | (A4-88) | Crosslinked pigment dispersion (CPA 1-44) | A | A | A | A | A | S |

(continued)

| Table 21 | Prescription | | Evaluation results | | | | | |
|---|---|---|---|---|---|---|---|---|
| | Paint composition | Aqueous pigment dispersion or crosslinked pigment dispersion | Depth | Glossiness | Color developing properties | Haze value | Flipflop properties | Particle size distribution stability |
| Comparative Example A4-1 | (A4-89) | Aqueous pigment dispersion (DPA1-48) | B | B | B | B | A | B |
| Comparative Example A4-2 | (A4-90) | Aqueous pigment dispersion (DPA 1-49) | B | B | B | B | B | B |
| Comparative Example A4-3 | (A4-91) | Crosslinked pigment dispersion (CPA1-48) | B | B | B | B | A | B |
| Comparative Example A4-4 | (A4-92) | Crosslinked pigment dispersion ' (CPA1-49) | B | B | B | B | B | B |

On the basis of the results in Tables 20 and 21, the paint compositions in Examples (A4-1) to (A4-44) exhibited more excellent color depths, glossiness, color developing properties, haze values, and flipflop properties than those in Comparative Examples (A4-1) and (A4-2). Further, in Examples (A4-45) to (A4-88), the paint compositions using the crosslinked pigment dispersions in which the crosslinking agents were further used along with the aqueous pigment dispersions also exhibited further excellent stability of particle size distribution after promotion with time as compared with that in Comparative Examples (A4-3) and (A4-4).

(Evaluation of coated pigments (PRQ-1) to (PRQ-84))

(Method for producing paint composition (B))

[Example B4-1]

(Paint composition (B4-1))

The aqueous pigment dispersion (DPRQ-1) and a binder resin were blended to obtain the following composition in terms of the amount of non-volatile component, thereby obtaining a paint composition (B4-1).

Aqueous pigment dispersion (DPRQ-1): 4.1 parts
Watersol S-751: 60.0 parts (acrylic rein for a baking paint manufactured by DIC)
Cymel 303: 45.0 parts (melamine resin manufactured by Mitsui Cytec Ltd.)

[Examples B4-2 to B4-156 and Comparative Examples B4-1 to B4-4]

Paint compositions (B4-2) to (B4-156) were obtained similarly to Example (B4-1) other than that the aqueous pigment dispersion described in Example (B4-1) was changed to the aqueous pigment dispersions or the crosslinked pigment dispersions described in Tables 22 to 24.

(Evaluation of paint composition (B))

For the obtained paint compositions, color depth, glossiness, color developing properties, haze values, flipflop properties, and particle size distribution stability were evaluated by methods similar to those in Example (A4-1) described above. In addition, results are shown in Tables 22 to 24.

[Table 22] (Examples (B4-22) to (B4-28) are not according to the present invention)

| Table 22 | Prescription | | Evaluation results | | | | | |
|---|---|---|---|---|---|---|---|---|
| | Paint composi tion | Aqueous pigment dispersion or crosslinked pigment dispersion | Depth | Glossiness | Color developin g properties | Haz e valu e | Flipflop properties | Particle size distributi on stability |
| Example (B4-1) | (B4-1) | DPRQ-1 | S | S | S | S | S | A |
| Example (B4-2) | (B4-2) | DPRQ-2 | S | S | S | S | S | A |
| Example (B4-3) | (B4-3) | DPRQ-3 | S | S | S | S | S | A |
| Example (B4-4) | (B4-4) | DPRQ-4 | S | S | S | S | S | A |
| Example (B4-5) | (B4-5) | DPRQ-5 | S | S | S | S | S | A |
| Example (B4-6) | (B4-6) | DPRQ-6 | S | S | S | S | S | A |
| Example (B4-7) | (B4-7) | DPRQ-7 | S | S | S | S | S | A |
| Example (B4-8) | (B4-8) | DPRQ-8 | A | S | A | A | A | A |
| Example (B4-9) | (B4-9) | DPRQ-9 | A | S | A | A | A | A |
| Example (B4-10) | (B4-10) | DPRQ-10 | S | S | S | S | S | A |
| Example (B4-11) | (B4-11) | DPRQ-11 | S | S | S | S | S | A |
| Example (B4-12) | (B4-12) | DPRQ-12 | A | S | A | A | A | A |
| Example (B4-13) | (B4-13) | DPRQ-13 | A | S | A | A | A | A |
| Example (B4-14) | (B4-14) | DPRQ-14 | S | S | S | S | S | A |
| Example (B4-15) | (B4-15) | DPRQ-15 | S | S | S | S | S | A |
| Example (B4-16) | (B4-16) | DPRQ-16 | A | S | A | A | A | A |
| Example (B4-17) | (B4-17) | DPRQ-17 | S | S | S | S | S | A |
| Example (B4-18) | (B4-18) | DPRQ-18 | S | S | S | S | S | A |
| Example (B4-19) | (B4-19) | DPRQ-19 | S | S | S | S | S | A |
| Example (B4-20) | (B4-20) | DPRQ-20 | S | S | S | S | S | A |
| Example (B4-21) | (B4-21) | DPRQ-21 | S | S | S | S | S | A |
| Example (B4-22) | (B4-22) | DPRQ-22 | S | S | S | S | S | A |
| Example (B4-23) | (B4-23) | DPRQ-23 | S | S | S | S | S | A |

(continued)

| Table 22 | Prescription | | Evaluation results | | | | | |
|---|---|---|---|---|---|---|---|---|
| | Paint composi tion | Aqueous pigment dispersion or crosslinked pigment dispersion | Depth | Glossiness | Color developin g properties | Haz e valu e | Flipflop properties | Particle size distributi on stability |
| Example (B4-24) | (B4-24) | DPRQ-24 | S | S | S | S | S | A |
| Example (B4-25) | (B4-25) | DPRQ-25 | S | S | S | S | S | A |
| Example (B4-26) | (B4-26) | DPRQ-26 | S | S | S | S | S | A |
| Example (B4-27) | (B4-27) | DPRQ-27 | S | S | S | S | S | A |
| Example (B4-28) | (B4-28) | DPRQ-28 | S | S | S | S | S | A |
| Example (B4-29) | (B4-29) | DPRQ-29 | S | S | S | S | S | A |
| Example (B4-30) | (B4-30) | DPRQ-30 | S | S | S | S | S | A |
| Example (B4-31) | (B4-31) | DPRQ-31 | S | S | S | S | S | A |
| Example (B4-32) | (B4-32) | DPRQ-32 | S | S | S | S | S | A |
| Example (B4-33) | (B4-33) | DPRQ-33 | S | S | S | S | S | A |
| Example (B4-34) | (B4-34) | DPRQ-34 | S | S | S | S | S | A |
| Example (B4-35) | (B4-35) | DPRQ-35 | S | S | S | S | S | A |
| Example (B4-36) | (B4-36) | DPRQ-36 | S | S | S | S | S | A |
| Example (B4-37) | (B4-37) | DPRQ-37 | S | S | S | S | S | A |
| Example (B4-38) | (B4-38) | DPRQ-38 | S | S | S | S | S | A |
| Example (B4-39) | (B4-39) | DPRQ-39 | S | S | S | S | S | A |
| Example (B4-40) | (B4-40) | DPRQ-40 | S | S | S | S | S | A |
| Example (B4-41) | (B4-41) | DPRQ-41 | S | S | S | S | S | A |
| Example (B4-42) | (B4-42) | DPRQ-42 | S | S | S | S | S | A |
| Example (B4-43) | (B4-43) | DPRQ-43 | S | S | S | S | S | A |
| Example (B4-44) | (B4-44) | DPRQ-44 | S | S | S | S | S | A |
| Example (B4-45) | (B4-45) | DPRQ-45 | S | S | S | S | S | A |
| Example (B4-46) | (B4-46) | DPRQ-46 | S | S | S | S | S | A |

(continued)

| Table 22 | Prescription | | Evaluation results | | | | | |
|---|---|---|---|---|---|---|---|---|
| | Paint composi tion | Aqueous pigment dispersion or crosslinked pigment dispersion | Depth | Glossiness | Color developin g properties | Haz e valu e | Flipflop properties | Particle size distributi on stability |
| Example (B4-47) | (B4-47) | DPRQ-47 | S | S | S | S | S | A |
| Example (B4-48) | (B4-48) | DPRQ-48 | S | S | S | S | S | A |
| Example (B4-49) | (B4-49) | DPRQ-49 | S | S | S | S | S | A |
| Example (B4-50) | (B4-50) | DPRQ-50 | S | S | S | S | S | A |
| Example (B4-51) | (B4-51) | DPRQ-51 | S | S | S | S | S | A |
| Example (B4-52) | (B4-52) | DPRQ-52 | S | S | S | S | S | A |
| Example (B4-53) | (B4-53) | DPRQ-53 | S | S | S | S | S | A |
| Example (B4-54) | (B4-54) | DPRQ-54 | S | S | S | S | S | A |
| Example (B4-55) | (B4-55) | DPRQ-55 | S | S | S | S | S | A |
| Example (B4-56) | (B4-56) | DPRQ-56 | S | S | S | S | S | A |

[Table 23] (Examples (B4-100) to (B4-106) are not according to the present invention)

| Table 23 | Prescription | | Evaluation results | | | | | |
|---|---|---|---|---|---|---|---|---|
| | Paint compositi on | Aqueous pigment dispersion or crosslinked pigment dispersion | Depth | Glossiness | Color developing properties | Haze value | Flipflop properties | Particle size distribution stability |
| Example (B4-57) | (B4-57) | DPRQ-57 | S | S | S | S | S | A |
| Example (B4-58) | (B4-58) | DPRQ-58 | S | S | S | S | S | A |
| Example (B4-59) | (B4-59) | DPRQ-59 | S | S | S | S | S | A |
| Example (B4-60) | (B4-60) | DPRQ-60 | S | S | S | S | S | A |
| Example (B4-6) ) | (B4-61) | DPRQ-61 | S | S | S | S | S | A |
| Example (B4-62) | (B4-62) | DPRQ-62 | S | S | S | S | S | A |
| Example (B4-63) | (B4-63) | DPRQ-63 | S | S | S | S | S | A |
| Example (B4-64) | (B4-64) | DPRQ-64 | S | S | S | S | S | A |
| Example (B4-65) | (B4-65) | DPRQ-65 | S | S | S | S | S | A |
| Example (B4-66) | (B4-66) | DPRQ-66 | S | S | S | S | S | A |
| Example (B4-67) | (B4-67) | DPRQ-67 | S | S | S | S | S | A |
| Example (B4-68) | (B4-68) | DPRQ-68 | S | S | S | S | S | A |
| Example (B4-69) | (B4-69) | DPRQ-69 | S | S | S | S | S | A |
| Example (B4-70) | (B4-70) | DPRQ-70 | S | S | S | S | S | A |
| Example (84-71) | (B4-71) | DPRQ-71 | S | S | S | S | S | A |
| Example (B4-72) | (B4-72) | DPRQ-72 | S | S | S | S | S | A |
| Example (B4-73) | (B4-73) | DPRQ-73 | S | S | S | S | S | A |
| Example (B4-74) | (B4-74) | DPRQ-74 | S | S | S | S | S | A |
| Example (B4-75) | (B4-75) | DPRQ-75 | S | S | S | S | S | A |
| Example (B4-76) | (B4-76) | DPRQ-76 | A | S | A | A | A | A |
| Example (B4-77) | (B4-77) | DPRQ-77 | A | S | A | A | A | A |
| Example (B4-78) | (B4-78) | DPRQ-78 | A | S | A | A | A | A |
| Example (B4-79) | (B4-79) | CPRQ-1 | S | S | S | S | S | S |

(continued)

| Table 23 | Prescription | | Evaluation results | | | | | |
|---|---|---|---|---|---|---|---|---|
| | Paint compositi on | Aqueous pigment dispersion or crosslinked pigment dispersion | Depth | Glossiness | Color developing properties | Haze value | Flipflop properties | Particle size distribution stability |
| Example (B4-80) | (B4-80) | CPRQ-2 | S | S | S | S | S | S |
| Example (B4-81) | (B4-81) | CPRQ-3 | S | S | S | S | S | S |
| Example (B4-82) | (B4-82) | CPRQ-4 | S | S | S | S | S | S |
| Example (B4-83) | (B4-83) | CPRQ-5 | S | S | S | S | S | S |
| Example (B4-84) | (B4-84) | CPRQ-6 | S | S | S | S | S | S |
| Example (B4-85) | (B4-85) | CPRQ-7 | S | S | S | S | S | S |
| Example (B4-86) | (B4-86) | CPRQ-8 | A | S | A | A | A | S |
| Example (B4-87) | (B4-87) | CPRQ-9 | A | S | A | A | A | S |
| Example (B4-88) | (B4-88) | CPRQ-10 | S | S | S | S | S | S |
| Example (B4-89) | (B4-89) | CPRQ-11 | S | S | S | S | S | S |
| Example (B4-90) | (B4-90) | CPRQ-12 | A | S | A | A | A | S |
| Example (B4-91) | (B4-91) | CPRQ-13 | A | S | A | A | A | S |
| Example (B4-92) | (B4-92) | CPRQ-14 | S | S | S | S | S | S |
| Example (B4-93) | (B4-93) | CPRQ-15 | S | S | S | S | S | S |
| Example (B4-94) | (B4-94) | CPRQ-16 | A | S | A | A | A | S |
| Example (B4-95) | (B4-95) | CPRQ-17 | S | S | S | S | S | S |
| Example (B4-96) | (B4-96) | CPRQ-18 | S | S | S | S | S | S |
| Example (B4-97) | (B4-97) | CPRQ-19 | S | S | S | S | S | S |
| Example (B4-98) | (B4-98) | CPRQ-20 | S | S | S | S | S | S |
| Example (B4-99) | (B4-99) | CPRQ-21 | S | S | S | S | S | S |
| Example (B4-100) | (B4-100) | CPRQ-22 | S | S | S | S | S | S |
| Example (B4-101) | (B4-101) | CPRQ-23 | S | S | S | S | S | S |
| Example (B4-102) | (B4-102) | CPRQ-24 | S | S | S | S | S | S |

(continued)

| Table 23 | Prescription | | Evaluation results | | | | | |
|---|---|---|---|---|---|---|---|---|
| | Paint compositi on | Aqueous pigment dispersion or crosslinked pigment dispersion | Depth | Glossiness | Color developing properties | Haze value | Flipflop properties | Particle size distribution stability |
| Example (B4-103) | (B4-103) | CPRQ-25 | S | S | S | S | S | S |
| Example (B4-104) | (B4-104) | CPRQ-26 | S | S | S | S | S | S |
| Example (B4-105) | (B4-105) | CPRQ-27 | S | S | S | S | S | S |
| Example (B4-106) | (B4-106) | CPRQ-28 | S | S | S | S | S | S |

[Table 24]

| Table 24 | Prescription | | Evaluation results | | | | | |
|---|---|---|---|---|---|---|---|---|
| | Paint compositi on | Aqueous pigment dispersion or crosslinked pigment dispersion | Depth | Glossiness | Color developing properties | Haze value | Flipflop properties | Particle size distribution stability |
| Example (B4-107) | (B4-107) | CPRQ-29 | S | S | S | S | S | S |
| Example (B4-108) | (B4-109) | CPRQ-30 | S | S | S | S | S | S |
| Example (B4-109) | (B4-109) | CPRQ-31 | S | S | S | S | S | S |
| Example (B4-110) | (B4-110) | CPRQ-32 | S | S | S | S | S | S |
| Example (B4-111) | (B4-111) | CPRQ-33 | S | S | S | S | S | S |
| Example (B4-112) | (B4-112) | CPRQ-34 | S | S | S | S | S | S |
| Example (B4-113) | (B4-113) | CPRQ-35 | S | S | S | S | S | S |
| Example (B4-114) | (B4-114) | CPRQ-36 | S | S | S | S | S | S |
| Example (B4-115) | (B4-115) | CPRQ-37 | S | S | S | S | S | S |
| Example (B4-116) | (B4-116) | CPRQ-38 | S | S | S | S | S | S |
| Example (B4-117) | (B4-117) | CPRQ-39 | S | S | S | S | S | S |
| Example (B4-118) | (B4-118) | CPRQ-40 | S | S | S | S | S | S |
| Example (B4-119) | (B4-119) | CPRQ-41 | S | S | S | S | S | S |
| Example (B4-120) | (B4-120) | CPRQ-42 | S | S | S | S | S | S |
| Example (B4-121) | (B4-121) | CPRQ-43 | S | S | S | S | S | S |
| Example (B4-122) | (B4-122) | CPRQ-44 | S | S | S | S | S | S |
| Example (B4-123) | (B4-123) | CPRQ-45 | S | S | S | S | S | S |
| Example (B4-124) | (B4-124) | CPRQ-46 | S | S | S | S | S | S |
| Example (B4-125) | (B4-125) | CPRQ-47 | S | S | S | S | S | S |
| Example (B4-126) | (B4-126) | CPRQ-48 | S | S | S | S | S | S |
| Example (B4-127) | (B4-127) | CPRQ-49 | S | S | S | S | S | S |
| Example (B4-128) | (B4-128) | CPRQ-50 | S | S | S | S | S | S |
| Example (B4-129) | (B4-129) | CPRQ-51 | S | S | S | S | S | S |

(continued)

Table 24

| | Prescription | | Evaluation results | | | | | |
|---|---|---|---|---|---|---|---|---|
| | Paint composition | Aqueous pigment dispersion or crosslinked pigment dispersion | Depth | Glossiness | Color developing properties | Haze value | Flipflop properties | Particle size distribution stability |
| Example (B4-130) | (B4-130) | CPRQ-52 | S | S | S | S | S | S |
| Example (B4-131) | (B4-131) | CPRQ-53 | S | S | S | S | S | S |
| Example (B4-132) | (B4-132) | CPRQ-54 | S | S | S | S | S | S |
| Example (B4-133) | (B4-133) | CPRQ-55 | S | S | S | S | S | S |
| Example (B4-134) | (B4-134) | CPRQ-56 | S | S | S | S | S | S |
| Example (B4-135) | (B4-135) | CPRQ-57 | S | S | S | S | S | S |
| Example (B4-136) | (B4-136) | CPRQ-58 | S | S | S | S | S | S |
| Example (B4-137) | (B4-137) | CPRQ-59 | S | S | S | S | S | S |
| Example (B4-138) | (B4-138) | CPRQ-60 | S | S | S | S | S | S |
| Example (B4-139) | (B4-139) | CPRQ-61 | S | S | S | S | S | S |
| Example (B4-140) | (B4-140) | CPRQ-62 | S | S | S | S | S | S |
| Example (B4-141) | (B4-141) | CPRQ-63 | S | S | S | S | S | S |
| Example (B4-142) | (B4-142) | CPRQ-64 | S | S | S | S | S | S |
| Example (B4-143) | (B4-143) | CPRQ-65 | S | S | S | S | S | S |
| Example (B4-144) | (B4-144) | CPRQ-66 | S | S | S | S | S | S |
| Example (B4-145) | (B4-145) | CPRQ-67 | S | S | S | S | S | S |
| Example (B4-146) | (B4-146) | CPRQ-68 | S | S | S | S | S | S |
| Example (B4-147) | (B4-147) | CPRQ-69 | S | S | S | S | S | S |
| Example (B4-148) | (B4-148) | CPRQ-70 | S | S | S | S | S | S |
| Example (B4-149) | (B4-149) | CPRQ-71 | S | S | S | S | S | S |
| Example (B4-150) | (B4-150) | CPRQ-72 | S | S | S | S | S | S |
| Example (B4-151) | (B4-151) | CPRQ-73 | S | S | S | S | S | S |
| Example (B4-152) | (B4-152) | CPRQ-74 | S | S | S | S | S | S |

(continued)

| Table 24 | Prescription | | Evaluation results | | | | | |
|---|---|---|---|---|---|---|---|---|
| | Paint compositi on | Aqueous pigment dispersion or crosslinked pigment dispersion | Depth | Glossiness | Color developing properties | Haze value | Flipflop properties | Particle size distribution stability |
| Example (B4-153) | (B4-153) | CPRQ-75 | S | S | S | S | S | S |
| Example (B4-154) | (B4-154) | CPRQ-76 | A | S | A | A | A | S |
| Example (B4-155) | (B4-155) | CPRQ-77 | A | S | A | A | A | S |
| Example (B4-156) | (B4-156) | CPRQ-78 | A | S | A | A | A | S |
| Comparative Example (B4-1) | (B4-157) | DPRQ-79 | B | B | B | B | A | B |
| Comparative Example (B4-2) | (B4-158) | DPRQ-84 | B | B | B | B | B | B |
| Comparative Example (B4-3) | (B4-159) | CPRQ-79 | B | B | B | B | A | B |
| Comparative Example (B4-4) | (B4-160) | CPRQ-84 | B | B | B | B | B | B |

On the basis of the results in Tables 22 to 24, the paint compositions in Examples (B4-1) to (B4-78) exhibited more excellent depth, glossiness, color developing properties, haze values, and flipflop properties than those in Comparative Examples (B4-1) and (B4-2). Further, the paint compositions using the crosslinked pigment dispersions in which the crosslinking agents were further used with the aqueous pigment dispersions in Examples (B4-79) to (B4-156) exhibited further excellent stability of particle size distribution after promotion with time than those in Comparative Examples (B4-3) and (B4-4).

(Flexographic printing ink)

Prior to production of flexographic printing ink, a polyurethane was produced.

(Production of polyurethane resin (1))

121.8 parts of PTG-3000SN (polytetramethylene glycol manufactured by Hodogaya Chemical Co., Ltd., number of functional groups: 2, hydroxyl group value: 37, number average molecular weight: 3,000), 24.4 parts of PEG#2000 (polyethylene glycol manufactured by NOF Corporation, number of functional groups: 2, hydroxyl group value: 56, number average molecular weight: 2,000), 32.7 parts of 2,2-dimethylolpropyonic acid, and 66.9 parts of isophorondiisocyanate were prepared in a reaction container provided with a thermometer, a stirrer, a reflux condenser, and a nitrogen gas introducing pipe while nitrogen gas was introduced thereto, and a reaction was caused at 90°C for 3 hours. After the mixture was cooled, a mixture solution of 16.6 parts of 25% ammonia water and 73.0 parts of deionized water was slowly dropped to the obtained water-soluble resin, the mixture was neutralized to achieve water solubilization, thereby obtaining an aqueous solution of polyurethane resin (1). An acid value of the obtained polyurethane resin (1) was 55 mgKOH/g, and the weight average molecular weight (Mw) was 36,000.

(Measurement of acid value)

The number of milligrams of potassium hydroxide required to neutralize an acid component contained in 1 g of resin; This value was calculated by performing potential difference titration with a potassium hydroxide-ethanol solution in accordance with the method described in JIS K2501 for the dried polyurethane resin (1).

(Measurement of weight average molecular weight (Mw))

A value in terms of polystyrene obtained by gel permeation chromatography (GPC) measurement; Dried polyurethane resin (1) was dissolved in tetrahydrofuran, a 0.1% of solution was prepared, and a weight average molecular weight was measured with HLC-8320-GPC (column No. M-0053, molecular weight measurement range of about 2 thousands to about 4 millions) manufactured by Tosoh Corporation.

(Evaluation of coated pigments (PA1-1) to (PA1-50))

[Production of flexographic ink (A)]

[Example A5-1]

Potassium hydroxide of an equivalent amount calculated from parts by mass and the acid values of the coated pigment (PAI-1) and the resin contained in the coated pigment such that 15 parts of pigment was contained in the coated pigment per 100 parts of flexographic ink (A5-1), 35.0 parts of polyurethane resin (1), 0.1 parts of nonionic surfactant (Surfynol 104PA manufactured by Air Products Japan K.K.), 2.0 parts of n-propanol, 3.0 parts of polyethylene wax (Aqua Petro DP2502B manufactured by Toyo ADL corporation), 0.2 parts of antifoaming agent (Tegofoamex1488 manufactured by Eonik Industries AG), and deionized water were added, and the mixture was warmed to 70°C and was stirred with a high-speed mixer. Deionized water of an amount corresponding to the volatized amount was added thereto, thereby obtaining 100 parts of flexographic ink (A5-1). Also, parts by mass of the pigment contained in the coated pigment and parts by mass of the resin contained in the coated pigment were calculated by methods similar to those in Example (A1-1), and parts by mass of potassium hydroxide was calculated by a method similar to that in Example (A2-1).

[Examples A5-2 to A5-44 and Comparative Example A15-1]

Flexographic inks (A5-2) to (A5-44) and (A5-89) were obtained by a method similar to that in Example (A5-1) other than that the coated pigment was changed to the coated pigments shown in Table 25.

[Comparative Example A5-2]

5.3 parts of resin (PA-1) and potassium hydroxide of an equivalent amount calculated from the acid value and parts by mass of the resin (PA-1) were added, 30 parts by mass of deionized water was further added, the mixture was then stirred and mixed with a high-speed mixer for 1 hour while being warmed to 70°C, and volatized water was adjusted with deionized water, thereby obtaining an aqueous dispersion of the resin (PA-1). Further, 15 parts of coated pigment (PA1-40) (that was actually not coated), 35.0 parts of polyurethane resin (1), 0.1 parts of nonionic surfactant (Surfynol 104PA manufactured by Air Products Japan K.K.), 2.0 parts of n-propanol, 2.0 parts of polyethylene wax (Aqua Petro DP2502B manufactured by Toyo ADL corporation), 0.2 parts of antifoaming agent (Tegofoamex1488 manufactured by Eonik Industries AG), and deionized water were added thereto, and the mixture was wormed to 70°C and stirred with a high-speed mixer. Deionized water of the amount corresponding to the volatized amount was added thereto, thereby obtaining 100 parts of flexographic ink (A5-90).

[Example A5-45]

The coated pigment (PA1-1) was weighed such that 15 parts of pigment was contained in the coated pigment per 100 parts of flexographic ink (A5-45), potassium hydroxide of an equivalent amount calculated from parts by mass and the acid value of the resin contained in the weighed coated pigment (PAI-1), 35.0 parts of polyurethane resin (1), 2.0 parts of n-propanol, 2.0 parts of polyethylene wax (Aqua Petro DP2502B manufactured by Toyo ADL corporation), and Denacol EX321 (an epoxy crosslinking agent manufactured by Nagase ChemteX Corporation, non-volatile component: 100%, epoxy equivalent amount: 140 g/eq) as a crosslinking agent of an amount such that the molar number of potassium hydroxide described above and the molar number of an epoxy group were equal were added, and the mixture was adjusted with deionized water such that the total amount was 99 parts, was warmed to 70°C, and was stirred with a high-speed mixer for 2 hours. Thereafter, 0.1 parts of nonionic surfactant (Surfynol 104PA manufactured by Air Products Japan K.K.), 0.2 parts of antifoaming agent (Tegofoamex]488 manufactured by Eonik Industries AG), and deionized water was added thereto, thereby obtaining 100 parts of flexographic ink (A5-45). Also, parts by mass of the pigment contained in the coated pigment and parts by mass of the resin contained in the coated pigment were calculated by methods similar to those in Example (A1-1), and parts by mass of potassium hydroxide was calculated by a method similar to that in Example (A2-1).

[Examples A5-46 to A5-88 and Comparative Example A5-3]

Flexographic inks (A5-46) to (A5-88) and (A5-91) were obtained by a method similar to that in Example (A5-45) other than that the coated pigment was changed to the coated pigments shown in Table 25.

[Comparative Example A5-4]

5.3 parts of resin (PA-1) and potassium hydroxide of an equivalent amount calculated from the acid value and parts by mass of the resin (PA-1) were added, 30 parts of deionized water was further added, the mixture was then stirred and mixed with a high-speed mixer for 1 hour while being warmed to 70°C, and volatized water was adjusted with deionized water, thereby obtaining an aqueous dispersion of resin (RQ-5). Further, 15 parts of coated pigment (PAI-49) (that was actually not coated), 35.0 parts of polyurethane resin (1), 2.0 parts of n-propanol, 2.0 parts of polyethylene wax (Aqua Petro DP2502B manufactured by Toyo ADL corporation), and Denacol EX321 (an epoxy crosslinking agent manufactured by Nagase ChemteX Corporation, non-volatile component: 100%, epoxy equivalent amount: 140 g/eq) as a crosslinking agent of an amount such that the molar number of potassium hydroxide described above and the molar number of an epoxy group were equal were added, and the mixture was adjusted with deionized water such that the total amount was 99 parts, was warmed to 70°C, and was stirred with a high-speed mixer for 2 hours. Thereafter, 0.1 parts of nonionic surfactant (Surfynol 104PA manufactured by Air Products Japan K.K.), 0.2 parts of antifoaming agent (Tegofoamex1488 manufactured by Eonik Industries AG), and deionized water were added, thereby obtaining 100 parts of flexographic ink (A5-92).

(Evaluation of flexographic printing ink (A))

For the obtained flexographic printing ink, storage stability of particle size distribution and viscosity with time were evaluated. Further, coarse particles of the flexographic ink were evaluated. Results are shown in Table 25.

(Coarse particle evaluation)

A grind gauge (in accordance with JIS K5600-2-5) was used to check presence of coarse particles in the flexographic ink. Evaluation results were as follows.

S: Less than 60 μm (satisfactory)
A: Equal to or greater than 60 and less than 90 μm (available range)
B: Equal to or greater than 90 μm (not available in practical use)

(Particle size distribution stability)

Particle size distribution of the flexographic printing ink was evaluated similarly to the paint compositions.

(Viscosity stability)

Viscosity of the flexographic ink at 25°C was measured using a Zahn cup (No. 4). Further, the flexographic ink was stored in an incubator at 40°C for 1 week, promotion with time was caused, and rates of change in viscosity before and after elapse of time were obtained. Evaluation criteria were as follows.

S: A rate of change in particle size distribution (D50) before and after storage at 40°C for 1 week was less than ±10% (satisfactory)
A: A rate of change in particle size distribution (D50) before and after storage at 40°C for 1 week was equal to or greater than ±10% and less than 20% (no problems in practical use)
B: A rate of change in particle size distribution (D50) before and after storage at 40°C for 1 week was equal to or greater than ±20% (defective)

[Table 25]

| Table 25 | Flexographic ink | Prescription | Evaluation results | | |
|---|---|---|---|---|---|
| | | Coated pigment | Coarse particles | Particle size distribution stability | Viscosity stability |
| Example A5-1 | (A5-1) | (PA1-1) | S | A | A |
| Example A5-2 | (A5-2) | (PA1-2) | S | A | A |
| Example A5-3 | (A5-3) | (PA1-3) | S | A | A |
| Example A5-4 | (A5-4) | (PA1-4) | S | A | A |
| Example A5-5 | (A5-5) | (PA1-5) | S | A | A |
| Example A5-6 | (A5-6) | (PA1-6) | S | A | A |
| Example A5-7 | (A5-7) | (PA1-7) | S | A | A |
| Example A5-8 | (A5-8) | (PA1-8) | S | A | A |
| Example A5-9 | (A5-9) | (PA1-9) | S | A | A |
| Example A5-10 | (A5-10) | (PA1-10) | S | A | A |
| Example A5-11 | (A5-11) | (PA1-11) | S | A | A |
| Example A5-12 | (A5-12) | (PA1-12) | S | A | A |
| Example A5-13 | (A5-13) | (PA1-13) | S | A | A |
| Example A5-14 | (A5-14) | (PA1-14) | S | A | A |
| Example A5-15 | (A5-15) | (PA1-15) | S | A | A |
| Example A5-16 | (A5-16) | (PA1-16) | S | A | A |
| Example A5-17 | (A5-17) | (PA1-17) | S | A | A |
| Example A5-18 | (A5-18) | (PA1-18) | S | A | A |

(continued)

| Table 25 | Flexographic ink | Prescription | Evaluation results | | |
|---|---|---|---|---|---|
| | | Coated pigment | Coarse particles | Particle size distribution stability | Viscosity stability |
| Example A5-19 | (A5-19) | (PA1-19) | S | A | A |
| Example A5-20 | (A5-20) | (PA1-20) | S | A | A |
| Example A5-21 | (A5-21) | (PA1-21) | S | A | A |
| Example A5-22 | (A5-22) | (PA1-22) | S | A | A |
| Example A5-23 | (A5-23) | (PA1-23) | S | A | A |
| Example A5-24 | (A5-24) | (PA1-24) | S | A | A |
| Example A5-25 | (A5-25) | (PA1-25) | S | A | A |
| Example A5-26 | (A5-26) | (PA1-26) | S | A | A |
| Example A5-27 | (A5-27) | (PA1-27) | S | A | A |
| Example A5-28 | (A5-28) | (PA1-28) | S | A | A |
| Example A5-29 | (A5-29) | (PA1-29) | S | A | A |
| Example A5-30 | (A5-30) | (PA1-30) | S | A | A |
| Example A5-31 | (A5-31) | (PA1-31) | S | A | A |
| Example A5-32 | (A5-32) | (PA1-32) | S | A | A |
| Example A5-33 | (A5-33) | (PA1-33) | S | A | A |
| Example A5-34 | (A5-34) | (PA1-34) | S | A | A |
| Example A5-35 | (A5-35) | (PA1-35) | S | A | A |
| Example A5-36 | (A5-36) | (PA1-36) | S | A | A |
| Example A5-37 | (A5-37) | (PA1-37) | S | A | A |
| Example A5-38 | (A5-38) | (PA1-38) | S | A | A |
| Example A5-39 | (A5-39) | (PA1-39) | S | A | A |
| Example A5-40 | (A5-40) | (PA1-40) | S | A | A |
| Example A5-41 | (A5-41) | (PA1-41) | S | A | A |
| Example A5-42 | (A5-42) | (PA1-42) | S | A | A |
| Example A5-43 | (A5-43) | (PA1-43) | S | A | A |
| Example A5-44 | (A5-44) | (PA1-44) | S | A | A |
| Example A5-45 | (A5-45) | (PA1-1) | S | S | S |
| Example A5-46 | (A5-46) | (PA1-2) | S | S | S |
| Example A5-47 | (A5-47) | (PA1-3) | S | S | S |
| Example A5-48 | (A5-48) | (PA1-4) | S | S | S |
| Example A5-49 | (A5-49) | (PA1-5) | S | S | S |
| Example A5-50 | (A5-50) | (PA1-6) | S | S | S |
| Example A5-51 | (A5-51) | (PA1-7) | S | S | S |
| Example A5-52 | (A5-52) | (PA1-8) | S | S | S |
| Example A5-53 | (A5-53) | (PA1-9) | S | S | s |
| Example A5-54 | (A5-54) | (PA1-10) | S | S | S |

(continued)

| Table 25 | Flexographic ink | Prescription | Evaluation results | | |
|---|---|---|---|---|---|
| | | Coated pigment | Coarse particles | Particle size distribution stability | Viscosity stability |
| Example A5-55 | (A5-55) | (PA1-11) | S | S | S |
| Example A5-56 | (A5-56) | (PA1-12) | S | S | S |
| Example A5-57 | (A5-57) | (PA1-13) | S | S | S |
| Example A5-58 | (A5-58) | (PA1-14) | S | S | S |
| Example A5-59 | (A5-59) | (PA1-15) | S | S | S |
| Example A5-60 | (A5-60) | (PA1-16) | S | S | S |
| Example A5-61 | (A5-61) | (PA1-17) | S | S | S |
| Example A5-62 | (A5-62) | (PA1-18) | S | S | S |
| Example A5-63 | (A5-63) | (PA1-19) | S | S | s |
| Example A5-64 | (A5-64) | (PA1-20) | S | S | S |
| Example A5-65 | (A5-65) | (PA1-21) | S | S | S |
| Example A5-66 | (A5-66) | (PA1-22) | S | S | S |
| Example A5-67 | (A5-67) | (PA1-23) | S | S | S |
| Example A5-68 | (A5-68) | (PA1-24) | S | S | S |
| Example A5-69 | (A5-69) | (PA1-25) | S | S | S |
| Example A5-70 | (A5-70) | (PA1-26) | S | S | S |
| Example A5-71 | (A5-71) | (PA1-27) | S | S | S |
| Example A5-72 | (A5-72) | (PA1-28) | S | S | S |
| Example A5-73 | (A5-73) | (PA1-29) | S | S | S |
| Example A5-74 | (A5-74) | (PA1-30) | S | S | S |
| Example A5-75 | (A5-75) | (PA1-31) | S | S | S |
| Example A5-76 | (A5-76) | (PA1-32) | S | S | S |
| Example A5-77 | (A5-77) | (PA1-33) | S | S | S |
| Example A5-78 | (A5-78) | (PA1-34) | S | S | S |
| Example A5-79 | (A5-79) | (PA1-35) | S | S | S |
| Example A5-80 | (A5-80) | (PA1-36) | S | S | S |
| Example A5-81 | (A5-81) | (PA1-37) | S | S | S |
| Example A5-82 | (A5-82) | (PA1-38) | S | S | S |
| Example A5-83 | (A5-83) | (PA1-39) | S | S | S |
| Example A5-84 | (A5-84) | (PA1-40) | S | S | S |
| Example A5-85 | (A5-85) | (PA1-41) | S | S | S |
| Example A5-86 | (A5-86) | (PA1-42) | S | S | S |
| Example A5-87 | (A5-87) | (PA1-43) | S | S | S |
| Example A5-88 | (A5-88) | (PA1-44) | S | S | s |
| Comparative Example A5-1 | (A5-89) | (PA1-48) | B | B | B |
| Comparative Example A5-2 | (A5-90) | (PA1-49) | B | B | B |

(continued)

| Table 25 | Flexographic ink | Prescription | Evaluation results | | |
|---|---|---|---|---|---|
| | | Coated pigment | Coarse particles | Particle size distribution stability | Viscosity stability |
| Comparative Example A5-3 | (A5-91) | (PA1-48) | B | B | B |
| Comparative Example A5-4 | (A5-92) | (PA1-49) | B | B | B |

The flexographic inks using the coated pigments according to the invention in Examples (A5-) to (A5-44) exhibited excellent dispersibility of coarse particles. Further, the flexographic inks further using crosslinking agent in the coated pigments in Examples (A5-45) to (A5-88) exhibited further excellent stability of particle size distribution and viscosity after the promotion with time.

(Evaluation of coated pigments (PRQ-1) to (PRQ-84))

(Production of flexographic printing ink (B))

[Example B5-1]

Potassium hydroxide of an equivalent amount calculated from parts by mass and acid values of the coated pigment (PRQ-5) and the resin contained in the coated pigment such that 15 parts of pigment was contained in the coated pigment per 100 parts of flexographic ink (B5-1), 35.0 parts of polyurethane resin (1), 0.1 parts of nonionic surfactant (Surfynol 104PA manufactured by Air Products Japan K.K.), 0.2 parts of antifoaming agent (Tegofoamex1488 manufactured by Eonik Industries AG), and deionized water were added, and the mixture was warmed to 70°C and was stirred with a high-speed mixer. Deionized water of the amount corresponding to the volatized amount was added, thereby obtaining 100 parts of flexographic ink (B5-1).

Also, parts by mass of the pigment contained in the coated pigment and parts by mass of the resin contained in the coated pigment were calculated by a method similar to that in Example (A1-1), and parts by mass of potassium hydroxide was calculated by a method similar to that in Example (A2-1).

[Examples B5-2 to B5-6 and Comparative Example B5-1]

Flexographic inks (B5-2) to (B5-6) and (B5-13) were obtained by a method similar to that in Example (B5-1) other than that the coated pigment was changed to the coated pigments shown in Table 26.

[Comparative Example B5-2]

5.3 parts of resin (RQ-5) and potassium hydroxide of an equivalent amount calculated from the acid value and parts by mass of the resin (RQ-5) were added, 30 parts of deionized water was further added, the mixture was then stirred and mixed with a high-speed mixer for 1 hour while being warmed to 70°C, and volatized water was adjusted with deionized water, thereby obtaining an aqueous dispersion of the resin (RQ-5). Further, 15 parts of coated pigment (PRQ-84) (that was actually not coated), 35.0 parts of polyurethane resin, 0.1 parts of nonionic surfactant (Surfynol 104PA manufactured by Air Products Japan K.K.), 2.0 parts of n-propanol, 2.0 parts of polyethylene wax (Aqua Petro DP2502B manufactured by Toyo ADL corporation), 0.2 parts of antifoaming agent (Tegofoamexl488 manufactured by Eonik Industries AG), and deionized water were added, and the mixture was warmed to 70°C and was stirred with a high-speed mixer. Deionized water of the amount corresponding to the volatized amount was added thereto, thereby obtaining 100 parts of flexographic ink (B5-14).

[Example B5-7]

The coated pigment (PRQ-5) was weighed such that 15 parts of pigment was contained in the coated pigment per 100 parts of flexographic ink (B5-7), potassium hydroxide of an equivalent amount calculated from parts by mass and the acid value of the resin contained in the weighed coated pigment (PRQ-5), 35.0 parts of polyurethane resin, 2.0 parts of n-propanol, 2.0 parts of polyethylene wax (Aqua Petro DP2502B manufactured by Toyo ADL corporation), and Denacol EX321 (an epoxy crosslinking agent manufactured by Nagase ChemteX Corporation, non-volatile component: 100%, epoxy equivalent amount: 140 g/eq) as a crosslinking agent of an amount such that the molar number of potassium

hydroxide described above and the molar number of an epoxy group were equal were added, and the mixture was adjusted with deionized water such that the total amount was 99 parts, was warmed to 70°C, and was stirred with a high-speed mixer for 2 hours. Thereafter, 0.1 parts of nonionic surfactant (Surfynol 104PA manufactured by Air Products Japan.), 0.2 parts of antifoaming agent (Tegofoamex1488 manufactured by Eonik Industries AG), and deionized water were added thereto, thereby obtaining 100 parts of flexographic ink (B5-7). In Addition, parts by mass of the pigment contained in the coated pigment and parts by mass of the resin contained in the coated resin were calculated by methods similar to those in Example (A1-1), and parts by mass of potassium hydroxide was calculated by a method similar to that in Example (A2-1).

[Examples B5-8 to B5-12 and Comparative Example B503]

Flexographic inks (B5-8) to (B5-12) and (B5-15) were obtained by a method similarly to that in Example (B5-7) other than that the coated pigment was changed to the coated pigments shown in Table 26.

[Comparative Example B5-4]

5.3 parts of resin (RQ-5) and potassium hydroxide of an equivalent amount calculated from the acid value and parts by mass of the resin 9RQ-5) were added, 30 parts of deionized water was further added, and the mixture was then stirred and mixed with a high-speed mixer while being warmed to 70°C, and volatized water was adjusted with deionized water, thereby obtaining an aqueous dispersion of the resin (RQ-5). Further, 15 parts of coated pigment (PRQ-84) (that was actually not coated), 35.0 parts of polyurethane resin (1), 2.0 parts of n-propanol, 2.0 parts of polyethylene wax (Aqua Petro DP2502B manufactured by Toyo ADL corporation), and Denacol EX321 (an epoxy crosslinking agent manufactured by Nagase ChemteX Corporation, non-volatile component: 100%, epoxy equivalent amount: 140 g/eq) as a crosslinking agent were added, and the mixture was adjusted with deionized water such that the total amount was 99 parts, was warmed to 70°C, and was stirred with a high-speed mixer for 2 hours. Thereafter, 0.1 parts of nonionic surfactant (Surfynol 104PA manufactured by Air Products Japan K.K.), 0.2 parts of antifoaming agent (Tegofoamex1488 manufactured by Eonik Industries AG), and deionized water were added, thereby obtaining 100 parts of flexographic ink (B5-16).

(Evaluation of flexographic printing ink (B))

For the obtained flexographic ink (B), storage stability of particle size distribution and viscosity with time were evaluated. Further, coarse particles in the flexographic ink were evaluated. The evaluation was performed by a method similar to that in Example (A5-1) described above. In addition, results are shown in Table 26.

[Table 26] (Examples (B5-4) and (B5-10) are not according to the present invention)

| Table 26 | Flexographic printing ink | Prescription | Evaluation results | | |
|---|---|---|---|---|---|
| | | Coated Pigment | Coarse particles | Particle size distribution stability | Viscosity stability |
| Example (B5-1) | (B5-1) | (PRQ-5) | S | A | A |
| Example (B5-2) | (B5-2) | (PRQ-18) | S | A | A |
| Example (B5-3) | (B5-3) | (PRQ-20) | S | A | A |
| Example (B5-4) | (B5-4) | (PRQ-22) | S | A | A |
| Example (B5-5) | (B5-5) | (PRQ-45) | S | A | A |
| Example (B5-6) | (B5-6) | (PRQ-46) | S | A | A |
| Example (B5-7) | (B5-7) | (PRQ-5) | S | S | S |
| Example (B5-8) | (B5-8) | (PRQ-18) | S | S | S |
| Example (B5-9) | (B5-9) | (PRQ-20) | S | S | S |
| Example (B5-10) | (B5-10) | (PRQ-22) | S | S | S |
| Example (B5-11) | (B5-11) | (PRQ-45) | S | S | S |
| Example (B5-12) | (B5-12) | (PRQ-46) | S | S | S |

(continued)

| Table 26 | Flexographic printing ink | Prescription | Evaluation results | | |
|---|---|---|---|---|---|
| | | Coated Pigment | Coarse particles | Particle size distribution stability | Viscosity stability |
| Comparative Example (B5-1) | (B5-13) | (PRQ-79) | B | B | B |
| Comparative Example (B5-2) | (B5-14) | (PRQ-84) | B | B | B |
| Comparative Example (B5-3) | (B5-15) | (PRQ-79) | B | B | B |
| Comparative Example (B5-4) | (B5-16) | (PRQ-84) | B | B | B |

On the basis of the results in Table 26, the flexographic inks using the coated pigments according to the invention in Examples (B5-1) to (B5-6) exhibited excellent dispersibility of coarse particles, particle size distribution stability after storage with time, and viscosity stability. Further, the flexographic inks further using the crosslinking agents for the coated pigments exhibited further excellent stability of particle size distribution and viscosity after the promotion with time.

## Claims

**1.** A coated pigment, wherein its surface has been coated with a resin,

wherein the resin is an $\alpha$-olefin copolymer having a side chain and an acid group and an amount of resin coating of the coated pigment is equal to or greater than 10 parts by mass and equal to or less than 50 parts by mass per 100 parts by mass of an uncoated pigment (X),
the coated pigment being **characterized in that**
the side chain is a partial structure selected from a group consisting of structures represented by Formulae (1), (3) and (4) below:

Formula (1) $R_1$ - O -

in Formula (1), $R_1$ represents a $C_3$ to $C_8$ alkyl group,

Formula (3)

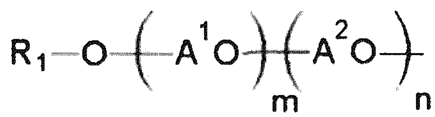

in Formula (3), $R_1$ represents a hydrogen atom, an alkyl group having 1 to 20 carbon atoms, or a phenyl group that may be substituted with an alkyl group having 1 to 9 carbon atoms, $A^1O$ and $A^2O$ each independently represent an alkyleneoxy group having 1 to 6 carbon atoms, m and n represent average number of moles of the alkyleneoxy groups added and are integers of 0 to 100, and m+n is equal to or greater than 1,

Formula (4)

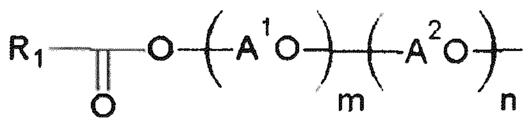

in Formula (4), $R_1$ represents a hydrogen atom, an alkyl group having 1 to 20 carbon atoms, or a phenyl group that may be substituted with an alkyl group having 1 to 9 carbon atoms, $A^1O$ and $A^2O$ each independently represent an alkyleneoxy group having 1 to 6 carbon atoms, m and n represent average number of moles of the alkyleneoxy groups added and are integers of 0 to 100, and m+n is equal to or greater than 1,
wherein the uncoated pigment (X) is an inorganic pigment or an organic pigment that is used as a coloring agent.

2. The coated pigment according to claim 1, wherein the resin contains one or more kinds selected from a group consisting of a styrene-(meth)acrylic resin, a styrene-maleic (anhydride) resin, and a (meth)acrylic resin.

3. An aqueous pigment dispersion being **characterized by** comprising:

   the coated pigment according to claim 1 or 2;
   water; and
   a basic compound.

4. The aqueous pigment dispersion according to claim 3, further comprising: a crosslinking agent.

5. An inkjet printing ink being **characterized by** comprising:

   the coated pigment according to claim 1 or 2; or
   the aqueous pigment dispersion according to claim 3 or 4.

6. A flexographic printing ink being **characterized by** comprising:

   the coated pigment according to claim 1 or 2; or
   the aqueous pigment dispersion according to claim 3 or 4.

7. An electrostatic image developing toner being **characterized by** comprising:

   the coated pigment according to claim 1 or 2; or
   the aqueous pigment dispersion according to claim 3 or 4.

8. A paint composition being **characterized by** comprising:

   the coated pigment according to claim 1 or 2; or
   the aqueous pigment dispersion according to claim 3 or 4.

9. A production method for a coated pigment, comprising:

   mixing a water-soluble organic solvent, a water-soluble inorganic salt, an uncoated pigment (X), an $\alpha$-olefin copolymer having a side chain and an acid group using a kneading machine;
   coating the uncoated pigment (X) with the $\alpha$-olefin copolymer having the side chain and the acid group such that an amount of the $\alpha$-olefin copolymer having the side chain and the acid group is equal to or greater than 10 parts by mass and equal to or less than 50 parts by mass per 100 parts by mass of the uncoated pigment (X),
   the production method being **characterized in that**
   the side chain is a partial structure selected from a group consisting of structures represented by Formulae (1), (3) and (4) below:

   Formula (1) $R_1 - O -$

   in Formula (1), $R_1$ represents a $C_3$ to $C_8$ alkyl group,

   Formula (3)

   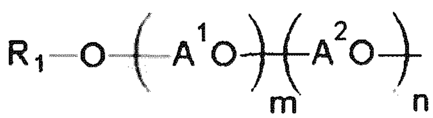

   in Formula (3), $R_1$ represents a hydrogen atom, an alkyl group having 1 to 20 carbon atoms, or a phenyl group that may be substituted with an alkyl group having 1 to 9 carbon atoms, $A^1O$ and $A^2O$ each independently represent an alkyleneoxy group having 1 to 6 carbon atoms, m and n represent average number of moles of the alkyleneoxy groups added and are integers of 0 to 100, and m+n is equal to or greater than 1,

Formula (4)

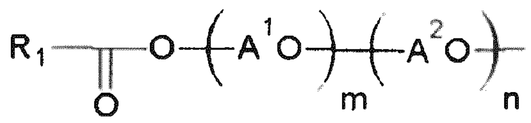

in Formula (4), $R_1$ represents a hydrogen atom, an alkyl group having 1 to 20 carbon atoms, or a phenyl group that may be substituted with an alkyl group having 1 to 9 carbon atoms, $A^1O$ and $A^2O$ each independently represent an alkyleneoxy group having 1 to 6 carbon atoms, m and n represent average number of moles of the alkyleneoxy groups added and are integers of 0 to 100, and m+n is equal to or greater than 1,
wherein the uncoated pigment (X) is an inorganic pigment or an organic pigment that is used as a coloring agent; and
removing the water-soluble inorganic salt and the water-soluble organic solvent.

**10.** A production method for an aqueous pigment dispersion, comprising:
successively performing the following process:

process 1: a process of kneading a mixture containing an α-olefin copolymer having a side chain and an acid group, an uncoated pigment (X), a water-soluble inorganic salt, and a water-soluble organic solvent, and coating the uncoated pigment (X) with the α-olefin copolymer having the side chain and the acid group such that an amount of the α-olefin copolymer having the side chain and the acid group is equal to or greater than 10 parts by mass and equal to or less than 50 parts by mass per 100 parts by mass of the uncoated pigment (X),
the production method being **characterized in that**
the side chain is a partial structure selected from a group consisting of structures represented by Formulae (1), (3) and (4) below:

Formula (1) $R_1$ - O -

in Formula (1), $R_1$ represents a $C_3$ to $C_8$ alkyl group,

Formula (3)

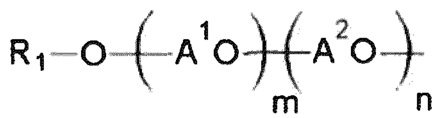

in Formula (3), $R_1$ represents a hydrogen atom, an alkyl group having 1 to 20 carbon atoms, or a phenyl group that may be substituted with an alkyl group having 1 to 9 carbon atoms, $A^1O$ and $A^2O$ each independently represent an alkyleneoxy group having 1 to 6 carbon atoms, m and n represent average number of moles of the alkyleneoxy groups added and are integers of 0 to 100, and m+n is equal to or greater than 1,

Formula (4)

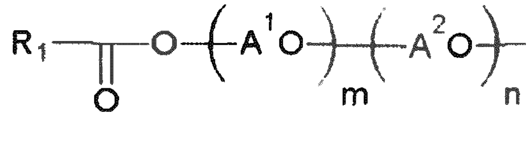

in Formula (4), $R_1$ represents a hydrogen atom, an alkyl group having 1 to 20 carbon atoms, or a phenyl group that may be substituted with an alkyl group having 1 to 9 carbon atoms, $A^1O$ and $A^2O$ each independently represent an alkyleneoxy group having 1 to 6 carbon atoms, m and n represent average number of moles of the alkyleneoxy groups added and are integers of 0 to 100, and m+n is equal to or greater than 1,
wherein the uncoated pigment (X) is an inorganic pigment or an organic pigment that is used as a coloring agent;
process 2: a process of removing the water-soluble inorganic salt and the water-soluble organic solvent;
process 3: a process of adding a basic compound to neutralize the acid group;
process 4: a process of adding a crosslinking agent to cause a reaction between the acid group and the crosslinking agent.

## Patentansprüche

1. Beschichtetes Pigment, wobei dessen Oberfläche mit einem Harz beschichtet wurde, wobei das Harz ein α-Olefin-Copolymer mit einer Seitenkette und einer Säuregruppe ist und eine Menge der Harzbeschichtung des beschichteten Pigments gleich oder größer als 10 Masseteile und gleich oder kleiner als 50 Masseteile pro 100 Masseteile eines unbeschichteten Pigments (X) ist,

   wobei das beschichtete Pigment **dadurch gekennzeichnet ist, dass** die Seitenkette eine Teilstruktur ist, ausgewählt aus einer Gruppe bestehend aus Strukturen, die durch die nachstehenden Formeln (1), (3) und (4) dargestellt werden:

   Formel (1) $R_1$ - O -

   in der Formel (1) stellt $R_1$ eine $C_3$- bis $C_8$-Alkylgruppe dar,

   Formel (3)

   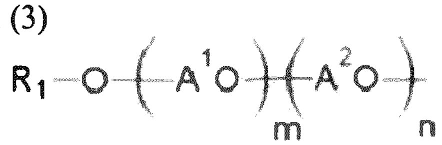

   in der Formel (3) stellt $R_1$ ein Wasserstoffatom, eine Alkylgruppe mit 1 bis 20 Kohlenstoffatomen oder eine Phenylgruppe dar, die mit einer Alkylgruppe mit 1 bis 9 Kohlenstoffatomen substituiert sein kann, $A^1O$ und $A^2O$ stellen jeweils unabhängig voneinander eine Alkylenoxygruppe mit 1 bis 6 Kohlenstoffatomen dar, m und n stellen die durchschnittliche Anzahl von Molen der hinzugefügten Alkylenoxygruppen dar und sind ganze Zahlen von 0 bis 100, und m+n gleich oder größer als 1 ist,

   Formel (4)

   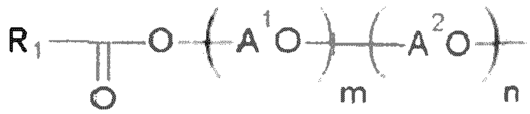

   wobei in der Formel (4) $R_1$ ein Wasserstoffatom, eine Alkylgruppe mit 1 bis 20 Kohlenstoffatomen oder eine Phenylgruppe, die mit einer Alkylgruppe mit 1 bis 9 Kohlenstoffatomen substituiert sein kann, darstellt, $A^1O$ und $A^2O$ jeweils unabhängig voneinander eine Alkylenoxygruppe mit 1 bis 6 Kohlenstoffatomen darstellen, m und n die durchschnittliche Molzahl der hinzugefügten Alkylenoxygruppen darstellen und ganze Zahlen von 0 bis 100 sind, und m+n gleich oder größer als 1 ist,
   wobei das unbeschichtete Pigment (X) ein anorganisches Pigment oder ein organisches Pigment ist, das als ein Färbemittel verwendet wird.

2. Beschichtetes Pigment gemäß Anspruch 1, wobei das Harz eine oder mehrere Arten enthält, ausgewählt aus einer Gruppe bestehend aus einem Styrol-(Meth)acrylharz, einem Styrol-Maleinsäure(anhydrid)harz und einem (Meth)acrylharz.

3. Wässerige Pigmentdispersion, **dadurch gekennzeichnet, dass** sie umfasst:

   das beschichtete Pigment gemäß Anspruch 1 oder 2;
   Wasser; und
   eine basische Verbindung.

4. Wässerige Pigmentdispersion gemäß Anspruch 3, ferner umfassend:
   ein Vernetzungsmittel.

5. Tintenstrahldrucktinte, **dadurch gekennzeichnet, dass** sie umfasst:

das beschichtete Pigment gemäß Anspruch 1 oder 2; oder
die wässerige Pigmentdispersion gemäß Anspruch 3 oder 4.

**6.** Flexodrucktinte, **dadurch gekennzeichnet, dass** sie umfasst:

das beschichtete Pigment gemäß Anspruch 1 oder 2; oder
die wässerige Pigmentdispersion gemäß Anspruch 3 oder 4.

**7.** Elektrostatischer Bildentwicklungstoner, **dadurch gekennzeichnet, dass** er umfasst:

das beschichtete Pigment gemäß Anspruch 1 oder 2; oder
die wässerige Pigmentdispersion gemäß Anspruch 3 oder 4.

**8.** Farbzusammensetzung, **dadurch gekennzeichnet, dass** sie umfasst:

das beschichtete Pigment gemäß Anspruch 1 oder 2; oder
die wässerige Pigmentdispersion gemäß Anspruch 3 oder 4.

**9.** Herstellungsverfahren für ein beschichtetes Pigment, umfassend:

Mischen eines wasserlöslichen organischen Lösungsmittels, eines wasserlöslichen anorganischen Salzes, eines unbeschichteten Pigments (X), eines $\alpha$-Olefin-Copolymers mit einer Seitenkette und einer Säuregruppe unter Verwendung einer Knetmaschine;
Beschichten des unbeschichteten Pigments (X) mit dem $\alpha$-Olefin-Copolymer mit der Seitenkette und der Säuregruppe, so dass eine Menge des $\alpha$-Olefin-Copolymers mit der Seitenkette und der Säuregruppe gleich oder größer als 10 Massenteile und gleich oder kleiner als 50 Massenteile pro 100 Massenteile des unbeschichteten Pigments (X) ist,
wobei das Herstellungsverfahren **dadurch gekennzeichnet ist, dass**
die Seitenkette eine Teilstruktur ist, die ausgewählt ist aus einer Gruppe bestehend aus Strukturen, die durch die nachstehenden Formeln (1), (3) und (4) dargestellt werden:

Formel (1) $R_t$ - O -

in der Formel (1) stellt $R^1$ eine $C_3$- bis $C_8$-Alkylgruppe dar,

Formel (3)

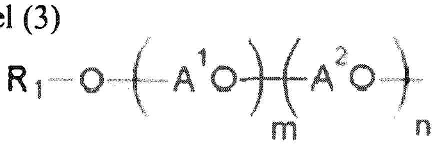

in der Formel (3) stellt $R^1$ ein Wasserstoffatom, eine Alkylgruppe mit 1 bis 20 Kohlenstoffatomen oder eine Phenylgruppe dar, die mit einer Alkylgruppe mit 1 bis 9 Kohlenstoffatomen substituiert sein kann, $A^1O$ und $A^2O$ stellen jeweils unabhängig voneinander eine Alkylenoxygruppe mit 1 bis 6 Kohlenstoffatomen dar, m und n stellen die durchschnittliche Anzahl von Molen der hinzugefügten Alkylenoxygruppen dar und sind ganze Zahlen von 0 bis 100, und m+n gleich oder größer als 1 ist,

Formel (4)

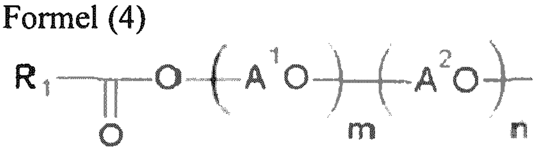

wobei in der Formel (4) $R^1$ ein Wasserstoffatom, eine Alkylgruppe mit 1 bis 20 Kohlenstoffatomen oder eine Phenylgruppe darstellt, die mit einer Alkylgruppe mit 1 bis 9 Kohlenstoffatomen substituiert sein kann, $A^1O$ und $A^2O$ jeweils unabhängig voneinander eine Alkylenoxygruppe mit 1 bis 6 Kohlenstoffatomen darstellen, m und n die durchschnittliche Molzahl der hinzugefügten Alkylenoxygruppen darstellen und ganze Zahlen von 0 bis 100 sind und m+n gleich oder größer als 1 ist,

wobei das unbeschichtete Pigment (X) ein anorganisches Pigment oder ein organisches Pigment ist, das als ein Färbemittel verwendet wird; und

Entfernen des wasserlöslichen anorganischen Salzes und des wasserlöslichen organischen Lösungsmittels.

**10.** Herstellungsverfahren für eine wässerige Pigmentdispersion, umfassend:
sukzessives Durchführen der folgenden Prozesse:

Prozess 1: Prozess zum Kneten einer Mischung, die ein $\alpha$-Olefin-Copolymer mit einer Seitenkette und einer Säuregruppe, ein unbeschichtetes Pigment (X), ein wasserlösliches anorganisches Salz und ein wasserlösliches organisches Lösungsmittel enthält, und Beschichten des unbeschichteten Pigments (X) mit dem $\alpha$-Olefin-Copolymer mit der Seitenkette und der Säuregruppe, so dass eine Menge des $\alpha$-Olefin-Copolymers mit der Seitenkette und der Säuregruppe gleich oder größer als 10 Massenteile und gleich oder kleiner als 50 Massenteile pro 100 Massenteile des unbeschichteten Pigments (X) ist,

wobei das Herstellungsverfahren **dadurch gekennzeichnet ist, dass**

die Seitenkette eine Teilstruktur ist, ausgewählt aus einer Gruppe bestehend aus Strukturen, die durch die nachstehenden Formeln (1), (3) und (4) dargestellt werden:

Formel (1) $R_1$ - O -

in der Formel (1) stellt $R^1$ eine $C_3$- bis $C_8$-Alkylgruppe dar,

Formel (3)

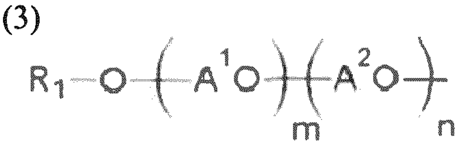

in der Formel (3) stellt $R^1$ ein Wasserstoffatom, eine Alkylgruppe mit 1 bis 20 Kohlenstoffatomen oder eine Phenylgruppe dar, die mit einer Alkylgruppe mit 1 bis 9 Kohlenstoffatomen substituiert sein kann, $A^1O$ und $A^2O$ stellen jeweils unabhängig voneinander eine Alkylenoxygruppe mit 1 bis 6 Kohlenstoffatomen dar, m und n stellen die durchschnittliche Anzahl von Molen der hinzugefügten Alkylenoxygruppen dar und sind ganze Zahlen von 0 bis 100, und m+n gleich oder größer als 1 ist,

Formel (4)

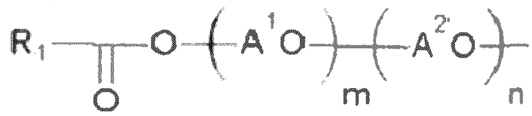

wobei in der Formel (4) $R^1$ ein Wasserstoffatom, eine Alkylgruppe mit 1 bis 20 Kohlenstoffatomen oder eine Phenylgruppe darstellt, die mit einer Alkylgruppe mit 1 bis 9 Kohlenstoffatomen substituiert sein kann, $A^1O$ und $A^2O$ jeweils unabhängig voneinander eine Alkylenoxygruppe mit 1 bis 6 Kohlenstoffatomen darstellen, m und n die durchschnittliche Molzahl der hinzugefügten Alkylenoxygruppen darstellen und ganze Zahlen von 0 bis 100 sind und m+n gleich oder größer als 1 ist,

wobei das unbeschichtete Pigment (X) ein anorganisches Pigment oder ein organisches Pigment ist, das als ein Färbemittel verwendet wird;

Prozess 2: ein Prozess zur Entfernung des wasserlöslichen anorganischen Salzes und des wasserlöslichen organischen Lösungsmittels;

Prozess 3: ein Prozess zur Zugabe einer basischen Verbindung zur Neutralisierung der Säuregruppe;

Prozess 4: ein Prozess zur Zugabe eines Vernetzungsmittels, um eine Reaktion zwischen der Säuregruppe und dem Vernetzungsmittel zu bewirken.

## Revendications

**1.** Pigment enrobé, dans lequel sa surface a été enrobée d'une résine,

dans lequel la résine est un copolymère $\alpha$-oléfinique ayant une chaîne latérale et un groupe acide et une quantité

d'enrobage de résine du pigment enrobé est égale ou supérieure à 10 parties en masse et égale à ou inférieure à 50 parties en masse pour 100 parties en masse d'un pigment non enrobé (X),
le pigment enrobé étant **caractérisé en ce que**
la chaîne latérale est une structure partielle choisie dans un groupe constitué par les structures représentées par les formules (1), (3) et (4) ci-dessous :

Formule (1) **$R_1$ - O -**

dans la formule (1), $R_1$ représente un groupe alkyle en $C_3$ à Ca,

Formule (3)

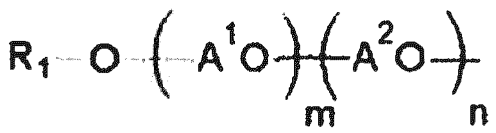

dans la formule (3), $R_1$ représente un atome d'hydrogène, un groupe alkyle ayant de 1 à 20 atomes de carbone ou un groupe phényle qui peut être substitué par un groupe alkyle ayant de 1 à 9 atomes de carbone, $A^1O$ et $A^2O$ représentent chacun indépendamment un groupe alkylèneoxy ayant de 1 à 6 atomes de carbone, m et n représentent un nombre moyen de moles des groupes alkylèneoxy ajoutés et sont des nombres entiers de 0 à 100, et n+m est égale ou supérieure à 1,

Formule (4)

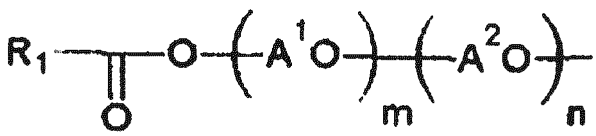

dans la formule (4), $R_1$ représente un atome d'hydrogène, un groupe alkyle ayant de 1 à 20 atomes de carbone ou un groupe phényle qui peut être substitué par un groupe alkyle ayant de 1 à 9 atomes de carbone, $A^1O$ et $A^2O$ représentent chacun indépendamment un groupe alkylèneoxy ayant de 1 à 6 atomes de carbone, m et n représentent un nombre moyen de moles des groupes alkylèneoxy ajoutés et sont des nombres entiers de 0 à 100, et n+m est égale ou supérieure à 1,
dans lequel le pigment enrobé (X) est un pigment inorganique ou un pigment organique qui est utilisé en tant qu'agent de coloration.

**2.** Pigment enrobé selon la revendication 1, dans lequel la résine contient un ou plusieurs types choisis dans un groupe constitué par une résine styrène-(méth)acrylique, une résine styrène-(anhydride) maléique et une résine (méth)acrylique.

**3.** Dispersion aqueuse de pigments qui est **caractérisée en ce qu'**elle comprend :

le pigment enrobé selon la revendication 1 ou 2 ;
de l'eau ; et
un composé basique.

**4.** Dispersion aqueuse de pigments selon la revendication 3, comprenant en outre :
un agent de réticulation.

**5.** Encre d'impression à jet d'encre qui est **caractérisée en ce qu'**elle comprend :

le pigment enrobé selon la revendication 1 ou 2 ; ou

la dispersion aqueuse de pigments selon la revendication 3 ou 4.

**6.** Encre d'impression flexographique qui est **caractérisée en ce qu'**elle comprend :

le pigment enrobé selon la revendication 1 ou 2 ; ou
la dispersion aqueuse de pigments selon la revendication 3 ou 4.

**7.** Toner de développement d'image électrostatique qui est **caractérisé en ce qu'**il comprend :

le pigment enrobé selon la revendication 1 ou 2 ; ou
la dispersion aqueuse de pigments selon la revendication 3 ou 4.

**8.** Composition de peinture qui est **caractérisée en ce qu'**elle comprend :

le pigment enrobé selon la revendication 1 ou 2 ; ou
la dispersion aqueuse de pigments selon la revendication 3 ou 4.

**9.** Procédé de production d'un pigment enrobé, comprenant :

le mélange d'un solvant organique soluble dans l'eau, d'un sel inorganique soluble dans l'eau, d'un pigment non enrobé (X), d'un copolymère $\alpha$-oléfinique ayant une chaîne latérale et un groupe acide à l'aide d'un malaxeur ;
l'enrobage du pigment non enrobé (X) avec le copolymère $\alpha$-oléfinique ayant la chaîne latérale et le groupe acide de sorte qu'une quantité du copolymère $\alpha$-oléfinique ayant la chaîne latérale et le groupe acide est égale ou supérieure à 10 parties en masse et égale ou inférieure à 50 parties en masse pour 100 parties en masse du pigment non enrobé (X),
le procédé de production étant **caractérisé en ce que**
la chaîne latérale est une structure partielle choisie dans un groupe constitué par les structures représentées par les formules (1), (3) et (4) ci-dessous :

Formule (1) $R_1$ - O -

dans la formule (1), $R_1$ représente un groupe alkyle en $C_3$ à $C_8$,

Formule (3)

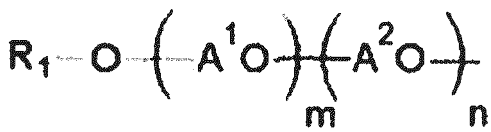

dans la formule (3), $R_1$ représente un atome d'hydrogène, un groupe alkyle ayant de 1 à 20 atomes de carbone ou un groupe phényle qui peut être substitué par un groupe alkyle ayant de 1 à 9 atomes de carbone, $A^1O$ et $A^2O$ représentent chacun indépendamment un groupe alkylèneoxy ayant de 1 à 6 atomes de carbone, m et n représentent un nombre moyen de moles des groupes alkylèneoxy ajoutés et sont des nombres entiers de 0 à 100, et n+m est égale ou supérieure à 1,

Formule (4)

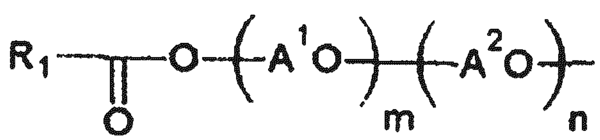

dans la formule (4), $R_1$ représente un atome d'hydrogène, un groupe alkyle ayant de 1 à 20 atomes de carbone ou un groupe phényle qui peut être substitué par un groupe alkyle ayant de 1 à 9 atomes de carbone, $A^1O$ et $A^2O$ représentent chacun indépendamment un groupe alkylèneoxy ayant de 1 à 6 atomes de carbone, m et n représentent un nombre moyen de moles des groupes alkylèneoxy ajoutés et sont des nombres entiers de 0 à 100, et n+m est égale ou supérieure à 1,
dans lequel le pigment non enrobé (X) est un pigment inorganique ou un pigment organique qui est utilisé en tant qu'agent de coloration ; et
l'élimination du sel inorganique soluble dans l'eau et du solvant organique soluble dans l'eau.

**10.** Procédé de production d'une dispersion aqueuse de pigments comprenant :
la réalisation de manière successive du procédé suivant :

procédé 1 : un procédé de malaxage d'un mélange contenant un copolymère α-oléfinique ayant une chaîne latérale et un groupe acide, d'un pigment non enrobé (X), d'un sel inorganique soluble dans l'eau et d'un solvant organique soluble dans l'eau, et l'enrobage du pigment non enrobé (X) avec le copolymère α-oléfinique ayant la chaîne latérale et le groupe acide de sorte qu'une quantité du copolymère α-oléfinique ayant la chaîne latérale et le groupe acide est égale ou supérieure à à 10 parties en masse et égale ou inférieure à 50 parties en masse pour 100 parties en masse du pigment non enrobé (X),
le procédé de production étant **caractérisé en ce que**
la chaîne latérale est une structure partielle choisie dans un groupe constitué par les structures représentées par les formules (1), (3) et (4) ci-dessous :

Formule (1) $R_1$ - O -

dans la formule (1), $R_1$ représente un groupe alkyle en $C_3$ à $C_8$,

Formule (3)

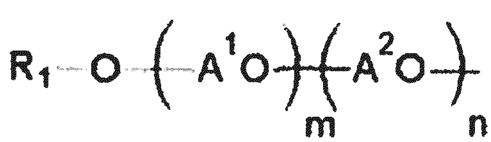

dans la formule (3), $R_1$ représente un atome d'hydrogène, un groupe alkyle ayant de 1 à 20 atomes de carbone ou un groupe phényle qui peut être substitué par un groupe alkyle ayant de 1 à 9 atomes de carbone, $A^1O$ et $A^2O$ représentent chacun indépendamment un groupe alkylèneoxy ayant de 1 à 6 atomes de carbone, m et n représentent un nombre moyen de moles des groupes alkylèneoxy ajoutés et sont des nombres entiers de 0 à 100, et n+m est égale ou supérieure à 1,

Formule (4)

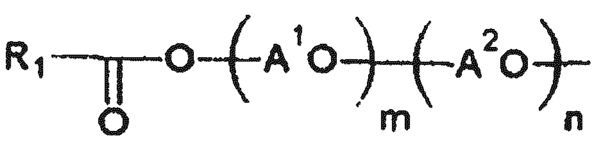

dans la formule (4), $R_1$ représente un atome d'hydrogène, un groupe alkyle ayant de 1 à 20 atomes de carbone ou un groupe phényle qui peut être substitué par un groupe alkyle ayant de 1 à 9 atomes de carbone, $A^1O$ et $A^2O$ représentent chacun indépendamment un groupe alkylèneoxy ayant de 1 à 6 atomes de carbone, m et n représentent un nombre moyen de moles des groupes alkylèneoxy ajoutés et sont des nombres entiers de 0 à 100, et n+m est égale ou supérieure à 1,
dans lequel le pigment non enrobé (X) est un pigment inorganique ou un pigment organique qui est utilisé en tant qu'agent de coloration ;
procédé 2 : un procédé d'élimination du sel inorganique soluble dans l'eau et du solvant organique soluble dans

l’eau ;
procédé 3 : un procédé d’ajout d’un composé basique pour neutraliser le groupe acide ;
procédé 4 : un procédé d’ajout d’un agent de réticulation pour provoquer une réaction entre le groupe acide et l’agent de réticulation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004091520 A
- JP 2007191556 A
- US 20020098435 A1
- US 20050014866 A1
- US 6051060 A
- JP H0543704 A
- US 8757786 B2
- JP S55165961 A
- JP S63179972 A